# EUROPEAN PATENT APPLICATION

(11) **EP 4 814 042 A1**
(43) Date of publication of application: **30.09.2026**
(21) Application number: 24894125.4
(22) Date of filing: 18.11.2024
(51) Int. Cl.: C08J 5/18, B29C 55/12, B32B 27/32

(54) **BIAXIALLY STRETCHED POLYETHYLENE FILM, PACKAGING MATERIAL, AND PACKAGE**

(30) Priority: 24.11.2023 JP 2023198966; 24.11.2023 JP 2023198975; 24.11.2023 JP 2023198983; 24.11.2023 JP 2023199019
(71) Applicant: RM TOHCELLO CO., LTD., Tokyo 101-8485 (JP)
(72) Inventor: TAMURA, Takuya, Koga-shi, Ibaraki 306-0213 (JP); SHINOZAKI, Kouki, Koga-shi, Ibaraki 306-0213 (JP); HAKAMATA, Tomoyoshi, Koga-shi, Ibaraki 306-0213 (JP)
(74) Representative: Hoffmann Eitle
(86) International application number: PCT/JP2024/040886
(87) International publication number: WO 2025/110134

(57) **Abstract**

A biaxially stretched polyethylene film (100) comprising a biaxially stretched film layer (101) containing an ethylene-based polymer (A), in which a storage modulus E'_{MD} at 100°C in an MD direction, which is measured under conditions of a frequency of 1 Hz, a heating rate of 5°C/min, a strain of 0.1%, a tensile mode, a distance between chucks of 20 mm, and a sample width of 5 mm using dynamic viscoelasticity measurement (DMA), is 50 MPa or more, and a storage modulus E'_{TD} at 100°C in a TD direction is 100 MPa or more.

## Description

### TECHNICAL FIELD

The present invention relates to a biaxially stretched polyethylene film, a packaging material, and a packaged article.

### BACKGROUND ART

The biaxially stretched polyethylene film is used, for example, as a packaging film.

Patent Document 1 discloses a polyethylene laminate for a packaging material, including at least a stretched polyethylene film, an adhesive layer, and a heat-sealable polyethylene layer, in which the adhesive layer contains a solvent-free adhesive.

Patent Document 1 discloses that it is possible to provide a polyethylene laminate for a packaging material, which can significantly reduce the load on the environment and has high printability and strength.

Patent Document 2 discloses a stretched polyethylene film, which is formed of a polyethylene-based resin composition containing polyethylene and a petroleum resin, is a uniaxially stretched film or a biaxially stretched film, and has a surface draw ratio of a stretching ratio of 3 times or more. Patent Document 2 discloses that it is possible to provide a stretched polyethylene film, which does not break even at a high stretching ratio and has high strength.

### RELATED DOCUMENT

### PATENT DOCUMENT

Patent Document 1: Japanese Unexamined Patent Application, First Publication No. 2022-079510
Patent Document 2: Japanese Unexamined Patent Application, First Publication No. 2023-031061

### SUMMARY OF THE INVENTION

### TECHNICAL PROBLEM

A first embodiment of the present invention provides a biaxially stretched polyethylene film having improved thermal dimensional stability.

In addition, a second embodiment of the present invention provides a biaxially stretched polyethylene film having improved heat fusion resistance.

In addition, a third embodiment of the present invention provides a biaxially stretched polyethylene film having improved thermal dimensional stability.

In addition, a fourth embodiment of the present invention provides a biaxially stretched polyethylene film having improved performance balance between film formability and thermal dimensional stability.

### SOLUTION TO PROBLEM

The present inventors have conducted intensive studies to achieve the object of the first embodiment of the present invention. As a result, it was found that thermal dimensional stability is improved by setting a storage modulus E'_{MD} in the MD direction and a storage modulus E'_{TD} in the TD direction, which are obtained by dynamic viscoelasticity measurement, to be in predetermined ranges.

That is, according to the first embodiment of the present invention, a biaxially stretched polyethylene film, a packaging material, and a packaged article, which are shown below, are provided.

[1A] A biaxially stretched polyethylene film comprising a biaxially stretched film layer containing an ethylene-based polymer (A),
   wherein a storage modulus E'_{MD} at 100°C in an MD direction, which is measured under conditions of a frequency of 1 Hz, a heating rate of 5°C/min, a strain of 0.1%, a tensile mode, a distance between chucks of 20 mm, and a sample width of 5 mm by dynamic viscoelasticity measurement (DMA), is 50 MPa or more, and a storage modulus E'_{TD} at 100°C in a TD direction is 100 MPa or more.
[2A] The biaxially stretched polyethylene film according to [1A],
   wherein a value of a loss tangent (tan δ) at 100°C in the TD direction, which is measured under conditions of a frequency of 1 Hz, a heating rate of 5°C/min, a strain of 0.1%, a tensile mode, a distance between chucks of 20 mm, and a sample width of 5 mm, using dynamic viscoelasticity measurement (DMA), is 0.25 or more.
[3A] The biaxially stretched polyethylene film according to [1A] or [2A],
   wherein the ethylene-based polymer (A) includes high-density polyethylene, and a content of the high-density polyethylene in the biaxially stretched film layer is 60% by mass or more when a total of the biaxially stretched film layer is 100% by mass.
[4A] The biaxially stretched polyethylene film according to any one of [1A] to [3A],
   wherein a total value of a tensile modulus T₁ in the MD direction and a tensile modulus T₂ of the biaxially stretched polyethylene film in the TD direction, which is measured using a tensile tester under conditions of a measurement temperature of 23 ± 2°C, a relative humidity of 50 ± 5% RH, and a tensile speed of 5 mm/min in accordance with JIS K7127:1999, is 2500 MPa or more and 9000 MPa or less.
[5A] The biaxially stretched polyethylene film according to any one of [1A] to [4A],
   wherein a thermal shrinkage rate in the MD direction when subjected to a heat treatment at 100°C for 15 minutes, which is measured in accordance with JIS C2151:2019, is 4.0% or less.
[6A] The biaxially stretched polyethylene film according to any one of [1A] to [5A],
   wherein a thermal shrinkage rate in the TD direction when subjected to a heat treatment at 100°C for 15 minutes, which is measured in accordance with JIS C2151:2019, is 7.0% or less.
[7A] The biaxially stretched polyethylene film according to any one of [1A] to [6A],
   wherein a thermal shrinkage rate in the MD direction when subjected to a heat treatment at 120°C for 15 minutes, which is measured in accordance with JIS C2151:2019, is 9.0% or less.
[8A] The biaxially stretched polyethylene film according to any one of [1A] to [7A],
   wherein a thermal shrinkage rate in the TD direction when subjected to a heat treatment at 120°C for 15 minutes, which is measured in accordance with JIS C2151:2019, is 30.0% or less.
[9A] The biaxially stretched polyethylene film according to any one of [1A] to [8A],
   wherein a moisture permeability, which is measured in accordance with JIS Z 0208:1976, is 12.0 g/(m²·day) or less.
[10A] The biaxially stretched polyethylene film according to any one of [1A] to [9A],
   wherein a total of a breaking stress in the TD direction and a breaking stress in the MD direction, which are measured in accordance with JIS K7127:1999, is 210 MPa or more.
[11A] The biaxially stretched polyethylene film according to any one of [1A] to [10A], further comprising a surface resin layer on at least one surface of the biaxially stretched film layer.
[12A] The biaxially stretched polyethylene film according to [11A],
   wherein the surface resin layer contains an ethylene-based polymer.
[13A] The biaxially stretched polyethylene film according to [12A],
   wherein a content of the ethylene-based polymer in the surface resin layer is 75% by mass or more and 100% by mass or less when a total of the surface resin layer is 100% by mass.
[14A] The biaxially stretched polyethylene film according to any one of [11A] to [13A],
   wherein a thickness of the surface resin layer is 0.1 µm or more and 10 µm or less.
[15A] The biaxially stretched polyethylene film according to any one of [1A] to [14A],
   wherein a thickness of the biaxially stretched film layer is 5 µm or more and 100 µm or less.
[16A] The biaxially stretched polyethylene film according to any one of [1A] to [15A],
   wherein a ratio of a thickness of the biaxially stretched film layer to a total thickness of the biaxially stretched polyethylene film is 50% or more and 100% or less.
[17A] The biaxially stretched polyethylene film according to any one of [1A] to [16A],
   wherein the biaxially stretched polyethylene film is a packaging film.
[18A] A packaging material comprising the biaxially stretched polyethylene film according to any one of [1A] to [17A].
[19A] The packaging material according to [18A], further comprising one or two or more selected from the group consisting of an inorganic layer and a coating layer on at least one surface of the biaxially stretched polyethylene film.
[20A] A packaged article comprising
   the packaging material according to [18A] or [19A]; and
   an article inside the packaging material.

In addition, the present inventors have conducted intensive studies in order to achieve the object of the second embodiment of the present invention. As a result, it has been found that the heat fusion resistance is improved by setting the average linear expansion coefficient in the MD direction, which is measured by thermomechanical analysis, to be equal to or less than a predetermined value.

That is, according to the second embodiment of the present invention, a biaxially stretched polyethylene film, a packaging material, and a packaged article, which are described below, are provided.

[1B] A biaxially stretched polyethylene film comprising a biaxially stretched film layer containing an ethylene-based polymer (A),
   wherein, when measured using thermomechanical analysis (TMA) with reference to JIS K 7197:2012 under conditions of a heating rate of 10°C/min, a tensile mode, a load of 10 g/4 mm, an initial distance between chucks of 8 mm, and a test piece width of 4 mm, an average linear expansion coefficient (α) in an MD direction, which is calculated by Expression (1) in a measurement temperature range of 20°C to 100°C, is 4.5 × 10⁻⁴ (1/°C) or less. 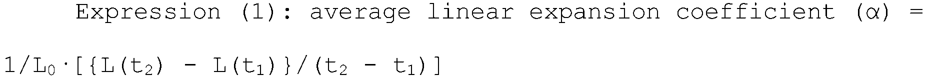 average linear expansion coefficient (α) = 1/L0·[{L(t2) - L(t1)}/(t2 - t1)] In Expression (1), L₀, t₁, t₂, L(t₁), and L(t₂) are represented as follows.
   L₀: initial distance between chucks of 8 mm
   t₁: 20°C
   t₂: 100°C
   L(t₁): distance between chucks (mm) at a temperature t₁, and
   L(t₂): distance between chucks (mm) at a temperature t₂
[2B] The biaxially stretched polyethylene film according to [1B],
   wherein an elongation rate in the MD direction at 100°C, which is measured under conditions of a temperature range of 20°C or higher and 100°C or lower, a heating rate of 10°C/min, a tensile mode, a load of 10 g/4 mm, an initial distance between chucks of 8 mm, and a test piece width of 4 mm, using thermomechanical analysis (TMA) with reference to JIS K 7197:2012, is 3.5% or less.
[3B] The biaxially stretched polyethylene film according to [1B] or [2B],
   wherein a heat fusion strength at 130°C, which is measured according to <Heat fusion Strength> below, is 1.0 N/15 mm or less,
   <Heat fusion Strength>
   two sheets of the biaxially stretched polyethylene films cut into a width of 15 mm are bonded to each other, sandwiched between biaxially stretched polyethylene terephthalate films having a thickness of 12 µm, and heat-fused under conditions of a temperature of 130°C, a pressure of 2.0 kgf/cm², and a sealing time of 1.0 second using a heat seal tester to obtain a laminated film, and then the two sheets of the biaxially stretched polyethylene films are peeled off under conditions of 90° peeling, a peeling speed of 300 mm/min, and tension in the MD direction, and a peeling strength at this time is defined as a heat fusion strength (N/15 mm).
[4B] The biaxially stretched polyethylene film according to any one of [1B] to [3B],
   wherein the ethylene-based polymer (A) includes high-density polyethylene, and a content of the high-density polyethylene in the biaxially stretched film layer is 60% by mass or more when a total of the biaxially stretched film layer is 100% by mass.
[5B] The biaxially stretched polyethylene film according to any one of [1B] to [4B],
   wherein a total value of a tensile modulus T₁ in the MD direction and a tensile modulus T₂ of the biaxially stretched polyethylene film in the TD direction, which is measured using a tensile tester under conditions of a measurement temperature of 23 ± 2°C, a relative humidity of 50 ± 5% RH, and a tensile speed of 5 mm/min in accordance with JIS K7127:1999, is 2500 MPa or more and 9000 MPa or less.
[6B] The biaxially stretched polyethylene film according to any one of [1B] to [5B],
   wherein a thermal shrinkage rate in the MD direction when subjected to a heat treatment at 100°C for 15 minutes, which is measured in accordance with JIS C2151:2019, is 4.0% or less.
[7B] The biaxially stretched polyethylene film according to any one of [1B] to [6B],
   wherein a thermal shrinkage rate in the TD direction when subjected to a heat treatment at 100°C for 15 minutes, which is measured in accordance with JIS C2151:2019, is 7.0% or less.
[8B] The biaxially stretched polyethylene film according to any one of [1B] to [7B],
   wherein a thermal shrinkage rate in the MD direction when subjected to a heat treatment at 120°C for 15 minutes, which is measured in accordance with JIS C2151:2019, is 9.0% or less.
[9B] The biaxially stretched polyethylene film according to any one of [1B] to [8B],
   wherein a thermal shrinkage rate in the TD direction when subjected to a heat treatment at 120°C for 15 minutes, which is measured in accordance with JIS C2151:2019, is 30.0% or less.
[10B] The biaxially stretched polyethylene film according to any one of [1B] to [9B],
   wherein a moisture permeability, which is measured in accordance with JIS Z 0208:1976, is 12.0 g/(m²·day) or less.
[11B] The biaxially stretched polyethylene film according to any one of [1B] to [10B],
   wherein a total of a breaking stress in the TD direction and a breaking stress in the MD direction, which are measured in accordance with JIS K7127:1999, is 210 MPa or more.
[12B] The biaxially stretched polyethylene film according to any one of [1B] to [11B], further comprising a surface resin layer on at least one surface of the biaxially stretched film layer.
[13B] The biaxially stretched polyethylene film according to [12B],
   wherein the surface resin layer contains an ethylene-based polymer.
[14B] The biaxially stretched polyethylene film according to [13B],
   wherein a content of the ethylene-based polymer in the surface resin layer is 75% by mass or more and 100% by mass or less when a total of the surface resin layer is 100% by mass.
[15B] The biaxially stretched polyethylene film according to any one of [12B] to [14B],
   wherein a thickness of the surface resin layer is 0.1 µm or more and 10 µm or less.
[16B] The biaxially stretched polyethylene film according to any one of [1B] to [15B],
   wherein a thickness of the biaxially stretched film layer is 5 µm or more and 100 µm or less.
[17B] The biaxially stretched polyethylene film according to any one of [1B] to [16B],
   wherein a ratio of a thickness of the biaxially stretched film layer to a total thickness of the biaxially stretched polyethylene film is 50% or more and 100% or less.
[18B] The biaxially stretched polyethylene film according to any one of [1B] to [17B],
   wherein the biaxially stretched polyethylene film is a packaging film.
[19B] A packaging material comprising the biaxially stretched polyethylene film according to any one of [1B] to [18B].
[20B] The packaging material according to [19B], further comprising one or two or more selected from the group consisting of an inorganic layer and a coating layer on at least one surface of the biaxially stretched polyethylene film.
[21B] A packaged article comprising
   the packaging material according to [19B] or [20B]; and
   an article inside the packaging material.

In addition, the present inventors have conducted intensive studies to achieve the object of the third embodiment of the present invention. As a result, it has been found that thermal dimensional stability is improved by setting a heat of fusion (ΔH) of the biaxially stretched polyethylene film obtained by differential scanning calorimetry to be in a predetermined range.

That is, according to the third embodiment of the present invention, a biaxially stretched polyethylene film, a packaging material, and a packaged article shown below are provided.

[1C] A biaxially stretched polyethylene film comprising a biaxially stretched film layer containing an ethylene-based polymer (A),
   wherein, when a first differential scanning calorimetry (1st Run) consisting of a process of raising the temperature from -50°C to 200°C at a heating rate of 10°C/min, an isothermal process of holding the temperature at 200°C for 5 minutes, and a process of lowering the temperature from 200°C to -50°C at a cooling rate of 10°C/min,
   a process of holding the temperature at -50°C for 5 minutes, and
   a second differential scanning calorimetry (2nd Run) consisting of a process of raising the temperature from -50°C to 200°C at a heating rate of 10°C/min, are continuously performed using a differential scanning calorimeter (DSC),
   in a DSC curve 2 obtained by the second differential scanning calorimetry, an endothermic peak A is observed in a range of 20°C or higher and 150°C or lower, and a heat of fusion (ΔH) of the endothermic peak A is 175 J/g or more and 250 J/g or less.
[2C] The biaxially stretched polyethylene film according to [1C],
   wherein (Tm₁ - Tm₂), which is obtained by subtracting a melting point (Tm₂) obtained by the second differential scanning calorimetry from a melting point (Tm₁) obtained by the first differential scanning calorimetry, is 0.0°C or higher.
[3C] The biaxially stretched polyethylene film according to [1C] or [2C],
   wherein, in a case where an exothermic peak observed in a DSC curve 1 obtained in the first cooling step is defined as a crystallization peak and a temperature of a vertex of the crystallization peak is defined as a crystallization temperature (Tc), (Tm₂ - Tc) is 12.1°C or higher.
[4C] The biaxially stretched polyethylene film according to any one of [1C] to [3C],
   wherein a melting point (Tm₂) obtained by the second differential scanning calorimetry is 130°C or higher.
[5C] The biaxially stretched polyethylene film according to any one of [1C] to [4C],
   wherein the ethylene-based polymer (A) includes high-density polyethylene, and a content of the high-density polyethylene in the biaxially stretched film layer is 60% by mass or more when a total of the biaxially stretched film layer is 100% by mass.
[6C] The biaxially stretched polyethylene film according to any one of [1C] to [5C],
   wherein a total value of a tensile modulus T₁ in the MD direction and a tensile modulus T₂ of the biaxially stretched polyethylene film in the TD direction, which is measured using a tensile tester under conditions of a measurement temperature of 23 ± 2°C, a relative humidity of 50 ± 5% RH, and a tensile speed of 5 mm/min in accordance with JIS K7127:1999, is 2500 MPa or more and 9000 MPa or less.
[7C] The biaxially stretched polyethylene film according to any one of [1C] to [6C],
   wherein a thermal shrinkage rate in the MD direction when subjected to a heat treatment at 100°C for 15 minutes, which is measured in accordance with JIS C2151:2019, is 4.0% or less.
[8C] The biaxially stretched polyethylene film according to any one of [1C] to [7C],
   wherein a thermal shrinkage rate in the TD direction when subjected to a heat treatment at 100°C for 15 minutes, which is measured in accordance with JIS C2151:2019, is 7.0% or less.
[9C] The biaxially stretched polyethylene film according to any one of [1C] to [8C],
   wherein a thermal shrinkage rate in the MD direction when subjected to a heat treatment at 120°C for 15 minutes, which is measured in accordance with JIS C2151:2019, is 9.0% or less.
[10C] The biaxially stretched polyethylene film according to any one of [1C] to [9C],
   wherein a thermal shrinkage rate in the TD direction when subjected to a heat treatment at 120°C for 15 minutes, which is measured in accordance with JIS C2151:2019, is 30.0% or less.
[11C] The biaxially stretched polyethylene film according to any one of [1C] to [10C],
   wherein a moisture permeability, which is measured in accordance with JIS Z 0208:1976, is 12.0 g/(m²·day) or less.
[12C] The biaxially stretched polyethylene film according to any one of [1C] to [11C],
   wherein a total of a breaking stress in the TD direction and a breaking stress in the MD direction, which are measured in accordance with JIS K7127:1999, is 210 MPa or more.
[13C] The biaxially stretched polyethylene film according to any one of [1C] to [12C], further comprising a surface resin layer on at least one surface of the biaxially stretched film layer.
[14C] The biaxially stretched polyethylene film according to [13C],
   wherein the surface resin layer contains an ethylene-based polymer.
[15C] The biaxially stretched polyethylene film according to [14C],
   wherein a content of the ethylene-based polymer in the surface resin layer is 75% by mass or more and 100% by mass or less when a total of the surface resin layer is 100% by mass.
[16C] The biaxially stretched polyethylene film according to any one of [13C] to [15C],
   wherein a thickness of the surface resin layer is 0.1 µm or more and 10 µm or less.
[17C] The biaxially stretched polyethylene film according to any one of [1C] to [16C],
   wherein a thickness of the biaxially stretched film layer is 5 µm or more and 100 µm or less.
[18C] The biaxially stretched polyethylene film according to any one of [1C] to [17C],
   wherein a ratio of a thickness of the biaxially stretched film layer to a total thickness of the biaxially stretched polyethylene film is 50% or more and 100% or less.
[19C] The biaxially stretched polyethylene film according to any one of [1C] to [18C],
   wherein the biaxially stretched polyethylene film is a packaging film.
[20C] A packaging material comprising the biaxially stretched polyethylene film according to any one of [1C] to [19C].
[21C] The packaging material according to [20C], further comprising one or two or more selected from the group consisting of an inorganic layer and a coating layer on at least one surface of the biaxially stretched polyethylene film.
[22C] A packaged article comprising
   the packaging material according to [20C] or [21C]; and
   an article inside the packaging material.

In addition, the present inventors have conducted intensive studies in order to solve the problems of the fourth embodiment of the present invention. As a result, it has been found that, by setting the z-average molecular weight (Mz) of the ethylene-based polymer contained in the biaxially stretched polyethylene film to be in a predetermined range, the performance balance between film formability and thermal dimensional stability is improved.

That is, according to the fourth embodiment of the present invention, a biaxially stretched polyethylene film, a packaging material, and a packaged article, which are shown below, are provided.

[1D] A biaxially stretched polyethylene film comprising a biaxially stretched film layer containing an ethylene-based polymer (A),
   wherein a z-average molecular weight (Mz) of the ethylene-based polymer (A) in terms of polystyrene, which is measured by gel permeation chromatography (GPC), is 800,000 or more and 4,000,000 or less.
[2D] The biaxially stretched polyethylene film according to [1D],
   wherein a weight-average molecular weight (Mw) of the ethylene-based polymer (A) in terms of polystyrene, which is measured by gel permeation chromatography (GPC), is 130,000 or more and 1,000,000 or less.
[3D] The biaxially stretched polyethylene film according to [1D] or [2D],
   wherein a number-average molecular weight (Mn) of the ethylene-based polymer (A) in terms of polystyrene, which is measured by gel permeation chromatography (GPC), is 5,000 or more and 200,000 or less.
[4D] The biaxially stretched polyethylene film according to any one of [1D] to [3D],
   wherein a ratio (Mw/Mn) of a weight-average molecular weight (Mw) to a number-average molecular weight (Mn) of the ethylene-based polymer (A) in terms of polystyrene, which is measured by gel permeation chromatography (GPC), is 30.0 or less.
[5D] The biaxially stretched polyethylene film according to any one of [1D] to [4D],
   wherein a density of the ethylene-based polymer (A), which is measured in accordance with JIS K 7112:1999, is 0.937 g/cm³ or more and 0.970 g/cm³ or less.
[6D] The biaxially stretched polyethylene film according to any one of [1D] to [5D],
   wherein a melt mass flow rate (MFR) of the ethylene-based polymer (A), which is measured in accordance with JIS K 7210:1999 under conditions of 190°C and a load of 2160 g, is 0.1 g/10 min or more and 5.0 g/10 min or less.
[7D] The biaxially stretched polyethylene film according to any one of [1D] to [6D],
   wherein the ethylene-based polymer (A) includes high-density polyethylene, and a content of the high-density polyethylene in the biaxially stretched film layer is 60% by mass or more when a total of the biaxially stretched film layer is 100% by mass.
[8D] The biaxially stretched polyethylene film according to any one of [1D] to [7D],
   wherein a total value of a tensile modulus T₁ in the MD direction and a tensile modulus T₂ of the biaxially stretched polyethylene film in the TD direction, which is measured using a tensile tester under conditions of a measurement temperature of 23 ± 2°C, a relative humidity of 50 ± 5% RH, and a tensile speed of 5 mm/min in accordance with JIS K7127:1999, is 2500 MPa or more and 9000 MPa or less.
[9D] The biaxially stretched polyethylene film according to any one of [1D] to [8D],
   wherein a thermal shrinkage rate in the MD direction when subjected to a heat treatment at 100°C for 15 minutes, which is measured in accordance with JIS C2151:2019, is 4.0% or less.
[10D] The biaxially stretched polyethylene film according to any one of [1D] to [9D],
   wherein a thermal shrinkage rate in the TD direction when subjected to a heat treatment at 100°C for 15 minutes, which is measured in accordance with JIS C2151:2019, is 7.0% or less.
[11D] The biaxially stretched polyethylene film according to any one of [1D] to [10D],
   wherein a thermal shrinkage rate in the MD direction when subjected to a heat treatment at 120°C for 15 minutes, which is measured in accordance with JIS C2151:2019, is 9.0% or less.
[12D] The biaxially stretched polyethylene film according to any one of [1D] to [11D],
   wherein a thermal shrinkage rate in the TD direction when subjected to a heat treatment at 120°C for 15 minutes, which is measured in accordance with JIS C2151:2019, is 30.0% or less.
[13D] The biaxially stretched polyethylene film according to any one of [1D] to [12D],
   wherein a moisture permeability, which is measured in accordance with JIS Z 0208:1976, is 12.0 g/(m²·day) or less.
[14D] The biaxially stretched polyethylene film according to any one of [1D] to [13D],
   wherein a total of a breaking stress in the TD direction and a breaking stress in the MD direction, which are measured in accordance with JIS K7127:1999, is 210 MPa or more.
[15D] The biaxially stretched polyethylene film according to any one of [1D] to [14D],
   wherein a total of an elongation at break in the TD direction and an elongation at break in the MD direction, which are measured in accordance with JIS K 7127:1999, is 200% or less.
[16D] The biaxially stretched polyethylene film according to any one of [1D] to [15D], further comprising a surface resin layer on at least one surface of the biaxially stretched film layer.
[17D] The biaxially stretched polyethylene film according to [16D],
   wherein the surface resin layer contains an ethylene-based polymer.
[18D] The biaxially stretched polyethylene film according to [17D],
   wherein a content of the ethylene-based polymer in the surface resin layer is 75% by mass or more and 100% by mass or less when a total of the surface resin layer is 100% by mass.
[19D] The biaxially stretched polyethylene film according to any one of [16D] to [18D],
   wherein a thickness of the surface resin layer is 0.1 µm or more and 10 µm or less.
[20D] The biaxially stretched polyethylene film according to any one of [1D] to [19D],
   wherein a thickness of the biaxially stretched film layer is 5 µm or more and 100 µm or less.
[21D] The biaxially stretched polyethylene film according to any one of [1D] to [20D],
   wherein a ratio of a thickness of the biaxially stretched film layer to a total thickness of the biaxially stretched polyethylene film is 50% or more and 100% or less.
[22D] The biaxially stretched polyethylene film according to any one of [1D] to [21D],
   wherein the biaxially stretched polyethylene film is a packaging film.
[23D] A packaging material comprising the biaxially stretched polyethylene film according to any one of [1D] to [22D].
[24D] The packaging material according to [23D], further comprising one or two or more selected from the group consisting of an inorganic layer and a coating layer on at least one surface of the biaxially stretched polyethylene film.
[25D] A packaged article comprising
   the packaging material according to [23D] or [24D]; and
   an article inside the packaging material.

### ADVANTAGEOUS EFFECTS OF INVENTION

According to the first embodiment of the present invention, it is possible to provide a biaxially stretched polyethylene film having improved thermal dimensional stability.

In addition, according to the second embodiment of the present invention, it is possible to provide a biaxially stretched polyethylene film having improved heat fusion resistance.

In addition, according to the third embodiment of the present invention, it is possible to provide a biaxially stretched polyethylene film having improved thermal dimensional stability.

In addition, according to the fourth embodiment of the present invention, it is possible to provide a biaxially stretched polyethylene film having improved performance balance between film formability and thermal dimensional stability.

### BRIEF DESCRIPTION OF THE DRAWINGS

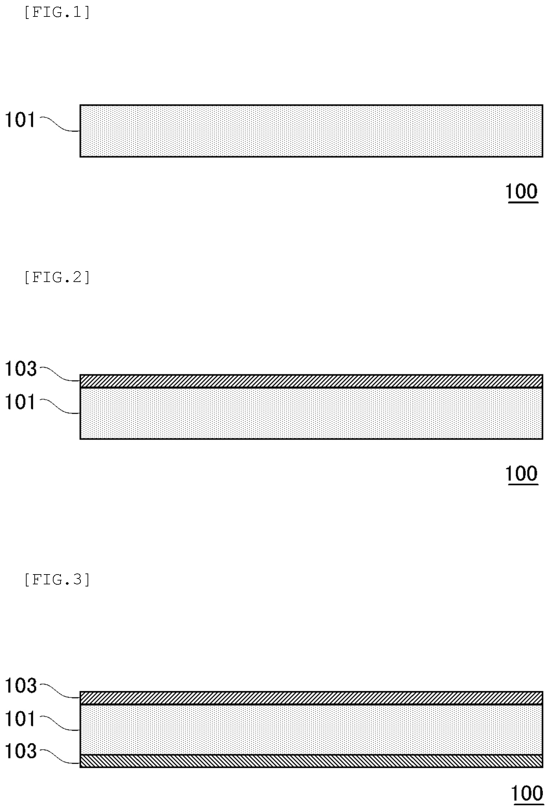

[FIG. 1] A schematic cross-sectional view showing an example of a structure of a biaxially stretched polyethylene film according to each of embodiments of the present invention.
[FIG. 2] A schematic cross-sectional view showing an example of a structure of a biaxially stretched polyethylene film according to each of embodiments of the present invention.
[FIG. 3] A schematic cross-sectional view showing an example of a structure of a biaxially stretched polyethylene film according to each of embodiments of the present invention.

### DESCRIPTION OF EMBODIMENTS

Hereinafter, embodiments of the present invention will be described with reference to the accompanying drawings. The figures are schematic views, and the dimension ratios thereof do not match the actual dimension ratios. In the present specification, unless otherwise specified, "A to B" indicating a numerical range means A or more and B or less.

### <<First Embodiment>>

Hereinafter, a biaxially stretched polyethylene film, a packaging material, and a packaged article according to a first embodiment of the present invention will be described.

### <Biaxially Stretched Polyethylene Film>

A biaxially stretched polyethylene film 100 according to the first embodiment comprises a biaxially stretched film layer 101 containing an ethylene-based polymer (A), in which a storage modulus E'_{MD} at 100°C in an MD direction, which is measured under conditions of a frequency of 1 Hz, a heating rate of 5°C/min, a strain of 0.1%, a tensile mode, a distance between chucks of 20 mm, and a sample width of 5 mm by dynamic viscoelasticity measurement (DMA), is 50 MPa or more, and a storage modulus E'_{TD} at 100°C in a TD direction is 100 MPa or more.

The present inventors have found that, in the biaxially stretched polyethylene film 100, by setting the storage modulus E'_{MD} at 100°C in the MD direction and the storage modulus E'_{TD} at 100°C in the TD direction, which are measured under conditions of a frequency of 1 Hz, a heating rate of 5°C/min, a strain of 0.1%, a tensile mode, a distance between chucks of 20 mm, and a sample width of 5 mm by using dynamic viscoelasticity measurement (DMA), to be equal to or more than predetermined values, the film becomes moderately hard, the coating suitability during processing is improved, and thus, the thermal dimensional stability of the biaxially stretched polyethylene film 100 can be improved.

In the biaxially stretched polyethylene film 100 according to the first embodiment, from the viewpoint of improving the thermal dimensional stability, the storage modulus E'_{MD} at 100°C in the MD direction, which is measured under conditions of a frequency of 1 Hz, a heating rate of 5°C/min, a strain of 0.1%, a tensile mode, a distance between chucks of 20 mm, and a sample width of 5 mm by using dynamic viscoelasticity measurement (DMA), is 50 MPa or more, preferably 70 MPa or more, more preferably 100 MPa or more, still more preferably 130 MPa or more, even more preferably 150 MPa or more, even still more preferably 180 MPa or more, even further more preferably 200 MPa or more, even further still more preferably 220 MPa or more, and even further still more preferably 250 MPa or more, and is preferably 600 MPa or less, more preferably 550 MPa or less, still more preferably 500 MPa or less, and even more preferably 450 MPa or less.

In the biaxially stretched polyethylene film 100, from the viewpoint of improving the thermal dimensional stability, the storage modulus E'_{TD} at 100°C in the TD direction, which is measured under conditions of a frequency of 1 Hz, a heating rate of 5°C/min, a strain of 0.1%, a tensile mode, a distance between chucks of 20 mm, and a sample width of 5 mm by using dynamic viscoelasticity measurement (DMA), is 100 MPa or more, preferably 120 MPa or more, more preferably 150 MPa or more, still more preferably 180 MPa or more, even more preferably 200 MPa or more, even still more preferably 220 MPa or more, even further more preferably 250 MPa or more, even further still more preferably 300 MPa or more, even further still more preferably 320 MPa or more, and even further still more preferably 350 MPa or more, and is preferably 700 MPa or less, more preferably 680 MPa or less, still more preferably 650 MPa or less, even more preferably 630 MPa or less, even still more preferably 600 MPa or less, and even further more preferably 580 MPa or less.

In the biaxially stretched polyethylene film 100, from the viewpoint of further improving the thermal dimensional stability, a value of a loss tangent (tan δ) at 100°C in the TD direction, which is measured under conditions of a frequency of 1 Hz, a heating rate of 5°C/min, a strain of 0.1%, a tensile mode, a distance between chucks of 20 mm, and a sample width of 5 mm by using dynamic viscoelasticity measurement (DMA), is preferably equal to or more than 0.25, more preferably equal to or more than 0.28, still more preferably equal to or more than 0.30, and even more preferably equal to or more than 0.33, and is preferably equal to or less than 0.60, more preferably equal to or less than 0.55, still more preferably equal to or less than 0.50, even more preferably equal to or less than 0.48, even still more preferably equal to or less than 0.45, even further more preferably equal to or less than 0.40, and even further still more preferably equal to or less than 0.38.

In the biaxially stretched polyethylene film 100, from the viewpoint of further improving the thermal dimensional stability, a loss elastic modulus E"_{MD} at 100°C in the MD direction, which is measured under conditions of a frequency of 1 Hz, a heating rate of 5°C/min, a strain of 0.1%, a tensile mode, a distance between chucks of 20 mm, and a sample width of 5 mm by using dynamic viscoelasticity measurement (DMA), is preferably 10 MPa or more, more preferably 20 MPa or more, still more preferably 30 MPa or more, even more preferably 40 MPa or more, even still more preferably 50 MPa or more, even further more preferably 60 MPa or more, and even further still more preferably 65 MPa or more, and is preferably 150 MPa or less, more preferably 130 MPa or less, and still more preferably 110 MPa or less.

In the biaxially stretched polyethylene film 100, from the viewpoint of further improving the thermal dimensional stability, a loss elastic modulus E"_{TD} at 100°C in the TD direction, which is measured under conditions of a frequency of 1 Hz, a heating rate of 5°C/min, a strain of 0.1%, a tensile mode, a distance between chucks of 20 mm, and a sample width of 5 mm by using dynamic viscoelasticity measurement (DMA), is preferably 30 MPa or more, more preferably 50 MPa or more, still more preferably 70 MPa or more, even more preferably 100 MPa or more, and even still more preferably 120 MPa or more, and is preferably 250 MPa or less, more preferably 230 MPa or less, and still more preferably 200 MPa or less.

In the biaxially stretched polyethylene film 100, the storage modulus E'_{MD}, the loss elastic modulus E"_{MD}, the storage modulus E'_{TD}, the loss elastic modulus E"_{TD}, and the loss tangent (tan δ) are measured as follows.

For the biaxially stretched polyethylene film 100, the storage modulus E'_{MD} and the loss elastic modulus E"_{MD} at 100°C in the MD direction are measured according to the following measurement conditions, and a loss tangent (tan δ_{MD}) is calculated from a ratio of E'_{MD} to E"_{MD}.

### [Measurement conditions]

Device: dynamic viscoelasticity measuring device
Measurement temperature range: 30°C to 130°C
Heating rate: 5°C/min
Strain: 0.1%
Measurement mode: tension
Frequency: 1 Hz
Sample width: 5 mm
Distance between chucks: 20 mm
Measurement direction: MD direction

In addition, the storage modulus E'_{TD} and the loss elastic modulus E"_{TD} at 100°C in the TD direction are measured in the same manner as the above-described conditions, except that the measurement direction is changed to the TD direction, and the loss tangent (tanδ_{TD}) is calculated from the ratio of E'_{TD} to E"_{TD}.

From the viewpoint of further improving the balance of various performances such as thermal dimensional stability, film formability, heat resistance, mechanical properties, rigidity, and the like, a density of the biaxially stretched polyethylene film 100, which is measured in accordance with JIS K 7112:1999, is preferably 0.937 g/cm³ or more, more preferably 0.940 g/cm³ or more, still more preferably 0.943 g/cm³ or more, even more preferably 0.945 g/cm³ or more, even still more preferably 0.948 g/cm³ or more, and even further more preferably 0.950 g/cm³ or more, and from the viewpoint of further improving the film formability, is preferably 0.970 g/cm³ or less, more preferably 0.965 g/cm³ or less, still more preferably 0.963 g/cm³ or less, and even more preferably 0.960 g/cm³ or less.

From the viewpoint of further improving the balance of performances such as film formability, thermal dimensional stability, heat resistance, water vapor barrier properties, mechanical properties, rigidity, bag-making properties, and fluidity, the melting point of the biaxially stretched polyethylene film 100, which is measured by a differential scanning calorimeter (DSC), is preferably 70°C or higher, more preferably 75°C or higher, still more preferably 90°C or higher, even more preferably 95°C or higher, even still more preferably 100°C or higher, even further still more preferably 110°C or higher, even still more preferably 120°C or higher, and even still more preferably 125°C or higher, and is preferably 150°C or lower, more preferably 140°C or lower, still more preferably 135°C or lower, and even still more preferably 134°C or lower.

From the viewpoint of further improving the balance of performances of fluidity, film formability, and thermal dimensional stability, the melt mass flow rate (MFR) of the biaxially stretched polyethylene film 100, which is measured in accordance with JIS K 7210:1999 under the conditions of 190°C and a load of 2,160 g, is preferably 0.1 g/10 min or more, more preferably 0.2 g/10 min or more, still more preferably 0.3 g/10 min or more, even still more preferably 0.5 g/10 min or more, and even still more preferably 0.8 g/10 min or more, and from the viewpoint of further improving the balance of performances of film formability and thermal dimensional stability and further improving the rigidity of the biaxially stretched polyethylene film 100, the melt mass flow rate is preferably 5.0 g/10 min or less, more preferably 4.5 g/10 min or less, still more preferably 4.0 g/10 min or less, even still more preferably 3.5 g/10 min or less, even still more preferably 3.0 g/10 min or less, even still more preferably 2.5 g/10 min or less, and even still more preferably 2.0 g/10 min or less.

From the viewpoint of further improving the performance balance of thermal dimensional stability, film formability, water vapor barrier properties, cost, mechanical properties, transparency, bag-making properties, handleability, appearance, lightweight properties, and the like, the thickness of the biaxially stretched polyethylene film 100 is preferably equal to or more than 5 µm, more preferably equal to or more than 10 µm, still more preferably equal to or more than 12 µm, and even still more preferably equal to or more than 15 µm, and is preferably equal to or less than 100 µm, more preferably equal to or less than 50 µm, still more preferably equal to or less than 40 µm, even still more preferably equal to or less than 30 µm, and even still more preferably equal to or less than 25 µm.

Hereinafter, the physical properties of the biaxially stretched polyethylene film 100 will be described.

The total value (T₁ + T₂) of the tensile modulus T₁ in the MD direction and the tensile modulus T₂ in the TD direction of the biaxially stretched polyethylene film 100, which is measured using a tensile tester under conditions of a measurement temperature of 23 ± 2°C, a relative humidity of 50 ± 5% RH, and a tensile speed of 5 mm/min in accordance with JIS K7127:1999, is preferably 2500 MPa or more, more preferably 3000 MPa or more, still more preferably 3500 MPa or more, even still more preferably 4000 MPa or more, even further still more preferably 4500 MPa or more, and is preferably 9000 MPa or less, more preferably 8000 MPa or less, still more preferably 7000 MPa or less, even still more preferably 6500 MPa or less, and even further still more preferably 6000 MPa or less.

In a case where the total value (T₁ + T₂) of the tensile modulus T₁ in the MD direction and the tensile modulus T₂ of the biaxially stretched polyethylene film in the TD direction 100 is equal to or more than the above-described lower limit value, it is possible to further improve the balance of performances such as thermal dimensional stability, film formability, water vapor barrier properties, mechanical properties, transparency, bag-making properties, and handleability of the biaxially stretched polyethylene film 100, and it is possible to further improve the rigidity of the biaxially stretched polyethylene film 100.

In addition, in a case where the total value (T₁ + T₂) of the tensile modulus T₁ of the biaxially stretched polyethylene film 100 in the MD direction and the tensile modulus T₂ in the TD direction is equal to or less than the above-described upper limit value, troubles such as cutting are less likely to occur during the forming of the biaxially stretched polyethylene film 100, continuous stretching and forming of the film is facilitated, and industrial continuous productivity can be further improved.

Such a tensile modulus is a substitute value for quantitatively measuring the rigidity of the film, and can be adjusted, for example, by adjusting the kind and the content ratio of the ethylene-based polymer contained in the biaxially stretched film layer 101, the thickness and the stretching ratio of the biaxially stretched film layer 101, the constituent material and the thickness of the surface resin layer 103, and the like.

In addition, from the viewpoint of further improving the performance balance of the biaxially stretched polyethylene film 100 in terms of thermal dimensional stability, film formability, water vapor barrier properties, mechanical properties, transparency, bag-making properties, handleability, and packaging suitability, the tensile modulus T₁ of the biaxially stretched polyethylene film 100 in the MD direction is preferably 800 MPa or more, more preferably 1000 MPa or more, still more preferably 1100 MPa or more, even still more preferably 1300 MPa or more, even further still more preferably 1500 MPa or more, even further still more preferably 1800 MPa or more, even further still more preferably 2000 MPa or more, and from the viewpoint of further improving the performance balance of the biaxially stretched polyethylene film 100 in terms of thermal dimensional stability, antistatic properties, bag-making properties, and packaging suitability, the tensile modulus T₁ is preferably 4000 MPa or less, more preferably 3500 MPa or less, still more preferably 3000 MPa or less, even still more preferably 2500 MPa or less, and even further still more preferably 2300 MPa or less.

In addition, from the viewpoint of further improving the performance balance of the biaxially stretched polyethylene film 100 in terms of thermal dimensional stability, film formability, water vapor barrier properties, mechanical properties, transparency, bag-making properties, handleability, and packaging suitability, the tensile modulus T₂ of the biaxially stretched polyethylene film 100 in the TD direction is preferably 1000 MPa or more, more preferably 1300 MPa or more, still more preferably 1500 MPa or more, even still more preferably 1800 MPa or more, even further still more preferably 2000 MPa or more, even further still more preferably 2500 MPa or more, and even further still more preferably 2800 MPa or more, and from the viewpoint of further improving the performance balance of the biaxially stretched polyethylene film 100 in terms of thermal dimensional stability, antistatic properties, bag-making properties, and packaging suitability, the tensile modulus T₂ is preferably 5000 MPa or less, more preferably 4500 MPa or less, still more preferably 4000 MPa or less, and even still more preferably 3500 MPa or less.

From the viewpoint of further improving the balance of performances of thermal dimensional stability and bag-making properties, the thermal shrinkage rate X_{MD100} of the biaxially stretched polyethylene film 100 in the MD direction in a case of being subjected to a heat treatment at 100°C for 15 minutes, which is measured in accordance with JIS C 2151: 2019, is preferably 4.0% or less, more preferably 3.8% or less, still more preferably 3.5% or less, even still more preferably 3.0% or less, even still more preferably 2.8% or less, even still more preferably 2.5% or less, and even still more preferably 2.0% or less, and may be 0.1% or more, 0.5% or more, or 1.0% or more.

Here, in general, the roll of the biaxially stretched polyethylene film 100 is fed out in the MD direction, and bag-making processing, coating, vapor deposition, and the like are performed while applying tension. That is, since tension is applied in the MD direction, in a case where the heat resistance of the film is low during heating, the film is likely to be thermal-elongated in the MD direction. On the other hand, in a case where the thermal shrinkage rate in the MD direction in a case of being subjected to a heat treatment at 100°C for 15 minutes is within the above-described range, it is possible to further suppress the thermal expansion in the MD direction in a case where the biaxially stretched polyethylene film is heated.

From the viewpoint of further improving the balance of performances of thermal dimensional stability and bag-making properties, the thermal shrinkage rate X_{TD100} of the biaxially stretched polyethylene film 100 in the TD direction in a case of being subjected to a heat treatment at 100°C for 15 minutes, which is measured in accordance with JIS C 2151: 2019, is preferably 7.0% or less, more preferably 6.0% or less, still more preferably 5.0% or less, even still more preferably 4.5% or less, even still more preferably 4.0% or less, even still more preferably 3.8% or less, even still more preferably 3.5% or less, even still more preferably 3.0% or less, even still more preferably 2.8% or less, even still more preferably 2.5% or less, even still more preferably 2.0% or less, and even still more preferably 1.5% or less, and may be 0.01% or more, 0.02% or more, 0.05% or more, or 0.1% or more.

In addition, the thermal shrinkage rates X_{MD100} [%] and X_{TD100} [%] of the biaxially stretched polyethylene film 100 in a case of being subjected to a heat treatment at 100°C for 15 minutes are calculated by the following method.

First, a test piece having a size of 10 cm × 10 cm is cut out from the biaxially stretched polyethylene film 100, and this test piece is subjected to a heat treatment at 100°C for 15 minutes. Next, in a case where the length of the test piece in the MD direction after the heat treatment is denoted by MD₁₀₀ [cm] and the length of the test piece in the TD direction after the heat treatment is denoted by TD₁₀₀ [cm], X_{MD100} [%] is calculated by 100 × (10 - MD₁₀₀)/10, and X_{TD100} [%] is calculated by 100 × (10 - TD₁₀₀)/10.

From the viewpoint of further improving thermal dimensional stability and bag-making properties, the thermal shrinkage rate X_{MD120} of the biaxially stretched polyethylene film 100 in the MD direction in a case of being subjected to a heat treatment at 120°C for 15 minutes, which is measured in accordance with JIS C 2151: 2019, is preferably 9.0% or less, more preferably 8.5% or less, still more preferably 8.0% or less, even still more preferably 7.5% or less, and even still more preferably 7.0% or less, and may be 0.1% or more, 0.5% or more, 1.0% or more, or 3.0% or more.

From the viewpoint of further improving thermal dimensional stability and bag-making properties, the thermal shrinkage rate X_{TD120} of the biaxially stretched polyethylene film 100 in the TD direction in a case of being subjected to a heat treatment at 120°C for 15 minutes, which is measured in accordance with JIS C 2151: 2019, is preferably 30.0% or less, more preferably 25.0% or less, still more preferably 20.0% or less, even still more preferably 15.0% or less, even still more preferably 13.0% or less, even still more preferably 10.0% or less, even still more preferably 8.0% or less, and even still more preferably 5.0% or less, and may be 0.1% or more, 0.5% or more, or 1.0% or more.

In addition, the thermal shrinkage rates X_{MD120} [%] and X_{TD120} [%] of the biaxially stretched polyethylene film 100 in a case of being subjected to a heat treatment at 120°C for 15 minutes can be measured in the same manner as in the measurement of the thermal shrinkage rates X_{MD100} [%] and X_{TD100} [%] of the biaxially stretched polyethylene film 100 in a case of being subjected to a heat treatment at 100°C for 15 minutes, except that the heating temperature is set to 120°C. Specifically, the description is provided in the section of Examples.

From the viewpoint of further improving water vapor barrier properties, the moisture permeability of the biaxially stretched polyethylene film 100, which is measured in accordance with JIS Z 0208: 1976, is preferably 12.0 g/(m²·day) or less, more preferably 11.5 g/(m²·day) or less, still more preferably 11.0 g/(m²·day) or less, even still more preferably 10.5 g/(m²·day) or less, even still more preferably 10.0 g/(m²·day) or less, even still more preferably 9.0 g/(m²·day) or less, even still more preferably 7.5 g/(m²·day) or less, even still more preferably 7.0 g/(m²·day) or less, even still more preferably 6.5 g/(m²·day) or less, and even still more preferably 6.0 g/(m²·day) or less, and may be 0.01 g/(m²·day) or more, 0.1 g/(m²·day) or more, 0.5 g/(m²·day) or more, 1.0 g/(m²·day) or more, or 3.0 g/(m²·day) or more.

From the viewpoint of further improving mechanical strength such as toughness, the total of the breaking stress in the TD direction and the breaking stress in the MD direction of the biaxially stretched polyethylene film 100, which are measured in accordance with JIS K 7127:1999, is preferably 210 MPa or more, more preferably 220 MPa or more, still more preferably 230 MPa or more, even still more preferably 250 MPa or more, even still more preferably 280 MPa or more, and even still more preferably 300 MPa or more, and may be 600 MPa or less, 500 MPa or less, or 450 MPa or less.

From the viewpoint of further improving mechanical strength such as toughness, the breaking stress in the MD direction of the biaxially stretched polyethylene film 100, which is measured in accordance with JIS K 7127:1999, is preferably 50 MPa or more, more preferably 60 MPa or more, still more preferably 70 MPa or more, even still more preferably 80 MPa or more, and even still more preferably 90 MPa or more, and may be 300 MPa or less, 200 MPa or less, or 150 MPa or less.

From the viewpoint of further improving mechanical strength such as toughness, the breaking stress of the biaxially stretched polyethylene film in the TD direction 100, which is measured in accordance with JIS K 7127:1999, is preferably 70 MPa or more, more preferably 90 MPa or more, still more preferably 100 MPa or more, even still more preferably 120 MPa or more, even still more preferably 150 MPa or more, and even still more preferably 180 MPa or more, and may be 500 MPa or less, 400 MPa or less, 350 MPa or less, or 330 MPa or less.

Hereinafter, each layer constituting the biaxially stretched polyethylene film 100 will be described.

### [Biaxially stretched film layer]

The biaxially stretched film layer 101 contains an ethylene-based polymer.

The biaxially stretched film layer 101 is formed by biaxially stretching a film formed of an ethylene-based polymer composition containing an ethylene-based polymer (A).

### (Ethylene-Based Polymer (A))

From the viewpoint of further improving the balance of various performances such as thermal dimensional stability, film formability, heat resistance, mechanical properties, rigidity, and transparency, when the total of the ethylene-based polymer composition, that is, the total of the biaxially stretched film layer 101 is set to 100% by mass, the content of the ethylene-based polymer (A) in the ethylene-based polymer composition, that is, in the biaxially stretched film layer 101 is preferably 80% by mass or more, more preferably 85% by mass or more, still more preferably 90% by mass or more, even still more preferably 95% by mass or more, even still more preferably 97% by mass or more, and even still more preferably 99% by mass or more, and from the viewpoint of further improving the performance balance of processability and continuous productivity, the content is preferably 100% by mass or less.

The ethylene-based polymer (A) of the first embodiment preferably contains one or two or more selected from the group consisting of low-density polyethylene (LDPE), linear low-density polyethylene (LLDPE), medium-density polyethylene (MDPE), and high-density polyethylene (HDPE), and from the viewpoint of further improving the balance of various performances such as thermal dimensional stability, film formability, heat resistance, water vapor barrier properties, mechanical properties, and rigidity, the ethylene-based polymer (A) more preferably contains one or two or more selected from the group consisting of low-density polyethylene (LDPE), linear low-density polyethylene (LLDPE), and high-density polyethylene (HDPE), and still more preferably contains high-density polyethylene (HDPE).

Here, the low-density polyethylene (LDPE) represents polyethylene having a density of 0.910 g/cm³ or more and less than 0.930 g/cm³, the medium-density polyethylene (MDPE) represents polyethylene having a density of 0.930 g/cm³ or more and less than 0.942 g/cm³, and the high-density polyethylene (HDPE) represents polyethylene having a density of 0.942 g/cm³ or more. In addition, low-density polyethylene having little branched structure is represented by linear low-density polyethylene (LLDPE).

From the viewpoint of further improving the balance of various performances such as thermal dimensional stability, film formability, heat resistance, mechanical properties, and rigidity, when the total of the ethylene-based polymer composition, that is, the total of the biaxially stretched film layer 101 is set to 100% by mass, the content of the high-density polyethylene in the ethylene-based polymer composition, that is, in the biaxially stretched film layer 101 is preferably 60% by mass or more, more preferably 65% by mass or more, still more preferably 70% by mass or more, even still more preferably 75% by mass or more, even still more preferably 80% by mass or more, and even still more preferably 85% by mass or more, and from the viewpoint of further improving the performance balance of processability and continuous productivity, the content is preferably 100% by mass or less, and more preferably 95% by mass or less.

From the viewpoint of further improving the balance of various performances such as thermal dimensional stability, film formability, heat resistance, mechanical properties, and rigidity, the density of the ethylene-based polymer (A), which is measured in accordance with JIS K 7112:1999, is preferably 0.937 g/cm³ or more, more preferably 0.940 g/cm³ or more, still more preferably 0.943 g/cm³ or more, even still more preferably 0.945 g/cm³ or more, even still more preferably 0.948 g/cm³ or more, and even still more preferably 0.950 g/cm³ or more, and from the viewpoint of further improving the film formability, the density is preferably 0.970 g/cm³ or less, more preferably 0.965 g/cm³ or less, still more preferably 0.963 g/cm³ or less, and even still more preferably 0.960 g/cm³ or less.

In a case where two or more kinds of polymers are used as the ethylene-based polymer, the density of a mixture obtained by melt-blending two or more kinds of ethylene-based polymers by a known method can be adopted.

From the viewpoint of further improving the performance balance of fluidity, film formability, and thermal dimensional stability, the melt mass flow rate (MFR) of the ethylene-based polymer (A) measured under the conditions of 190°C and a load of 2160 g in accordance with JIS K 7210:1999 is preferably 0.1 g/10 min or more, more preferably 0.2 g/10 min or more, still more preferably 0.3 g/10 min or more, even still more preferably 0.5 g/10 min or more, and even still more preferably 0.8 g/10 min or more, and from the viewpoint of further improving the performance balance of film formability and thermal dimensional stability and further improving the rigidity of the biaxially stretched polyethylene film 100, the MFR is preferably 5.0 g/10 min or less, more preferably 4.5 g/10 min or less, still more preferably 4.0 g/10 min or less, even still more preferably 3.5 g/10 min or less, even still more preferably 3.0 g/10 min or less, even still more preferably 2.5 g/10 min or less, and even still more preferably 2.0 g/10 min or less.

In a case where two or more kinds of polymers are used as the ethylene-based polymer (A), the MFR of a mixture obtained by melt-blending two or more kinds of polymers by a known method can be adopted.

From the viewpoint of further improving the performance balance of film formability, thermal dimensional stability, heat resistance, water vapor barrier properties, mechanical properties, rigidity, bag-making properties, fluidity, and the like, the melting point of the ethylene-based polymer (A) measured by a differential scanning calorimeter (DSC) is preferably 70°C or higher, more preferably 75°C or higher, still more preferably 90°C or higher, even more preferably 95°C or higher, even still more preferably 100°C or higher, even further still more preferably 110°C or higher, even still more preferably 120°C or higher, and even still more preferably 125°C or higher, and is preferably 150°C or lower, more preferably 140°C or lower, still more preferably 135°C or lower, and even still more preferably 134°C or lower.

In a case where two or more kinds of polymers are used as the ethylene-based polymer, the melting point of the ethylene-based polymer (A) is the peak temperature of the maximum endothermic peak.

In addition, the ethylene-based polymer (A) of the first embodiment may further contain one or two or more selected from the group consisting of an α-olefin copolymer (here, an ethylene-α-olefin copolymer is excluded) and an ethylene-α-olefin copolymer, in addition to the above-described polyethylene, and it is more preferable to contain an ethylene-α-olefin copolymer. From the viewpoint of further improving the performance balance of thermal dimensional stability, film formability, and flexibility, the ethylene-α-olefin copolymer preferably includes one or two or more selected from the group consisting of an ethylene/1-butene random copolymer and an ethylene/propylene random copolymer, and more preferably includes an ethylene/1-butene random copolymer. The α-olefin copolymer includes one or two or more selected from the group consisting of a propylene/ethylene random copolymer and a 1-butene/propylene random copolymer.

From the viewpoint of further improving the performance balance of thermal dimensional stability, film formability, and flexibility, the density of the ethylene-α-olefin copolymer measured in accordance with JIS K 7112:1999 is preferably 0.860 g/cm³ or more, more preferably 0.870 g/cm³ or more, still more preferably 0.880 g/cm³ or more, and even still more preferably 0.890 g/cm³ or more, and is preferably 0.920 g/cm³ or less, more preferably 0.910 g/cm³ or less, and still more preferably 0.900 g/cm³ or less.

From the viewpoint of further improving the performance balance of fluidity, film formability, and thermal dimensional stability, the melt mass flow rate (MFR) of the ethylene-α-olefin copolymer measured under the conditions of 190°C and a load of 2160 g in accordance with JIS K 7210:1999 is preferably 0.1 g/10 min or more, more preferably 0.2 g/10 min or more, still more preferably 0.3 g/10 min or more, even still more preferably 0.5 g/10 min or more, and even still more preferably 1.0 g/10 min or more, and from the viewpoint of further improving the performance balance of film formability and thermal dimensional stability and further improving the rigidity of the biaxially stretched polyethylene film 100, the MFR is preferably 5.0 g/10 min or less, more preferably 4.5 g/10 min or less, and still more preferably 4.0 g/10 min or less.

From the viewpoint of further improving the performance balance of film formability, thermal dimensional stability, heat resistance, water vapor barrier properties, mechanical properties, rigidity, bag-making properties, fluidity, and the like, the melting point of the ethylene-α-olefin copolymer measured by a differential scanning calorimeter (DSC) is preferably 40°C or higher, more preferably 50°C or higher, still more preferably 60°C or higher, and even still more preferably 70°C or higher, and is preferably 120°C or lower, more preferably 110°C or lower, still more preferably 100°C or lower, even still more preferably 90°C or lower, and even still more preferably 80°C or lower.

In a case where the total of the biaxially stretched film layer is set to 100% by mass, the content of the ethylene-α-olefin copolymer in the biaxially stretched film layer 101 is preferably 5% by mass or more, more preferably 8% by mass or more, and is preferably 40% by mass or less, more preferably 35% by mass or less, still more preferably 30% by mass or less, even still more preferably 25% by mass or less, even still more preferably 20% by mass or less, and even still more preferably 15% by mass or less.

### (Other Components)

As necessary, various additives such as a tackifier, a heat stabilizer, a weathering stabilizer, an antioxidant, an ultraviolet absorber, a lubricant, a slip agent, a nucleating agent, an anti-blocking agent, an antistatic agent, an antifogging agent, a pigment, a dye, and an inorganic or organic filler may be added to the ethylene-based polymer composition constituting the biaxially stretched film layer 101 within a range not impairing the object of the first embodiment.

### (Method for Preparing Ethylene-Based Polymer Composition)

The ethylene-based polymer composition can be prepared, for example, by mixing or melt-kneading each component by dry blending, a tumbler mixer, a banbury mixer, a single-screw extruder, a twin-screw extruder, a high-speed twin-screw extruder, a heat roll, or the like.

The biaxially stretched film layer 101 may be a single layer or may have a configuration in which a plurality of layers formed of an ethylene-based polymer composition are laminated, but it is necessary that the biaxially stretched film layer 101 is formed by biaxial stretching.

From the viewpoint of further improving the performance balance of the biaxially stretched polyethylene film 100 in terms of thermal dimensional stability, film formability, water vapor barrier properties, cost, mechanical properties, transparency, bag-making properties, handleability, appearance, lightweight properties, and the like, the thickness of the biaxially stretched film layer 101 is preferably equal to or more than 5 µm, more preferably equal to or more than 10 µm, still more preferably equal to or more than 12 µm, and even still more preferably equal to or more than 15 µm, and is preferably equal to or less than 100 µm, more preferably equal to or less than 50 µm, still more preferably equal to or less than 40 µm, even still more preferably equal to or less than 30 µm, and even still more preferably equal to or less than 25 µm.

In the biaxially stretched polyethylene film 100, the proportion of the thickness of the biaxially stretched film layer 101 to the total thickness of the biaxially stretched polyethylene film 100 is preferably equal to or more than 50%, more preferably equal to or more than 60%, still more preferably equal to or more than 70%, and even still more preferably equal to or more than 75%, and is preferably equal to or less than 100%, more preferably equal to or less than 99%, still more preferably equal to or less than 95%, and even still more preferably equal to or less than 90%.

### [Surface Resin Layer]

From the viewpoint of imparting functions such as heat fusion resistance, heat sealability, antistatic properties, blocking resistance, printing suitability, and slip properties to the film surface, the biaxially stretched polyethylene film 100 preferably further includes a surface resin layer 103 on at least one surface of the biaxially stretched film layer 101, depending on the purpose.

The surface resin layer 103 may be provided on both surfaces of the biaxially stretched film layer 101. By providing the surface resin layer 103 on both surfaces of the biaxially stretched film layer 101, different functions can be imparted to each surface of the film.

In a case where the surface resin layer 103 is provided on both surfaces of the biaxially stretched film layer 101, it is preferable that the surface resin layer 103 on one surface has heat sealability. By folding the biaxially stretched polyethylene film 100 with this surface facing inward and heat-sealing the end part, a bag **shape** can be obtained. In addition, it is preferable that the surface resin layer 103 on the other surface has blocking resistance, antistatic properties, printability, and the like.

In addition, depending on the purpose, from the viewpoint of further improving the functions of the biaxially stretched polyethylene film 100 such as heat fusion resistance, heat sealability, antistatic properties, blocking resistance, printability, and slip properties, it is preferable that the surface resin layer 103 is provided on the outermost layer of the biaxially stretched polyethylene film 100.

It is preferable that the surface resin layer 103 is provided to be in direct contact with the surface of the biaxially stretched film layer 101. As a result, the manufacturing process of the biaxially stretched polyethylene film 100 can be simplified.

In the biaxially stretched polyethylene film 100, from the viewpoint of further improving the performance balance of the film formability, thermal dimensional stability, water vapor barrier properties, mechanical properties, bag-making properties, handleability, and packaging suitability of the biaxially stretched polyethylene film 100, the thickness of the surface resin layer 103 is preferably 0.1 µm or more, more preferably 0.2 µm or more, still more preferably 0.5 µm or more, even more preferably 1.0 µm or more, and even still more preferably 1.5 µm or more, and from the viewpoint of further improving the performance balance of the film formability, thermal dimensional stability, water vapor barrier properties, mechanical properties, bag-making properties, handleability, packaging suitability, cost, environmental compatibility, lightweight properties, and the like of the biaxially stretched polyethylene film 100, the thickness of the surface resin layer 103 is preferably 10 µm or less, more preferably 8 µm or less, still more preferably 6 µm or less, even more preferably 5 µm or less, and even still more preferably 3 µm or less.

Here, the thickness of the surface resin layer 103 refers to the thickness of the surface resin layer 103 provided on one surface of the biaxially stretched film layer 101. That is, in the present embodiment, in a case where the surface resin layer 103 is provided on both surfaces of the biaxially stretched film layer 101, the above-described thickness of the surface resin layer 103 indicates the thickness of the surface resin layer 103 provided on one surface of the biaxially stretched film layer 101.

In the biaxially stretched polyethylene film 100, it is preferable that the surface resin layer 103 is a single layer. As a result, the manufacturing process of the biaxially stretched polyethylene film 100 can be further simplified.

The surface resin layer 103 is preferably formed by being biaxially stretched at the same time as the film in a state before the biaxial stretching of the biaxially stretched film layer 101. As a result, since the biaxially stretched polyethylene film 100 can be produced using a molding method such as a co-extrusion molding method, that is, a laminated film produced by one-time molding, the manufacturing process of the biaxially stretched polyethylene film 100 can be further simplified. Therefore, the surface resin layer 103 is preferably biaxially stretched.

In addition, the surface resin layer 103 may be subjected to a surface treatment from the viewpoint of further improving the performance balance of the printing suitability and the blocking resistance of the biaxially stretched polyethylene film 100. Specifically, a surface activation treatment such as a corona treatment, a flame treatment, a plasma treatment, a primer coating treatment, or an ozone treatment may be performed.

The surface resin layer 103 is composed of, for example, a polyolefin-based resin composition (A) containing a polyolefin. The polyolefin constituting the surface resin layer 103 includes, for example, one or more selected from the group consisting of a homopolymer or copolymer of α-olefins such as ethylene, propylene, 1-butene, hexene-1, 4-methyl-pentene-1, and 1-octene; low-density polyethylene by a high pressure method; linear low-density polyethylene (LLDPE); high-density polyethylene; homopolypropylene; a random copolymer of propylene and an α-olefin having 2 to 10 carbon atoms; an ethylene-vinyl acetate copolymer (EVA); and an ionomer resin.

Among these, as the polyolefin constituting the surface resin layer 103, from the viewpoint of further improving the performance balance of the film formability, thermal dimensional stability, heat fusion resistance, heat resistance, water vapor barrier properties, transparency, mechanical properties, rigidity, bag-making properties, fluidity, and the like of the biaxially stretched polyethylene film 100, an ethylene-based polymer is preferable. Here, the preferred aspect of the ethylene-based polymer constituting the surface resin layer 103 is the same as that of the ethylene-based polymer described above. That is, the ethylene-based polymer constituting the surface resin layer 103 preferably includes the ethylene-based polymer (A) described above.

In addition, in a case where the surface resin layer 103 is provided on both surfaces of the biaxially stretched film, the polyolefin-based resin compositions constituting the respective surface resin layers 103 may be the same or different from each other.

From the viewpoint of further improving the performance balance of the film formability, thermal dimensional stability, heat fusion resistance, heat resistance, water vapor barrier properties, transparency, mechanical properties, rigidity, bag-making properties, fluidity, and the like of the biaxially stretched polyethylene film 100, in a case where the entire polyolefin-based resin composition (A), that is, the entire surface resin layer 103 is set to 100% by mass, the content of the polyolefin in the polyolefin-based resin composition (A), that is, in the surface resin layer 103 is preferably equal to or more than 75% by mass, more preferably equal to or more than 80% by mass, still more preferably equal to or more than 90% by mass, even still more preferably equal to or more than 95% by mass, even still more preferably equal to or more than 98% by mass, and even still more preferably equal to or more than 99% by mass, and is preferably equal to or less than 100% by mass.

From the viewpoint of further improving the performance balance of the film formability, thermal dimensional stability, heat fusion resistance, heat resistance, water vapor barrier properties, transparency, mechanical properties, rigidity, bag-making properties, fluidity, and the like of the biaxially stretched polyethylene film 100, the content of the ethylene-based polymer in the polyolefin-based resin composition, that is, in the surface resin layer 103 is preferably 75% by mass or more, more preferably 80% by mass or more, still more preferably 90% by mass or more, even more preferably 95% by mass or more, even still more preferably 98% by mass or more, and even still more preferably 99% by mass or more, and is preferably 100% by mass or less, in a case where the total of the polyolefin-based resin composition, that is, the total of the surface resin layer 103 is set to 100% by mass.

### (Other Components)

Various additives such as a tackifier, a heat stabilizer, a weathering stabilizer, an antioxidant, an ultraviolet absorber, a lubricant, a slip agent, a nucleating agent, an anti-blocking agent, an antistatic agent, an antifogging agent, a pigment, a dye, and an inorganic or organic filler may be added as necessary to the polyolefin-based resin composition constituting the surface resin layer 103 within a range not impairing the object of the first embodiment.

### (Method for Preparing Polyolefin-Based Resin Composition)

The polyolefin-based resin composition can be prepared by mixing or melt-kneading, for example, the respective components by dry blending, a tumbler mixer, a Banbury mixer, a single-screw extruder, a twin-screw extruder, a high-speed twin-screw extruder, a heat roll, or the like.

### <Method for Producing Biaxially Stretched Polyethylene Film>

The biaxially stretched polyethylene film 100 can be obtained, for example, by biaxially stretching a film obtained by co-extrusion-molding an ethylene-based polymer composition for forming the biaxially stretched film layer 101 in a film shape using a biaxially stretched film production method such as a known simultaneous biaxial stretching method, a sequential biaxial stretching method, or an inflation biaxial stretching method.

The molding device and the molding conditions are not particularly limited, and a molding device and molding conditions known in the related art can be adopted. As the molding device, a T-die extruder, a multilayer T-die extruder, an inflation molding machine, a multilayer inflation molding machine, or the like can be used. The biaxial stretching conditions can be, for example, known polyethylene film production conditions. For example, in the sequential biaxial stretching method, the stretching temperature in the MD direction may be set to preferably in a range of 100°C to 145°C, more preferably in a range of 110°C to 140°C, and still more preferably in a range of 120°C to 135°C, and the stretching temperature in the TD direction may be set to preferably in a range of 110°C to 190°C and more preferably in a range of 120°C to 170°C. In addition, the stretching ratio in the MD direction may be set to preferably in a range of 4.5 to 7 times, and the stretching ratio in the TD direction may be set to preferably in a range of 9 to 11 times.

Here, specifically, it is necessary to set the stretching temperature to three stages of a preheating temperature (temperature for heating the film raw material before stretching)/a stretching temperature (temperature during stretching)/a heat setting temperature (temperature during heat setting (annealing) after stretching), and the temperature can be set to the above-described range from preheating to heat setting. That is, the temperature can be set to the same level as the stretching and the heat setting from the preheating stage. Since the biaxially stretched polyethylene film 100 of the first embodiment contains the ethylene-based polymer (A), it can be processed at a higher temperature, the heat resistance of the obtained biaxially stretched polyethylene film 100 can be further improved, and the thermal dimensional stability can be further improved.

In addition, the biaxially stretched polyethylene film 100 can also be obtained by separately molding the biaxially stretched film layer 101 and the surface resin layer 103 as necessary and laminating and heat-molding the biaxially stretched film layer 101 and the surface resin layer 103.

### <Use of biaxially stretched polyethylene film/packaging material/packaged article>

Specifically, the biaxially stretched polyethylene film 100 of the first embodiment can be suitably used as a packaging film.

In addition, the biaxially stretched polyethylene film 100 of the first embodiment can be suitably used as a packaging material.

When used as a packaging material, the packaging material may be formed using only the stretched polyethylene film 100 of the first embodiment, or other layers may be laminated to form a packaging material. The other layers preferably further include one or two or more selected from the group consisting of an inorganic layer, a base layer, a coating layer, an adhesive layer, and a heat seal layer, and more preferably further include one or two or more selected from the group consisting of an inorganic layer and a coating layer. From the viewpoint of ease of recycling, in a case where these layers are laminated, it is preferable that the layers are formed of a polyethylene-based resin.

In addition, the packaging material of the first embodiment can be suitably used for a packaged article. The packaged article is used for the purpose of packaging an article, and specifically includes the packaging material of the first embodiment and the article in the packaging material. Among these, the packaged article of the first embodiment can be suitably used as a food packaging, and is used for the purpose of packaging food, and specifically includes the packaging material of the first embodiment and the food in the packaging material.

The food packaged in the food packaging body is not limited, and examples thereof include baked confectionery, rice crackers, snack foods, furikake (seasoned powder for sprinkling over rice), and grain powder.

Depending on the use, only a part of the packaged article may be formed of the packaging material of the first embodiment, or substantially the entire packaged article may be formed of the packaging material of the first embodiment.

A method for manufacturing a packaged article from the biaxially stretched polyethylene film 100 or the packaging material is not particularly limited. A method known in the field of packaging material and the packaged body, such as heat sealing or fusing, can be appropriately used.

The biaxially stretched polyethylene film 100 according to the first embodiment is preferably used for a packaged article that requires good film formability and thermal dimensional stability. The form of the packaged article can be, for example, a gusseted bag or a standing pouch (pouch packaging).

In addition, in a case where a packaged article (such as a food packaging bag) is formed of the biaxially stretched polyethylene film 100 or the packaging material of the first embodiment, it is preferable that the corona-treated surface is on the inner surface side and the corona-untreated surface is on the outer surface side.

In addition, in a case where another layer is further laminated on the biaxially stretched polyethylene film 100 as described above, it is preferable to laminate the layer on the corona-treated surface side. That is, in a case where a laminate using the biaxially stretched polyethylene film 100 of the first embodiment is used for a packaged article (such as a food packaging bag), it is preferable that the biaxially stretched polyethylene film 100 of the first embodiment is the outermost layer of the packaged article.

Although the first embodiment of the present invention has been described above, these are examples of the first embodiment of the present invention, and various configurations other than the above can also be adopted. In addition, the present invention is not limited to the embodiments described above and modifications, improvements, and the like are included in the present invention in a range in which it is possible to achieve the object of the present invention.

### <<Second embodiment>>

Hereinafter, a biaxially stretched polyethylene film, a packaging material, and a packaged article according to a second embodiment of the present invention will be described.

### <Biaxially Stretched Polyethylene Film>

The biaxially stretched polyethylene film 100 of the second embodiment comprises a biaxially stretched film layer 101 containing an ethylene-based polymer (A), in which, when measured using thermomechanical analysis (TMA) with reference to JIS K 7197:2012 under conditions of a heating rate of 10°C/min, a tensile mode, a load of 10 g/4 mm, an initial distance between chucks of 8 mm, and a test piece width of 4 mm, an average linear expansion coefficient (α) in an MD direction, which is calculated by Expression (1) in a measurement temperature range of 20°C to 100°C, is 4.5 × 10-4 (1/°C) or less. 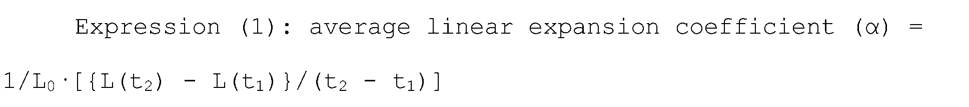 average linear expansion coefficient (α) = 1/L0·[{L(t2) - L(t1)}/(t2 - t1)]

In Expression (1), L₀, t₁, t₂, L(t₁), and L(t₂) are represented as follows.
L₀: initial distance between chucks of 8 mm
t₁: 20°C
t₂: 100°C
L(t₁): distance between chucks (mm) at a temperature t1
L(t₂): distance between chucks (mm) at a temperature t2

The present inventors have found that, in a case where the average linear expansion coefficient in the MD direction of the biaxially stretched polyethylene film 100, which is measured by thermomechanical analysis, is set to be equal to or less than a predetermined value, the biaxially stretched polyethylene film 100 is less likely to be stretched, and the heat fusion resistance can be improved.

In the biaxially stretched polyethylene film 100 of the second embodiment, in a case where a measurement is performed using thermomechanical analysis (TMA) with reference to JIS K 7197: 2012 under conditions of a heating rate of 10 °C/min, a tensile mode, a load of 10 g/4 mm, an initial distance between chucks of 8 mm, and a test piece width of 4 mm, an average linear expansion coefficient (α) in an MD direction, which is measured in a measurement temperature range of 20°C to 100°C, is 4.5 × 10⁻⁴ (1/°C) or less, preferably 4.0 × 10⁻⁴ (1/°C) or less, more preferably 3.5 × 10⁻⁴ (1/°C) or less, still more preferably 3.0 × 10⁻⁴ (1/°C) or less, even more preferably 2.5 × 10⁻⁴ (1/°C) or less, even still more preferably 2.0 × 10⁻⁴ (1/°C) or less, even further more preferably 1.8 × 10⁻⁴ (1/°C) or less, even further still more preferably 1.7 × 10⁻⁴ (1/°C) or less, and even further still more preferably 1.5 × 10⁻⁴ (1/°C) or less, and is preferably 5.0 × 10⁻⁵ (1/°C) or more, more preferably 7.0 × 10⁻⁵ (1/°C) or more, still more preferably 8.5 × 10⁻⁵ (1/°C) or more, even more preferably 1.0 × 10⁻⁴ (1/°C) or more, even still more preferably 1.1 × 10⁻⁴ (1/°C) or more, and even further still more preferably 1.2 × 10⁻⁴ (1/°C) or more.

In a case where the average linear expansion coefficient (α) in the MD direction of the biaxially stretched polyethylene film 100 is equal to or less than the above-described upper limit value, the biaxially stretched polyethylene film 100 is less likely to be stretched, and the heat fusion resistance can be improved. In addition, it is possible to suppress the stretching in the MD direction during processing such as printing, and to improve the processability such as printability, coating suitability, and deposition suitability. In addition, in a case where the average linear expansion coefficient (α) in the MD direction of the biaxially stretched polyethylene film 100 is equal to or more than the above-described lower limit value, the flexibility of the biaxially stretched polyethylene film 100 can be further improved.

In the biaxially stretched polyethylene film 100, in a case where a measurement is performed using thermomechanical analysis (TMA) with reference to JIS K 7197: 2012 under conditions of a temperature range of 20°C or higher and 100°C or lower, a heating rate of 10 °C/min, a tensile mode, a load of 10 g/4 mm, an initial distance between chucks of 8 mm, and a test piece width of 4 mm, from the viewpoint of further improving the heat fusion resistance, further suppressing the stretching in the MD direction during printing or coating processing, and further improving the processability, an elongation rate in the MD direction at 100°C is preferably 3.5% or less, more preferably 3.3% or less, still more preferably 3.0% or less, even more preferably 2.8% or less, even still more preferably 2.5% or less, even further more preferably 2.3% or less, even further still more preferably 2.0% or less, even further still more preferably 1.8% or less, and even further still more preferably 1.5% or less, and may be 0.1% or more, 0.3% or more, 0.5% or more, or 0.8% or more.

The average linear expansion coefficient (α) in the MD direction at 100°C of the biaxially stretched polyethylene film 100 and the elongation rate (%) in the MD direction at 100°C of the biaxially stretched polyethylene film 100 are measured by thermomechanical analysis (TMA) according to the following measurement conditions with reference to JIS K 7197: 2012.

### [Measurement conditions]

Measuring device: TMA Q400 (manufactured by TA Instruments)
Measurement mode: tensile mode
Test piece width: 4 mm
Initial distance between chucks: 8 mm
Measurement direction: MD direction
Load: 10 g/4 mm
Heating rate: 10 °C/min,
measurement temperature range: 20°C to 100°C

The average linear expansion coefficient (α) is calculated by the following expression (1). 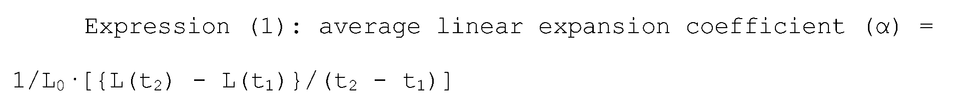 average linear expansion coefficient (α) = 1/L0·[{L(t2) - L(t1)}/(t2 - t1)]

In Expression (1), L₀, t₁, t₂, L(t₁), and L(t₂) are represented as follows.
L₀: initial distance between chucks of 8 mm
t₁: 20°C
t₂: 100°C
L(t₁): distance between chucks (mm) at a temperature t1
L(t₂): distance between chucks (mm) at a temperature t2

The elongation rate in the MD direction at 100°C is calculated by the following expression (2). 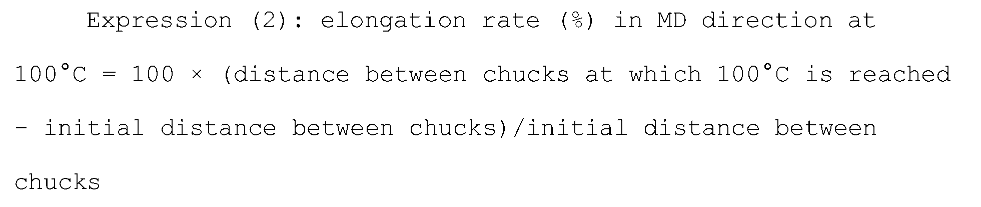 elongation rate (%) in MD direction at 100°C = 100 × (distance between chucks at which 100°C is reached - initial distance between chucks)/initial distance between chucks

A density of the biaxially stretched polyethylene film 100, which is measured in accordance with JIS K 7112:1999, is preferably 0.937 g/cm³ or more, more preferably 0.940 g/cm³ or more, still more preferably 0.943 g/cm³ or more, even more preferably 0.945 g/cm³ or more, even still more preferably 0.948 g/cm³ or more, and even further more preferably 0.950 g/cm³ or more, from the viewpoint of further improving the balance of various performances such as thermal dimensional stability, film formability, heat resistance, mechanical properties, rigidity, and the like, and is preferably 0.970 g/cm³ or less, more preferably 0.965 g/cm³ or less, still more preferably 0.963 g/cm³ or less, and even more preferably 0.960 g/cm³ or less, from the viewpoint of further improving the film formability.

From the viewpoint of further improving the balance of performances such as film formability, thermal dimensional stability, heat resistance, water vapor barrier properties, mechanical properties, rigidity, bag-making properties, and fluidity, the melting point of the biaxially stretched polyethylene film 100, which is measured by a differential scanning calorimeter (DSC), is preferably 70°C or higher, more preferably 75°C or higher, still more preferably 90°C or higher, even more preferably 95°C or higher, even still more preferably 100°C or higher, even further still more preferably 110°C or higher, even still more preferably 120°C or higher, and even still more preferably 125°C or higher, and is preferably 150°C or lower, more preferably 140°C or lower, still more preferably 135°C or lower, and even still more preferably 134°C or lower.

From the viewpoint of further improving the balance of performances of fluidity, film formability, and thermal dimensional stability, the melt mass flow rate (MFR) of the biaxially stretched polyethylene film 100, which is measured in accordance with JIS K 7210:1999 under the conditions of 190°C and a load of 2,160 g, is preferably 0.1 g/10 min or more, more preferably 0.2 g/10 min or more, still more preferably 0.3 g/10 min or more, even still more preferably 0.5 g/10 min or more, and even still more preferably 0.8 g/10 min or more, and from the viewpoint of further improving the balance of performances of film formability and thermal dimensional stability and further improving the rigidity of the biaxially stretched polyethylene film 100, the melt mass flow rate is preferably 5.0 g/10 min or less, more preferably 4.5 g/10 min or less, still more preferably 4.0 g/10 min or less, even still more preferably 3.5 g/10 min or less, even still more preferably 3.0 g/10 min or less, even still more preferably 2.5 g/10 min or less, and even still more preferably 2.0 g/10 min or less.

From the viewpoint of further improving the performance balance of thermal dimensional stability, film formability, water vapor barrier properties, cost, mechanical properties, transparency, bag-making properties, handleability, appearance, lightweight properties, and the like, the thickness of the biaxially stretched polyethylene film 100 is preferably equal to or more than 5 µm, more preferably equal to or more than 10 µm, still more preferably equal to or more than 12 µm, and even still more preferably equal to or more than 15 µm, and is preferably equal to or less than 100 µm, more preferably equal to or less than 50 µm, still more preferably equal to or less than 40 µm, even still more preferably equal to or less than 30 µm, and even still more preferably equal to or less than 25 µm.

Hereinafter, the physical properties of the biaxially stretched polyethylene film 100 will be described.

The total value (T₁ + T₂) of the tensile modulus T₁ in the MD direction and the tensile modulus T₂ in the TD direction of the biaxially stretched polyethylene film 100, which is measured using a tensile tester under conditions of a measurement temperature of 23 ± 2°C, a relative humidity of 50 ± 5% RH, and a tensile speed of 5 mm/min in accordance with JIS K7127:1999, is preferably 2500 MPa or more, more preferably 3000 MPa or more, still more preferably 3500 MPa or more, even still more preferably 4000 MPa or more, even further still more preferably 4500 MPa or more, and is preferably 9000 MPa or less, more preferably 8000 MPa or less, still more preferably 7000 MPa or less, even still more preferably 6500 MPa or less, and even further still more preferably 6000 MPa or less.

In a case where the total value (T₁ + T₂) of the tensile modulus T₁ in the MD direction and the tensile modulus T₂ of the biaxially stretched polyethylene film in the TD direction 100 is equal to or more than the above-described lower limit value, it is possible to further improve the balance of performances such as thermal dimensional stability, film formability, water vapor barrier properties, mechanical properties, transparency, bag-making properties, and handleability of the biaxially stretched polyethylene film 100, and it is possible to further improve the rigidity of the biaxially stretched polyethylene film 100.

In addition, in a case where the total value (T₁ + T₂) of the tensile modulus T₁ in the MD direction and the tensile modulus T₂ in the TD direction is equal to or less than the above-described upper limit value, troubles such as cutting are less likely to occur during the molding of the biaxially stretched polyethylene film 100, continuous stretching and forming of the film is facilitated, and industrial continuous productivity can be further improved.

Such a tensile modulus is a substitute value for quantitatively measuring the rigidity of the film, and can be adjusted, for example, by adjusting the kind and the content ratio of the ethylene-based polymer contained in the biaxially stretched film layer 101, the thickness and the stretching ratio of the biaxially stretched film layer 101, the constituent material and the thickness of the surface resin layer 103, and the like.

In addition, from the viewpoint of further improving the performance balance of the biaxially stretched polyethylene film 100 in terms of thermal dimensional stability, film formability, water vapor barrier properties, mechanical properties, transparency, bag-making properties, handleability, and packaging suitability, the tensile modulus T₁ of the biaxially stretched polyethylene film 100 in the MD direction is preferably 800 MPa or more, more preferably 1000 MPa or more, still more preferably 1100 MPa or more, even still more preferably 1300 MPa or more, even further still more preferably 1500 MPa or more, even further still more preferably 1800 MPa or more, even further still more preferably 2000 MPa or more, and from the viewpoint of further improving the performance balance of the biaxially stretched polyethylene film 100 in terms of thermal dimensional stability, antistatic properties, bag-making properties, and packaging suitability, the tensile modulus T₁ is preferably 4000 MPa or less, more preferably 3500 MPa or less, still more preferably 3000 MPa or less, even still more preferably 2500 MPa or less, and even further still more preferably 2300 MPa or less.

In addition, from the viewpoint of further improving the performance balance of the biaxially stretched polyethylene film 100 in terms of thermal dimensional stability, film formability, water vapor barrier properties, mechanical properties, transparency, bag-making properties, handleability, and packaging suitability, the tensile modulus T₂ of the biaxially stretched polyethylene film 100 in the TD direction is preferably 1000 MPa or more, more preferably 1300 MPa or more, still more preferably 1500 MPa or more, even still more preferably 1800 MPa or more, even further still more preferably 2000 MPa or more, even further still more preferably 2500 MPa or more, and even further still more preferably 2800 MPa or more, and from the viewpoint of further improving the performance balance of the biaxially stretched polyethylene film 100 in terms of thermal dimensional stability, antistatic properties, bag-making properties, and packaging suitability, the tensile modulus T₂ is preferably 5000 MPa or less, more preferably 4500 MPa or less, still more preferably 4000 MPa or less, and even still more preferably 3500 MPa or less.

From the viewpoint of further improving the balance of performances of thermal dimensional stability and bag-making properties, the thermal shrinkage rate X_{MD100} of the biaxially stretched polyethylene film 100 in the MD direction in a case of being subjected to a heat treatment at 100°C for 15 minutes, which is measured in accordance with JIS C 2151: 2019, is preferably 4.0% or less, more preferably 3.8% or less, still more preferably 3.5% or less, even still more preferably 3.0% or less, even still more preferably 2.8% or less, even still more preferably 2.5% or less, and even still more preferably 2.0% or less, and may be 0.1% or more, 0.5% or more, or 1.0% or more.

Here, in general, the roll of the biaxially stretched polyethylene film 100 is fed out in the MD direction, and bag-making processing, coating, vapor deposition, and the like are performed while applying tension. That is, since tension is applied in the MD direction, in a case where the heat resistance of the film is low during heating, the film is likely to be thermal-elongated in the MD direction. On the other hand, in a case where the thermal shrinkage rate in the MD direction in a case of being subjected to a heat treatment at 100°C for 15 minutes is within the above-described range, it is possible to further suppress the thermal expansion in the MD direction in a case where the biaxially stretched polyethylene film is heated.

From the viewpoint of further improving the balance of performances of thermal dimensional stability and bag-making properties, the thermal shrinkage rate X_{TD100} of the biaxially stretched polyethylene film 100 in the TD direction in a case of being subjected to a heat treatment at 100°C for 15 minutes, which is measured in accordance with JIS C 2151: 2019, is preferably 7.0% or less, more preferably 6.0% or less, still more preferably 5.0% or less, even still more preferably 4.5% or less, even still more preferably 4.0% or less, even still more preferably 3.8% or less, even still more preferably 3.5% or less, even still more preferably 3.0% or less, even still more preferably 2.8% or less, even still more preferably 2.5% or less, even still more preferably 2.0% or less, and even still more preferably 1.5% or less, and may be 0.01% or more, 0.02% or more, 0.05% or more, or 0.1% or more.

In addition, the thermal shrinkage rates X_{MD100} [%] and X_{TD100} [%] of the biaxially stretched polyethylene film 100 in a case of being subjected to a heat treatment at 100°C for 15 minutes are calculated by the following method.

First, a test piece having a size of 10 cm × 10 cm is cut out from the biaxially stretched polyethylene film 100, and this test piece is subjected to a heat treatment at 100°C for 15 minutes. Next, in a case where the length of the test piece in the MD direction after the heat treatment is denoted by MD₁₀₀ [cm] and the length of the test piece in the TD direction after the heat treatment is denoted by TD₁₀₀ [cm], X_{MD100} [%] is calculated by 100 × (10 - MD₁₀₀)/10, and X_{TD100} [%] is calculated by 100 × (10 - TD₁₀₀)/10.

From the viewpoint of further improving thermal dimensional stability and bag-making properties, the thermal shrinkage rate X_{MD120} of the biaxially stretched polyethylene film 100 in the MD direction in a case of being subjected to a heat treatment at 120°C for 15 minutes, which is measured in accordance with JIS C 2151: 2019, is preferably 9.0% or less, more preferably 8.5% or less, still more preferably 8.0% or less, even still more preferably 7.5% or less, and even still more preferably 7.0% or less, and may be 0.1% or more, 0.5% or more, 1.0% or more, or 3.0% or more.

From the viewpoint of further improving thermal dimensional stability and bag-making properties, the thermal shrinkage rate X_{TD120} of the biaxially stretched polyethylene film 100 in the TD direction in a case of being subjected to a heat treatment at 120°C for 15 minutes, which is measured in accordance with JIS C 2151: 2019, is preferably 30.0% or less, more preferably 25.0% or less, still more preferably 20.0% or less, even still more preferably 15.0% or less, even still more preferably 13.0% or less, even still more preferably 10.0% or less, even still more preferably 8.0% or less, and even still more preferably 5.0% or less, and may be 0.1% or more, 0.5% or more, or 1.0% or more.

In addition, the thermal shrinkage rates X_{MD120} [%] and X_{TD120} [%] of the biaxially stretched polyethylene film 100 in a case of being subjected to a heat treatment at 120°C for 15 minutes can be measured in the same manner as in the measurement of the thermal shrinkage rates X_{MD100} [%] and X_{TD100} [%] of the biaxially stretched polyethylene film 100 in a case of being subjected to a heat treatment at 100°C for 15 minutes, except that the heating temperature is set to 120°C. Specifically, the description is provided in the section of Examples.

From the viewpoint of further improving water vapor barrier properties, the moisture permeability of the biaxially stretched polyethylene film 100, which is measured in accordance with JIS Z 0208: 1976, is preferably 12.0 g/(m²·day) or less, more preferably 11.5 g/(m²·day) or less, still more preferably 11.0 g/(m²·day) or less, even still more preferably 10.5 g/(m²·day) or less, even still more preferably 10.0 g/(m²·day) or less, even still more preferably 9.0 g/(m²·day) or less, even still more preferably 7.5 g/(m²·day) or less, even still more preferably 7.0 g/(m²·day) or less, even still more preferably 6.5 g/(m²·day) or less, and even still more preferably 6.0 g/(m²·day) or less, and may be 0.01 g/(m²·day) or more, 0.1 g/(m²·day) or more, 0.5 g/(m²·day) or more, 1.0 g/(m²·day) or more, or 3.0 g/(m²·day) or more.

From the viewpoint of further improving mechanical strength such as toughness, the total of the breaking stress in the TD direction and the breaking stress in the MD direction of the biaxially stretched polyethylene film 100, which are measured in accordance with JIS K 7127:1999, is preferably 210 MPa or more, more preferably 220 MPa or more, still more preferably 230 MPa or more, even still more preferably 250 MPa or more, even still more preferably 280 MPa or more, and even still more preferably 300 MPa or more, and may be 600 MPa or less, 500 MPa or less, or 450 MPa or less.

From the viewpoint of further improving mechanical strength such as toughness, the breaking stress in the MD direction of the biaxially stretched polyethylene film 100, which is measured in accordance with JIS K 7127:1999, is preferably 50 MPa or more, more preferably 60 MPa or more, still more preferably 70 MPa or more, even still more preferably 80 MPa or more, and even still more preferably 90 MPa or more, and may be 300 MPa or less, 200 MPa or less, or 150 MPa or less.

From the viewpoint of further improving mechanical strength such as toughness, the breaking stress of the biaxially stretched polyethylene film in the TD direction 100, which is measured in accordance with JIS K 7127:1999, is preferably 70 MPa or more, more preferably 90 MPa or more, still more preferably 100 MPa or more, even still more preferably 120 MPa or more, even still more preferably 150 MPa or more, and even still more preferably 180 MPa or more, and may be 500 MPa or less, 400 MPa or less, 350 MPa or less, or 330 MPa or less.

In the biaxially stretched polyethylene film 100, the heat fusion strength at 130°C is preferably 1.0 N/15 mm or less, more preferably 0.8 N/15 mm or less, still more preferably 0.5 N/15 mm or less, even more preferably 0.4 N/15 mm or less, and even still more preferably 0.3 N/15 mm or less, and may be, for example, 0.0 N/15 mm or more, and is preferably 0.0 N/15 mm.

In the biaxially stretched polyethylene film 100, in a case where the heat fusion strength at 130°C is equal to or less than the above-described upper limit value, the heat resistance is further improved, and the crystallinity of the film is further improved, whereby the water vapor barrier properties are further improved.

In the biaxially stretched polyethylene film 100, the heat fusion strength at 135°C is preferably 1.5 N/15 mm or less, more preferably 1.3 N/15 mm or less, still more preferably 1.0 N/15 mm or less, even more preferably 0.8 N/15 mm or less, even still more preferably 0.5 N/15 mm or less, and even further more preferably 0.3 N/15 mm or less, and may be, for example, 0.0 N/15 mm or more, and is preferably 0.0 N/15 mm.

In the biaxially stretched polyethylene film 100, in a case where the heat fusion strength at 135°C is equal to or less than the above-described upper limit value, the heat resistance is further improved, and the crystallinity of the film is further improved, whereby the water vapor barrier properties are further improved.

In the biaxially stretched polyethylene film 100, the heat fusion strength at 140°C is preferably 5.5 N/15 mm or less, more preferably 5.3 N/15 mm or less, still more preferably 5.0 N/15 mm or less, even more preferably 4.5 N/15 mm or less, even still more preferably 4.0 N/15 mm or less, even further more preferably 3.0 N/15 mm or less, even yet further more preferably 2.0 N/15 mm or less, even yet further still more preferably 1.0 N/15 mm or less, even yet further still more preferably 0.8 N/15 mm or less, even yet further still more preferably 0.5 N/15 mm or less, and even yet further still more preferably 0.3 N/15 mm or less, and may be, for example, 0.0 N/15 mm or more, and is preferably 0.0 N/15 mm.

In the biaxially stretched polyethylene film 100, in a case where the heat fusion strength at 140°C is equal to or less than the above-described upper limit value, the heat resistance is further improved, and the crystallinity of the film is further improved, whereby the water vapor barrier properties are further improved.

In the biaxially stretched polyethylene film 100 of the second embodiment, the heat fusion strength is measured as follows.

Two biaxially stretched polyethylene films cut to a width of 15 mm are bonded to each other, and sandwiched between biaxially stretched polyethylene terephthalate films having a thickness of 12 µm, and using a heat seal tester, the biaxially stretched polyethylene films are heat-fused under conditions of a pressure of 2.0 kgf/cm² and a sealing time of 1.0 second at each of temperatures of 110°C, 120°C, 125°C, 130°C, 135°C, 140°C, and 150°C to obtain a laminated film, and then the two biaxially stretched polyethylene films are peeled off under conditions of 90° peeling, a peeling speed of 300 mm/min, and tension in the MD direction, and the peeling strength at this time is defined as the heat fusion strength (N/15 mm).

Hereinafter, each layer constituting the biaxially stretched polyethylene film 100 will be described.

### [Biaxially stretched film layer]

The biaxially stretched film layer 101 contains an ethylene-based polymer.

The biaxially stretched film layer 101 is formed by biaxially stretching a film formed of an ethylene-based polymer composition containing an ethylene-based polymer (A).

### (Ethylene-Based Polymer (A))

From the viewpoint of further improving the balance of various performances such as thermal dimensional stability, film formability, heat resistance, mechanical properties, rigidity, and transparency, when the total of the ethylene-based polymer composition, that is, the total of the biaxially stretched film layer 101 is set to 100% by mass, the content of the ethylene-based polymer (A) in the ethylene-based polymer composition, that is, in the biaxially stretched film layer 101 is preferably 80% by mass or more, more preferably 85% by mass or more, still more preferably 90% by mass or more, even still more preferably 95% by mass or more, even still more preferably 97% by mass or more, and even still more preferably 99% by mass or more, and from the viewpoint of further improving the performance balance of processability and continuous productivity, the content is preferably 100% by mass or less.

The ethylene-based polymer (A) of the second embodiment preferably contains one or two or more selected from the group consisting of low-density polyethylene (LDPE), linear low-density polyethylene (LLDPE), medium-density polyethylene (MDPE), and high-density polyethylene (HDPE), and from the viewpoint of further improving the balance of various performances such as thermal dimensional stability, film formability, heat resistance, water vapor barrier properties, mechanical properties, and rigidity, the ethylene-based polymer (A) more preferably contains one or two or more selected from the group consisting of low-density polyethylene (LDPE), linear low-density polyethylene (LLDPE), and high-density polyethylene (HDPE), and still more preferably contains high-density polyethylene (HDPE).

Here, the low-density polyethylene (LDPE) represents polyethylene having a density of 0.910 g/cm³ or more and less than 0.930 g/cm³, the medium-density polyethylene (MDPE) represents polyethylene having a density of 0.930 g/cm³ or more and less than 0.942 g/cm³, and the high-density polyethylene (HDPE) represents polyethylene having a density of 0.942 g/cm³ or more. In addition, low-density polyethylene having little branched structure is represented by linear low-density polyethylene (LLDPE).

From the viewpoint of further improving the balance of various performances such as thermal dimensional stability, film formability, heat resistance, mechanical properties, and rigidity, when the total of the ethylene-based polymer composition, that is, the total of the biaxially stretched film layer 101 is set to 100% by mass, the content of the high-density polyethylene in the ethylene-based polymer composition, that is, in the biaxially stretched film layer 101 is preferably 60% by mass or more, more preferably 65% by mass or more, still more preferably 70% by mass or more, even still more preferably 75% by mass or more, even still more preferably 80% by mass or more, and even still more preferably 85% by mass or more, and from the viewpoint of further improving the performance balance of processability and continuous productivity, the content is preferably 100% by mass or less, and more preferably 95% by mass or less.

From the viewpoint of further improving the balance of various performances such as thermal dimensional stability, film formability, heat resistance, mechanical properties, and rigidity, the density of the ethylene-based polymer (A), which is measured in accordance with JIS K 7112:1999, is preferably 0.937 g/cm³ or more, more preferably 0.940 g/cm³ or more, still more preferably 0.943 g/cm³ or more, even more preferably 0.945 g/cm³ or more, even still more preferably 0.948 g/cm³ or more, even further more preferably 0.950 g/cm³ or more, and from the viewpoint of further improving the film formability, the density is preferably 0.970 g/cm³ or less, more preferably 0.965 g/cm³ or less, still more preferably 0.963 g/cm³ or less, yet still more preferably 0.960 g/cm³ or less.

In a case where two or more kinds of polymers are used as the ethylene-based polymer, the density of a mixture obtained by melt-blending two or more kinds of ethylene-based polymers by a known method can be adopted.

From the viewpoint of further improving the performance balance of fluidity, film formability, and thermal dimensional stability, the melt mass flow rate (MFR) of the ethylene-based polymer (A) measured under the conditions of 190°C and a load of 2160 g in accordance with JIS K 7210:1999 is preferably 0.1 g/10 min or more, more preferably 0.2 g/10 min or more, still more preferably 0.3 g/10 min or more, even still more preferably 0.5 g/10 min or more, and even still more preferably 0.8 g/10 min or more, and from the viewpoint of further improving the performance balance of film formability and thermal dimensional stability and further improving the rigidity of the biaxially stretched polyethylene film 100, the MFR is preferably 5.0 g/10 min or less, more preferably 4.5 g/10 min or less, still more preferably 4.0 g/10 min or less, even still more preferably 3.5 g/10 min or less, even still more preferably 3.0 g/10 min or less, even still more preferably 2.5 g/10 min or less, and even still more preferably 2.0 g/10 min or less.

In a case where two or more kinds of polymers are used as the ethylene-based polymer (A), the MFR of a mixture obtained by melt-blending two or more kinds of polymers by a known method can be adopted.

From the viewpoint of further improving the performance balance of film formability, thermal dimensional stability, heat resistance, water vapor barrier properties, mechanical properties, rigidity, bag-making properties, fluidity, and the like, the melting point of the ethylene-based polymer (A) measured by a differential scanning calorimeter (DSC) is preferably 70°C or higher, more preferably 75°C or higher, still more preferably 90°C or higher, even more preferably 95°C or higher, even still more preferably 100°C or higher, even further still more preferably 110°C or higher, even still more preferably 120°C or higher, and even still more preferably 125°C or higher, and is preferably 150°C or lower, more preferably 140°C or lower, still more preferably 135°C or lower, and even still more preferably 134°C or lower.

In a case where two or more kinds of polymers are used as the ethylene-based polymer, the melting point of the ethylene-based polymer (A) is the peak temperature of the maximum endothermic peak.

In addition, the ethylene-based polymer (A) of the second embodiment may further contain one or two or more selected from the group consisting of an α-olefin copolymer (here, an ethylene-α-olefin copolymer is excluded) and an ethylene-α-olefin copolymer, in addition to the above-described polyethylene, and it is more preferable to contain an ethylene-α-olefin copolymer. From the viewpoint of further improving the performance balance of thermal dimensional stability, film formability, and flexibility, the ethylene-α-olefin copolymer preferably includes one or two or more selected from the group consisting of an ethylene/1-butene random copolymer and an ethylene/propylene random copolymer, and more preferably includes an ethylene/1-butene random copolymer. The α-olefin copolymer includes one or two or more selected from the group consisting of a propylene/ethylene random copolymer and a 1-butene/propylene random copolymer.

From the viewpoint of further improving the performance balance of thermal dimensional stability, film formability, and flexibility, the density of the ethylene-α-olefin copolymer measured in accordance with JIS K 7112:1999 is preferably 0.860 g/cm³ or more, more preferably 0.870 g/cm³ or more, still more preferably 0.880 g/cm³ or more, and even still more preferably 0.890 g/cm³ or more, and is preferably 0.920 g/cm³ or less, more preferably 0.910 g/cm³ or less, and still more preferably 0.900 g/cm³ or less.

From the viewpoint of further improving the performance balance of fluidity, film formability, and thermal dimensional stability, the melt mass flow rate (MFR) of the ethylene-α-olefin copolymer measured under the conditions of 190°C and a load of 2160 g in accordance with JIS K 7210:1999 is preferably 0.1 g/10 min or more, more preferably 0.2 g/10 min or more, still more preferably 0.3 g/10 min or more, even still more preferably 0.5 g/10 min or more, and even still more preferably 1.0 g/10 min or more, and from the viewpoint of further improving the performance balance of film formability and thermal dimensional stability and further improving the rigidity of the biaxially stretched polyethylene film 100, the MFR is preferably 5.0 g/10 min or less, more preferably 4.5 g/10 min or less, and still more preferably 4.0 g/10 min or less.

From the viewpoint of further improving the performance balance of film formability, thermal dimensional stability, heat resistance, water vapor barrier properties, mechanical properties, rigidity, bag-making properties, fluidity, and the like, the melting point of the ethylene-α-olefin copolymer measured by a differential scanning calorimeter (DSC) is preferably 40°C or higher, more preferably 50°C or higher, still more preferably 60°C or higher, and even still more preferably 70°C or higher, and is preferably 120°C or lower, more preferably 110°C or lower, still more preferably 100°C or lower, even still more preferably 90°C or lower, and even still more preferably 80°C or lower.

In a case where the total of the biaxially stretched film layer is set to 100% by mass, the content of the ethylene-α-olefin copolymer in the biaxially stretched film layer 101 is preferably 5% by mass or more, more preferably 8% by mass or more, and is preferably 40% by mass or less, more preferably 35% by mass or less, still more preferably 30% by mass or less, even still more preferably 25% by mass or less, even still more preferably 20% by mass or less, and even still more preferably 15% by mass or less.

### (Other Components)

As necessary, various additives such as a tackifier, a heat stabilizer, a weathering stabilizer, an antioxidant, an ultraviolet absorber, a lubricant, a slip agent, a nucleating agent, an anti-blocking agent, an antistatic agent, an antifogging agent, a pigment, a dye, and an inorganic or organic filler may be added to the ethylene-based polymer composition constituting the biaxially stretched film layer 101 within a range not impairing the object of the second embodiment.

### (Method for Preparing Ethylene-Based Polymer Composition)

The ethylene-based polymer composition can be prepared, for example, by mixing or melt-kneading each component by dry blending, a tumbler mixer, a banbury mixer, a single-screw extruder, a twin-screw extruder, a high-speed twin-screw extruder, a heat roll, or the like.

The biaxially stretched film layer 101 may be a single layer or may have a configuration in which a plurality of layers formed of an ethylene-based polymer composition are laminated, but it is necessary that the biaxially stretched film layer 101 is formed by biaxial stretching.

From the viewpoint of further improving the performance balance of the biaxially stretched polyethylene film 100 in terms of thermal dimensional stability, film formability, water vapor barrier properties, cost, mechanical properties, transparency, bag-making properties, handleability, appearance, lightweight properties, and the like, the thickness of the biaxially stretched film layer 101 is preferably equal to or more than 5 µm, more preferably equal to or more than 10 µm, still more preferably equal to or more than 12 µm, and even still more preferably equal to or more than 15 µm, and is preferably equal to or less than 100 µm, more preferably equal to or less than 50 µm, still more preferably equal to or less than 40 µm, even still more preferably equal to or less than 30 µm, and even still more preferably equal to or less than 20 µm.

In the biaxially stretched polyethylene film 100, the proportion of the thickness of the biaxially stretched film layer 101 to the total thickness of the biaxially stretched polyethylene film 100 is preferably equal to or more than 50%, more preferably equal to or more than 60%, still more preferably equal to or more than 70%, and even still more preferably equal to or more than 75%, and is preferably equal to or less than 100%, more preferably equal to or less than 99%, still more preferably equal to or less than 95%, and even still more preferably equal to or less than 90%.

### [Surface Resin Layer]

From the viewpoint of imparting functions such as heat fusion resistance, heat sealability, antistatic properties, blocking resistance, printing suitability, and slip properties to the film surface, the biaxially stretched polyethylene film 100 preferably further includes a surface resin layer 103 on at least one surface of the biaxially stretched film layer 101, depending on the purpose.

The surface resin layer 103 may be provided on both surfaces of the biaxially stretched film layer 101. By providing the surface resin layer 103 on both surfaces of the biaxially stretched film layer 101, different functions can be imparted to each surface of the film.

In a case where the surface resin layer 103 is provided on both surfaces of the biaxially stretched film layer 101, it is preferable that the surface resin layer 103 on one surface has heat sealability. By folding the biaxially stretched polyethylene film 100 with this surface facing inward and heat-sealing the end part, a bag shape can be obtained. In addition, it is preferable that the surface resin layer 103 on the other surface has blocking resistance, antistatic properties, printability, and the like.

In addition, depending on the purpose, from the viewpoint of further improving the functions of the biaxially stretched polyethylene film 100 such as heat fusion resistance, heat sealability, antistatic properties, blocking resistance, printability, and slip properties, it is preferable that the surface resin layer 103 is provided on the outermost layer of the biaxially stretched polyethylene film 100.

It is preferable that the surface resin layer 103 is provided to be in direct contact with the surface of the biaxially stretched film layer 101. As a result, the manufacturing process of the biaxially stretched polyethylene film 100 can be simplified.

In the biaxially stretched polyethylene film 100, from the viewpoint of further improving the performance balance of the film formability, thermal dimensional stability, water vapor barrier properties, mechanical properties, bag-making properties, handleability, and packaging suitability of the biaxially stretched polyethylene film 100, the thickness of the surface resin layer 103 is preferably 0.1 µm or more, more preferably 0.2 µm or more, still more preferably 0.5 µm or more, even more preferably 1.0 µm or more, and even still more preferably 1.5 µm or more, and from the viewpoint of further improving the performance balance of the film formability, thermal dimensional stability, water vapor barrier properties, mechanical properties, bag-making properties, handleability, packaging suitability, cost, environmental compatibility, lightweight properties, and the like of the biaxially stretched polyethylene film 100, the thickness of the surface resin layer 103 is preferably 10 µm or less, more preferably 8 µm or less, still more preferably 6 µm or less, even more preferably 5 µm or less, and even still more preferably 3 µm or less.

Here, the thickness of the surface resin layer 103 refers to the thickness of the surface resin layer 103 provided on one surface of the biaxially stretched film layer 101. That is, in the present embodiment, in a case where the surface resin layer 103 is provided on both surfaces of the biaxially stretched film layer 101, the above-described thickness of the surface resin layer 103 indicates the thickness of the surface resin layer 103 provided on one surface of the biaxially stretched film layer 101.

In the biaxially stretched polyethylene film 100, it is preferable that the surface resin layer 103 is a single layer. As a result, the manufacturing process of the biaxially stretched polyethylene film 100 can be further simplified.

The surface resin layer 103 is preferably formed by being biaxially stretched at the same time as the film in a state before the biaxial stretching of the biaxially stretched film layer 101. As a result, since the biaxially stretched polyethylene film 100 can be produced using a molding method such as a co-extrusion molding method, that is, a laminated film produced by one-time molding, the manufacturing process of the biaxially stretched polyethylene film 100 can be further simplified. Therefore, the surface resin layer 103 is preferably biaxially stretched.

In addition, the surface resin layer 103 may be subjected to a surface treatment from the viewpoint of further improving the performance balance of the printing suitability and the blocking resistance of the biaxially stretched polyethylene film 100. Specifically, a surface activation treatment such as a corona treatment, a flame treatment, a plasma treatment, a primer coating treatment, or an ozone treatment may be performed.

The surface resin layer 103 is composed of, for example, a polyolefin-based resin composition (A) containing a polyolefin. The polyolefin constituting the surface resin layer 103 includes, for example, one or more selected from the group consisting of a homopolymer or copolymer of α-olefins such as ethylene, propylene, 1-butene, hexene-1, 4-methyl-pentene-1, and 1-octene; low-density polyethylene by a high pressure method; linear low-density polyethylene (LLDPE); high-density polyethylene; homopolypropylene; a random copolymer of propylene and an α-olefin having 2 to 10 carbon atoms; an ethylene-vinyl acetate copolymer (EVA); and an ionomer resin.

Among these, as the polyolefin constituting the surface resin layer 103, from the viewpoint of further improving the performance balance of the film formability, thermal dimensional stability, heat fusion resistance, heat resistance, water vapor barrier properties, transparency, mechanical properties, rigidity, bag-making properties, fluidity, and the like of the biaxially stretched polyethylene film 100, an ethylene-based polymer is preferable. Here, the preferred aspect of the ethylene-based polymer constituting the surface resin layer 103 is the same as that of the ethylene-based polymer described above. That is, the ethylene-based polymer constituting the surface resin layer 103 preferably includes the ethylene-based polymer (A) described above.

In addition, in a case where the surface resin layer 103 is provided on both surfaces of the biaxially stretched film, the polyolefin-based resin compositions constituting the respective surface resin layers 103 may be the same or different from each other.

From the viewpoint of further improving the performance balance of the film formability, thermal dimensional stability, heat fusion resistance, heat resistance, water vapor barrier properties, transparency, mechanical properties, rigidity, bag-making properties, fluidity, and the like of the biaxially stretched polyethylene film 100, in a case where the entire polyolefin-based resin composition (A), that is, the entire surface resin layer 103 is set to 100% by mass, the content of the polyolefin in the polyolefin-based resin composition (A), that is, in the surface resin layer 103 is preferably equal to or more than 75% by mass, more preferably equal to or more than 80% by mass, still more preferably equal to or more than 90% by mass, even still more preferably equal to or more than 95% by mass, even still more preferably equal to or more than 98% by mass, and even still more preferably equal to or more than 99% by mass, and is preferably equal to or less than 100% by mass.

From the viewpoint of further improving the performance balance of the film formability, thermal dimensional stability, heat fusion resistance, heat resistance, water vapor barrier properties, transparency, mechanical properties, rigidity, bag-making properties, fluidity, and the like of the biaxially stretched polyethylene film 100, the content of the ethylene-based polymer in the polyolefin-based resin composition, that is, in the surface resin layer 103 is preferably 75% by mass or more, more preferably 80% by mass or more, still more preferably 90% by mass or more, even more preferably 95% by mass or more, even still more preferably 98% by mass or more, and even still more preferably 99% by mass or more, and is preferably 100% by mass or less, in a case where the total of the polyolefin-based resin composition, that is, the total of the surface resin layer 103 is set to 100% by mass.

### (Other Components)

Various additives such as a tackifier, a heat-resistant stabilizer, a weather-resistant stabilizer, an antioxidant, an ultraviolet absorber, a lubricant, a slip agent, a nucleating agent, an antiblocking agent, an antistatic agent, an antifogging agent, a pigment, a dye, and an inorganic or organic filler may be added as necessary to the polyolefin-based resin composition constituting the surface resin layer 103 as long as the object of the second embodiment is not impaired.

### (Method for Preparing Polyolefin-Based Resin Composition)

The polyolefin-based resin composition can be prepared by mixing or melt-kneading, for example, the respective components by dry blending, a tumbler mixer, a Banbury mixer, a single-screw extruder, a twin-screw extruder, a high-speed twin-screw extruder, a heat roll, or the like.

### <Method for Producing Biaxially Stretched Polyethylene Film>

The biaxially stretched polyethylene film 100 can be obtained, for example, by biaxially stretching a film obtained by co-extrusion-molding an ethylene-based polymer composition for forming the biaxially stretched film layer 101 in a film shape using a biaxially stretched film production method such as a known simultaneous biaxial stretching method, a sequential biaxial stretching method, or an inflation biaxial stretching method.

The molding device and the molding conditions are not particularly limited, and a molding device and molding conditions known in the related art can be adopted. As the molding device, a T-die extruder, a multilayer T-die extruder, an inflation molding machine, a multilayer inflation molding machine, or the like can be used. The biaxial stretching conditions can be, for example, known polyethylene film production conditions. For example, in the sequential biaxial stretching method, the stretching temperature in the MD direction may be set to preferably in a range of 100°C to 145°C, more preferably in a range of 110°C to 140°C, and still more preferably in a range of 120°C to 135°C, and the stretching temperature in the TD direction may be set to preferably in a range of 110°C to 190°C and more preferably in a range of 120°C to 170°C. In addition, the stretching ratio in the MD direction may be set to preferably in a range of 4.5 to 7 times, and the stretching ratio in the TD direction may be set to preferably in a range of 9 to 11 times.

Here, specifically, it is necessary to set the stretching temperature to three stages of a preheating temperature (temperature for heating the film raw material before stretching)/a stretching temperature (temperature during stretching)/a heat setting temperature (temperature during heat setting (annealing) after stretching), and the temperature can be set to the above-described range from preheating to heat setting. That is, the temperature can be set to the same level as the stretching and the heat setting from the preheating stage. Since the biaxially stretched polyethylene film 100 of the second embodiment contains the ethylene-based polymer (A), the biaxially stretched polyethylene film 100 can be processed at a higher temperature, the heat resistance of the obtained biaxially stretched polyethylene film 100 can be further improved, and the thermal dimensional stability can be further improved.

In addition, the biaxially stretched polyethylene film 100 can also be obtained by separately molding the biaxially stretched film layer 101 and the surface resin layer 103 as necessary and laminating and heat-molding the biaxially stretched film layer 101 and the surface resin layer 103.

### <Use of biaxially stretched polyethylene film/packaging material/packaged article>

Specifically, the biaxially stretched polyethylene film 100 of the second embodiment can be suitably used as a packaging film.

In addition, the biaxially stretched polyethylene film 100 of the second embodiment can be suitably used as a packaging material.

In a case of being used as a packaging material, only the biaxially stretched polyethylene film 100 of the second embodiment may be used as the packaging material, or other layers may be laminated to form the packaging material. The other layers preferably further include one or two or more selected from the group consisting of an inorganic layer, a base layer, a coating layer, an adhesive layer, and a heat seal layer, and more preferably further include one or two or more selected from the group consisting of an inorganic layer and a coating layer. From the viewpoint of ease of recycling, in a case where these layers are laminated, it is preferable that the layers are formed of a polyethylene-based resin.

In addition, the packaging material of the second embodiment can be suitably used for a packaged article. The packaged article is used for the purpose of packaging an article, and specifically includes the packaging material of the second embodiment and an article in the packaging material. Among these, the packaged article of the second embodiment can be suitably used as a food packaged article, and is used for the purpose of packaging food, and specifically includes the packaging material of the second embodiment and food in the packaging material.

The food packaged in the food packaging body is not limited, and examples thereof include baked confectionery, rice crackers, snack foods, furikake (seasoned powder for sprinkling over rice), and grain powder.

In the packaged article, depending on the use, only a part of the packaged article may be formed of the packaging material of the second embodiment, or substantially the entire packaged article may be formed of the packaging material of the second embodiment.

A method for manufacturing a packaged article from the biaxially stretched polyethylene film 100 or the packaging material is not particularly limited. A method known in the field of packaging material and the packaged body, such as heat sealing or fusing, can be appropriately used.

The biaxially stretched polyethylene film 100 according to the second embodiment is preferably used for a packaged article that requires good film formability and thermal dimensional stability. The form of the packaged article can be, for example, a gusseted bag or a standing pouch (pouch packaging).

In addition, in a case where a packaged article (such as a food packaging bag) is formed of the biaxially stretched polyethylene film 100 or the packaging material of the second embodiment, it is preferable that the corona-treated surface is on the inner surface side and the corona-untreated surface is on the outer surface side.

In addition, in a case where another layer is further laminated on the biaxially stretched polyethylene film 100 as described above, it is preferable to laminate the layer on the corona-treated surface side. That is, in a case where a laminate using the biaxially stretched polyethylene film 100 of the second embodiment is used for a packaged article (such as a food packaging bag), it is preferable that the biaxially stretched polyethylene film 100 of the second embodiment is the outermost layer of the packaged article.

Although the second embodiment of the present invention has been described above, these are examples of the second embodiment of the present invention, and various configurations other than the above can also be adopted. In addition, the present invention is not limited to the embodiments described above and modifications, improvements, and the like are included in the present invention in a range in which it is possible to achieve the object of the present invention.

### <<Third Embodiment>>

Hereinafter, the biaxially stretched polyethylene film, the packaging material, and the packaged article of the third embodiment of the present invention will be described.

### <Biaxially Stretched Polyethylene Film>

The biaxially stretched polyethylene film 100 of the third embodiment comprises a biaxially stretched film layer containing an ethylene-based polymer (A), in which, when a first differential scanning calorimetry (1st Run) consisting of a process of raising the temperature from -50°C to 200°C at a heating rate of 10°C/min, an isothermal process of holding the temperature at 200°C for 5 minutes, and a process of lowering the temperature from 200°C to -50°C at a cooling rate of 10°C/min, a process of holding the temperature at -50°C for 5 minutes, and a second differential scanning calorimetry (2nd Run) consisting of a process of raising the temperature from - 50°C to 200°C at a heating rate of 10°C/min, are continuously performed using a differential scanning calorimeter (DSC), in a DSC curve 2 obtained by the second differential scanning calorimetry, an endothermic peak A is observed in a range of 20°C or higher and 150°C or lower, and a heat of fusion (ΔH) of the endothermic peak A is 175 J/g or more and 250 J/g or less.

The present inventors have found that the thermal dimensional stability of the biaxially stretched polyethylene film 100 can be improved by setting the heat of fusion (ΔH) obtained by the differential scanning calorimetry of the biaxially stretched polyethylene film 100 to a predetermined range.

In the biaxially stretched polyethylene film 100 of the third embodiment, from the viewpoint of improving the thermal dimensional stability, the heat of fusion (ΔH) obtained by the differential scanning calorimetry is 175 J/g or more, preferably 178 J/g or more, more preferably 180 J/g or more, still more preferably 185 J/g or more, even more preferably 190 J/g or more, and even still more preferably 200 J/g or more, and is 250 J/g or less, preferably 240 J/g or less, more preferably 235 J/g or less, and still more preferably 230 J/g or less.

In the biaxially stretched polyethylene film 100, from the viewpoint of further improving the thermal dimensional stability, (Tm₁ - Tm₂), which is obtained by subtracting the melting point (Tm₂) obtained by the second differential scanning calorimetry from the melting point (Tm₁) obtained by the first differential scanning calorimetry, is preferably 0.0°C or higher, more preferably 0.5°C or higher, still more preferably 1.0°C or higher, even more preferably 1.5°C or higher, even still more preferably 2.0°C or higher, and even still more preferably 2.3°C or higher, and is preferably 5.0°C or lower, more preferably 4.5°C or lower, still more preferably 4.0°C or lower, even more preferably 3.5°C or lower, even still more preferably 3.3°C or lower, even further more preferably 3.1°C or lower, and even further still more preferably 3.0°C or lower.

In the biaxially stretched polyethylene film 100, from the viewpoint of further improving the thermal dimensional stability and further improving the stretchability, in a case where the exothermic peak observed in the DSC curve 1 obtained in the first temperature lowering step is defined as a crystallization peak and the temperature of the apex of the crystallization peak is defined as a crystallization temperature (Tc), Tm₂ - Tc is preferably 12.1°C or higher, more preferably 12.3°C or higher, still more preferably 12.5°C or higher, even more preferably 12.8°C or higher, and even still more preferably 13.0°C or higher, and from the viewpoint of further improving the crystallinity and further improving the thermal dimensional stability, Tm₂ - Tc is preferably 17.0°C or lower, more preferably 16.5°C or lower, still more preferably 16.0°C or lower, even more preferably 15.5°C or lower, even still more preferably 15.0°C or lower, and even further more preferably 14.5°C or lower.

In the biaxially stretched polyethylene film 100, from the viewpoint of further improving the thermal dimensional stability, the melting point (Tm₂) obtained by the second differential scanning calorimetry is preferably 130°C or higher, more preferably 131°C or higher, still more preferably 132°C or higher, and even more preferably 133°C or higher, and is preferably 137°C or lower, more preferably 136°C or lower, still more preferably 135°C or lower, and even more preferably 134°C or lower.

In the biaxially stretched polyethylene film 100, ΔH, Tm₁, Tm₂, Tc, Tm₁ - Tm₂, and Tm₂ - Tc, which are obtained by the differential scanning calorimetry, are measured as follows.

For the biaxially stretched polyethylene film 100, a first differential scanning calorimetry (1st Run) consisting of a process of raising the temperature from -50°C to 200°C at a heating rate of 10°C/min, an isothermal process of holding the temperature at 200°C for 5 minutes, and a process of lowering the temperature from 200°C to -50°C at a cooling rate of 10°C/min, a process of holding the temperature at -50°C for 5 minutes, and a second differential scanning calorimetry (2nd Run) consisting of a process of raising the temperature from - 50°C to 200°C at a heating rate of 10°C/min, are continuously performed using a differential scanning calorimeter.

The peak temperature of the maximum endothermic peak of the DSC curve 1 in the first run is defined as Tm₁ (°C), and the peak temperature of the maximum endothermic peak of the DSC curve 2 in the second run is defined as Tm₂ (°C). The maximum exothermic peak observed in the DSC curve 1 in the temperature lowering step of the first run is defined as a crystallization peak, and the temperature of the apex of the crystallization peak is defined as a crystallization temperature Tc (°C). In the DSC curve 2 in the second run, the endothermic peak A is observed in a range of 20°C or higher and 150°C or lower, and the heat of fusion of the endothermic peak A is defined as ΔH (J/g). In the DSC curve 2 in the second run, in a case where a plurality of endothermic peaks A are observed in a range of 20°C or higher and 150°C or lower, the total value of the heats of fusion of the plurality of endothermic peaks A is defined as ΔH (J/g).

(Tm₁ - Tm₂) (°C) and (Tm₂ - Tc) (°C) are each calculated from the obtained Tm₁, Tm₂, and Tc.

A density of the biaxially stretched polyethylene film 100, which is measured in accordance with JIS K 7112:1999, is preferably 0.937 g/cm³ or more, more preferably 0.940 g/cm³ or more, still more preferably 0.943 g/cm³ or more, even more preferably 0.945 g/cm³ or more, even still more preferably 0.948 g/cm³ or more, and even further more preferably 0.950 g/cm³ or more, from the viewpoint of further improving the balance of various performances such as thermal dimensional stability, film formability, heat resistance, mechanical properties, rigidity, and the like, and is preferably 0.970 g/cm³ or less, more preferably 0.965 g/cm³ or less, still more preferably 0.963 g/cm³ or less, and even more preferably 0.960 g/cm³ or less, from the viewpoint of further improving the film formability.

From the viewpoint of further improving the balance of performances of fluidity, film formability, and thermal dimensional stability, the melt mass flow rate (MFR) of the biaxially stretched polyethylene film 100, which is measured in accordance with JIS K 7210:1999 under the conditions of 190°C and a load of 2,160 g, is preferably 0.1 g/10 min or more, more preferably 0.2 g/10 min or more, still more preferably 0.3 g/10 min or more, even still more preferably 0.5 g/10 min or more, and even still more preferably 0.8 g/10 min or more, and from the viewpoint of further improving the balance of performances of film formability and thermal dimensional stability and further improving the rigidity of the biaxially stretched polyethylene film 100, the melt mass flow rate is preferably 5.0 g/10 min or less, more preferably 4.5 g/10 min or less, still more preferably 4.0 g/10 min or less, even still more preferably 3.5 g/10 min or less, even still more preferably 3.0 g/10 min or less, even still more preferably 2.5 g/10 min or less, and even still more preferably 2.0 g/10 min or less.

From the viewpoint of further improving the performance balance of thermal dimensional stability, film formability, water vapor barrier properties, cost, mechanical properties, transparency, bag-making properties, handleability, appearance, lightweight properties, and the like, the thickness of the biaxially stretched polyethylene film 100 is preferably equal to or more than 5 µm, more preferably equal to or more than 10 µm, still more preferably equal to or more than 12 µm, and even still more preferably equal to or more than 15 µm, and is preferably equal to or less than 100 µm, more preferably equal to or less than 50 µm, still more preferably equal to or less than 40 µm, even still more preferably equal to or less than 30 µm, and even still more preferably equal to or less than 25 µm.

Hereinafter, the physical properties of the biaxially stretched polyethylene film 100 will be described.

The total value (T₁ + T₂) of the tensile modulus T₁ in the MD direction and the tensile modulus T₂ in the TD direction of the biaxially stretched polyethylene film 100, which is measured using a tensile tester under conditions of a measurement temperature of 23 ± 2°C, a relative humidity of 50 ± 5% RH, and a tensile speed of 5 mm/min in accordance with JIS K7127:1999, is preferably 2500 MPa or more, more preferably 3000 MPa or more, still more preferably 3500 MPa or more, even still more preferably 4000 MPa or more, even further still more preferably 4500 MPa or more, and is preferably 9000 MPa or less, more preferably 8000 MPa or less, still more preferably 7000 MPa or less, even still more preferably 6500 MPa or less, and even further still more preferably 6000 MPa or less.

In a case where the total value (T₁ + T₂) of the tensile modulus T₁ in the MD direction and the tensile modulus T₂ of the biaxially stretched polyethylene film in the TD direction 100 is equal to or more than the above-described lower limit value, it is possible to further improve the balance of performances such as thermal dimensional stability, film formability, water vapor barrier properties, mechanical properties, transparency, bag-making properties, and handleability of the biaxially stretched polyethylene film 100, and it is possible to further improve the rigidity of the biaxially stretched polyethylene film 100.

In addition, in a case where the total value (T₁ + T₂) of the tensile modulus T₁ in the MD direction and the tensile modulus T₂ in the TD direction is equal to or less than the above-described upper limit value, troubles such as cutting are less likely to occur during the molding of the biaxially stretched polyethylene film 100, continuous stretching and forming of the film is facilitated, and industrial continuous productivity can be further improved.

Such a tensile modulus is a substitute value for quantitatively measuring the rigidity of the film, and can be adjusted, for example, by adjusting the kind and the content ratio of the ethylene-based polymer contained in the biaxially stretched film layer 101, the thickness and the stretching ratio of the biaxially stretched film layer 101, the constituent material and the thickness of the surface resin layer 103, and the like.

In addition, from the viewpoint of further improving the performance balance of the biaxially stretched polyethylene film 100 in terms of thermal dimensional stability, film formability, water vapor barrier properties, mechanical properties, transparency, bag-making properties, handleability, and packaging suitability, the tensile modulus T₁ of the biaxially stretched polyethylene film 100 in the MD direction is preferably 800 MPa or more, more preferably 1000 MPa or more, still more preferably 1100 MPa or more, even still more preferably 1300 MPa or more, even further still more preferably 1500 MPa or more, even further still more preferably 1800 MPa or more, even further still more preferably 2000 MPa or more, and from the viewpoint of further improving the performance balance of the biaxially stretched polyethylene film 100 in terms of thermal dimensional stability, antistatic properties, bag-making properties, and packaging suitability, the tensile modulus T₁ is preferably 4000 MPa or less, more preferably 3500 MPa or less, still more preferably 3000 MPa or less, even still more preferably 2500 MPa or less, and even further still more preferably 2300 MPa or less.

In addition, from the viewpoint of further improving the performance balance of the biaxially stretched polyethylene film 100 in terms of thermal dimensional stability, film formability, water vapor barrier properties, mechanical properties, transparency, bag-making properties, handleability, and packaging suitability, the tensile modulus T₂ of the biaxially stretched polyethylene film 100 in the TD direction is preferably 1000 MPa or more, more preferably 1300 MPa or more, still more preferably 1500 MPa or more, even still more preferably 1800 MPa or more, even further still more preferably 2000 MPa or more, even further still more preferably 2500 MPa or more, and even further still more preferably 2800 MPa or more, and from the viewpoint of further improving the performance balance of the biaxially stretched polyethylene film 100 in terms of thermal dimensional stability, antistatic properties, bag-making properties, and packaging suitability, the tensile modulus T₂ is preferably 5000 MPa or less, more preferably 4500 MPa or less, still more preferably 4000 MPa or less, and even still more preferably 3500 MPa or less.

From the viewpoint of further improving the balance of performances of thermal dimensional stability and bag-making properties, the thermal shrinkage rate X_{MD100} of the biaxially stretched polyethylene film 100 in the MD direction in a case of being subjected to a heat treatment at 100°C for 15 minutes, which is measured in accordance with JIS C 2151: 2019, is preferably 4.0% or less, more preferably 3.8% or less, still more preferably 3.5% or less, even still more preferably 3.0% or less, even still more preferably 2.8% or less, even still more preferably 2.5% or less, and even still more preferably 2.0% or less, and may be 0.1% or more, 0.5% or more, or 1.0% or more.

Here, in general, the roll of the biaxially stretched polyethylene film 100 is fed out in the MD direction, and bag-making processing, coating, vapor deposition, and the like are performed while applying tension. That is, since tension is applied in the MD direction, in a case where the heat resistance of the film is low during heating, the film is likely to be thermal-elongated in the MD direction. On the other hand, in a case where the thermal shrinkage rate in the MD direction in a case of being subjected to a heat treatment at 100°C for 15 minutes is within the above-described range, it is possible to further suppress the thermal expansion in the MD direction in a case where the biaxially stretched polyethylene film is heated.

From the viewpoint of further improving the balance of performances of thermal dimensional stability and bag-making properties, the thermal shrinkage rate X_{TD100} of the biaxially stretched polyethylene film 100 in the TD direction in a case of being subjected to a heat treatment at 100°C for 15 minutes, which is measured in accordance with JIS C 2151: 2019, is preferably 7.0% or less, more preferably 6.0% or less, still more preferably 5.0% or less, even still more preferably 4.5% or less, even still more preferably 4.0% or less, even still more preferably 3.8% or less, even still more preferably 3.5% or less, even still more preferably 3.0% or less, even still more preferably 2.8% or less, even still more preferably 2.5% or less, even still more preferably 2.0% or less, and even still more preferably 1.5% or less, and may be 0.01% or more, 0.02% or more, 0.05% or more, or 0.1% or more.

In addition, the thermal shrinkage rates X_{MD100} [%] and X_{TD100} [%] of the biaxially stretched polyethylene film 100 in a case of being subjected to a heat treatment at 100°C for 15 minutes are calculated by the following method.

First, a test piece having a size of 10 cm × 10 cm is cut out from the biaxially stretched polyethylene film 100, and this test piece is subjected to a heat treatment at 100°C for 15 minutes. Next, in a case where the length of the test piece in the MD direction after the heat treatment is denoted by MD₁₀₀ [cm] and the length of the test piece in the TD direction after the heat treatment is denoted by TD₁₀₀ [cm], X_{MD100} [%] is calculated by 100 × (10 - MD₁₀₀)/10, and X_{TD100} [%] is calculated by 100 × (10 - TD₁₀₀)/10.

From the viewpoint of further improving thermal dimensional stability and bag-making properties, the thermal shrinkage rate X_{MD120} of the biaxially stretched polyethylene film 100 in the MD direction in a case of being subjected to a heat treatment at 120°C for 15 minutes, which is measured in accordance with JIS C 2151: 2019, is preferably 9.0% or less, more preferably 8.5% or less, still more preferably 8.0% or less, even still more preferably 7.5% or less, and even still more preferably 7.0% or less, and may be 0.1% or more, 0.5% or more, 1.0% or more, or 3.0% or more.

From the viewpoint of further improving thermal dimensional stability and bag-making properties, the thermal shrinkage rate X_{TD120} of the biaxially stretched polyethylene film 100 in the TD direction in a case of being subjected to a heat treatment at 120°C for 15 minutes, which is measured in accordance with JIS C 2151: 2019, is preferably 30.0% or less, more preferably 25.0% or less, still more preferably 20.0% or less, even still more preferably 15.0% or less, even still more preferably 13.0% or less, even still more preferably 10.0% or less, even still more preferably 8.0% or less, and even still more preferably 5.0% or less, and may be 0.1% or more, 0.5% or more, or 1.0% or more.

In addition, the thermal shrinkage rates X_{MD120} [%] and X_{TD120} [%] of the biaxially stretched polyethylene film 100 in a case of being subjected to a heat treatment at 120°C for 15 minutes can be measured in the same manner as in the measurement of the thermal shrinkage rates X_{MD100} [%] and X_{TD100} [%] of the biaxially stretched polyethylene film 100 in a case of being subjected to a heat treatment at 100°C for 15 minutes, except that the heating temperature is set to 120°C. Specifically, the description is provided in the section of Examples.

From the viewpoint of further improving water vapor barrier properties, the moisture permeability of the biaxially stretched polyethylene film 100, which is measured in accordance with JIS Z 0208: 1976, is preferably 12.0 g/(m²·day) or less, more preferably 11.5 g/(m²·day) or less, still more preferably 11.0 g/(m²·day) or less, even still more preferably 10.5 g/(m²·day) or less, even still more preferably 10.0 g/(m²·day) or less, even still more preferably 9.0 g/(m²·day) or less, even still more preferably 7.5 g/(m²·day) or less, even still more preferably 7.0 g/(m²·day) or less, even still more preferably 6.5 g/(m²·day) or less, and even still more preferably 6.0 g/(m²·day) or less, and may be 0.01 g/(m²·day) or more, 0.1 g/(m²·day) or more, 0.5 g/(m²·day) or more, 1.0 g/(m²·day) or more, or 3.0 g/(m²·day) or more.

From the viewpoint of further improving mechanical strength such as toughness, the total of the breaking stress in the TD direction and the breaking stress in the MD direction of the biaxially stretched polyethylene film 100, which are measured in accordance with JIS K 7127:1999, is preferably 210 MPa or more, more preferably 220 MPa or more, still more preferably 230 MPa or more, even still more preferably 250 MPa or more, even still more preferably 280 MPa or more, and even still more preferably 300 MPa or more, and may be 600 MPa or less, 500 MPa or less, or 450 MPa or less.

From the viewpoint of further improving mechanical strength such as toughness, the breaking stress in the MD direction of the biaxially stretched polyethylene film 100, which is measured in accordance with JIS K 7127:1999, is preferably 50 MPa or more, more preferably 60 MPa or more, still more preferably 70 MPa or more, even still more preferably 80 MPa or more, and even still more preferably 90 MPa or more, and may be 300 MPa or less, 200 MPa or less, or 150 MPa or less.

From the viewpoint of further improving mechanical strength such as toughness, the breaking stress of the biaxially stretched polyethylene film in the TD direction 100, which is measured in accordance with JIS K 7127:1999, is preferably 70 MPa or more, more preferably 90 MPa or more, still more preferably 100 MPa or more, even still more preferably 120 MPa or more, even still more preferably 150 MPa or more, and even still more preferably 180 MPa or more, and may be 500 MPa or less, 400 MPa or less, 350 MPa or less, or 330 MPa or less.

Hereinafter, each layer constituting the biaxially stretched polyethylene film 100 will be described.

### [Biaxially stretched film layer]

The biaxially stretched film layer 101 contains an ethylene-based polymer.

The biaxially stretched film layer 101 is formed by biaxially stretching a film formed of an ethylene-based polymer composition containing an ethylene-based polymer (A).

### (Ethylene-Based Polymer (A))

From the viewpoint of further improving the balance of various performances such as thermal dimensional stability, film formability, heat resistance, mechanical properties, rigidity, and transparency, when the total of the ethylene-based polymer composition, that is, the total of the biaxially stretched film layer 101 is set to 100% by mass, the content of the ethylene-based polymer (A) in the ethylene-based polymer composition, that is, in the biaxially stretched film layer 101 is preferably 80% by mass or more, more preferably 85% by mass or more, still more preferably 90% by mass or more, even still more preferably 95% by mass or more, even still more preferably 97% by mass or more, and even still more preferably 99% by mass or more, and from the viewpoint of further improving the performance balance of processability and continuous productivity, the content is preferably 100% by mass or less.

The ethylene-based polymer (A) of the third embodiment preferably contains one or two or more selected from the group consisting of low-density polyethylene (LDPE), linear low-density polyethylene (LLDPE), medium-density polyethylene (MDPE), and high-density polyethylene (HDPE), more preferably contains one or two or more selected from the group consisting of low-density polyethylene (LDPE), linear low-density polyethylene (LLDPE), and high-density polyethylene (HDPE), and still more preferably contains high-density polyethylene (HDPE), from the viewpoint of further improving the balance of various performances such as thermal dimensional stability, film formability, heat resistance, water vapor barrier properties, mechanical properties, and rigidity.

Here, the low-density polyethylene (LDPE) represents polyethylene having a density of 0.910 g/cm³ or more and less than 0.930 g/cm³, the medium-density polyethylene (MDPE) represents polyethylene having a density of 0.930 g/cm³ or more and less than 0.942 g/cm³, and the high-density polyethylene (HDPE) represents polyethylene having a density of 0.942 g/cm³ or more. In addition, low-density polyethylene having little branched structure is represented by linear low-density polyethylene (LLDPE).

From the viewpoint of further improving the balance of various performances such as thermal dimensional stability, film formability, heat resistance, mechanical properties, and rigidity, when the total of the ethylene-based polymer composition, that is, the total of the biaxially stretched film layer 101 is set to 100% by mass, the content of the high-density polyethylene in the ethylene-based polymer composition, that is, in the biaxially stretched film layer 101 is preferably 60% by mass or more, more preferably 65% by mass or more, still more preferably 70% by mass or more, even still more preferably 75% by mass or more, even still more preferably 80% by mass or more, and even still more preferably 85% by mass or more, and from the viewpoint of further improving the performance balance of processability and continuous productivity, the content is preferably 100% by mass or less, and more preferably 95% by mass or less.

From the viewpoint of further improving the balance of various performances such as thermal dimensional stability, film formability, heat resistance, mechanical properties, and rigidity, the density of the ethylene-based polymer (A), which is measured in accordance with JIS K 7112:1999, is preferably 0.937 g/cm³ or more, more preferably 0.940 g/cm³ or more, still more preferably 0.943 g/cm³ or more, even still more preferably 0.945 g/cm³ or more, even still more preferably 0.948 g/cm³ or more, and even still more preferably 0.950 g/cm³ or more, and from the viewpoint of further improving the film formability, the density is preferably 0.970 g/cm³ or less, more preferably 0.965 g/cm³ or less, still more preferably 0.963 g/cm³ or less, and even still more preferably 0.960 g/cm³ or less.

In a case where two or more kinds of polymers are used as the ethylene-based polymer, the density of a mixture obtained by melt-blending two or more kinds of ethylene-based polymers by a known method can be adopted.

From the viewpoint of further improving the performance balance of fluidity, film formability, and thermal dimensional stability, the melt mass flow rate (MFR) of the ethylene-based polymer (A) measured under the conditions of 190°C and a load of 2160 g in accordance with JIS K 7210:1999 is preferably 0.1 g/10 min or more, more preferably 0.2 g/10 min or more, still more preferably 0.3 g/10 min or more, even still more preferably 0.5 g/10 min or more, and even still more preferably 0.8 g/10 min or more, and from the viewpoint of further improving the performance balance of film formability and thermal dimensional stability and further improving the rigidity of the biaxially stretched polyethylene film 100, the MFR is preferably 5.0 g/10 min or less, more preferably 4.5 g/10 min or less, still more preferably 4.0 g/10 min or less, even still more preferably 3.5 g/10 min or less, even still more preferably 3.0 g/10 min or less, even still more preferably 2.5 g/10 min or less, and even still more preferably 2.0 g/10 min or less.

In a case where two or more kinds of polymers are used as the ethylene-based polymer (A), the MFR of a mixture obtained by melt-blending two or more kinds of polymers by a known method can be adopted.

From the viewpoint of further improving the performance balance of film formability, thermal dimensional stability, heat resistance, water vapor barrier properties, mechanical properties, rigidity, bag-making properties, fluidity, and the like, the melting point of the ethylene-based polymer (A) measured by a differential scanning calorimeter (DSC) is preferably 70°C or higher, more preferably 75°C or higher, still more preferably 90°C or higher, even more preferably 95°C or higher, even still more preferably 100°C or higher, even further still more preferably 110°C or higher, even still more preferably 120°C or higher, and even still more preferably 125°C or higher, and is preferably 150°C or lower, more preferably 140°C or lower, still more preferably 135°C or lower, and even still more preferably 134°C or lower.

In a case where two or more kinds of polymers are used as the ethylene-based polymer, the melting point of the ethylene-based polymer (A) is the peak temperature of the maximum endothermic peak.

In addition, the ethylene-based polymer (A) of the third embodiment may further contain one or two or more selected from the group consisting of an α-olefin copolymer (excluding an ethylene-α-olefin copolymer) and an ethylene-α-olefin copolymer, in addition to the above-described polyethylene, and it is more preferable to contain an ethylene-α-olefin copolymer. From the viewpoint of further improving the performance balance of thermal dimensional stability, film formability, and flexibility, the ethylene-α-olefin copolymer preferably includes one or two or more selected from the group consisting of an ethylene/1-butene random copolymer and an ethylene/propylene random copolymer, and more preferably includes an ethylene/1-butene random copolymer. The α-olefin copolymer includes one or two or more selected from the group consisting of a propylene/ethylene random copolymer and a 1-butene/propylene random copolymer.

From the viewpoint of further improving the performance balance of thermal dimensional stability, film formability, and flexibility, the density of the ethylene-α-olefin copolymer measured in accordance with JIS K 7112:1999 is preferably 0.860 g/cm³ or more, more preferably 0.870 g/cm³ or more, still more preferably 0.880 g/cm³ or more, and even still more preferably 0.890 g/cm³ or more, and is preferably 0.920 g/cm³ or less, more preferably 0.910 g/cm³ or less, and still more preferably 0.900 g/cm³ or less.

From the viewpoint of further improving the performance balance of fluidity, film formability, and thermal dimensional stability, the melt mass flow rate (MFR) of the ethylene-α-olefin copolymer measured under the conditions of 190°C and a load of 2160 g in accordance with JIS K 7210:1999 is preferably 0.1 g/10 min or more, more preferably 0.2 g/10 min or more, still more preferably 0.3 g/10 min or more, even still more preferably 0.5 g/10 min or more, and even still more preferably 1.0 g/10 min or more, and from the viewpoint of further improving the performance balance of film formability and thermal dimensional stability and further improving the rigidity of the biaxially stretched polyethylene film 100, the MFR is preferably 5.0 g/10 min or less, more preferably 4.5 g/10 min or less, and still more preferably 4.0 g/10 min or less.

From the viewpoint of further improving the performance balance of film formability, thermal dimensional stability, heat resistance, water vapor barrier properties, mechanical properties, rigidity, bag-making properties, fluidity, and the like, the melting point of the ethylene-α-olefin copolymer measured by a differential scanning calorimeter (DSC) is preferably 40°C or higher, more preferably 50°C or higher, still more preferably 60°C or higher, and even still more preferably 70°C or higher, and is preferably 120°C or lower, more preferably 110°C or lower, still more preferably 100°C or lower, even still more preferably 90°C or lower, and even still more preferably 80°C or lower.

In a case where the total of the biaxially stretched film layer is set to 100% by mass, the content of the ethylene-α-olefin copolymer in the biaxially stretched film layer 101 is preferably 5% by mass or more, more preferably 8% by mass or more, and is preferably 40% by mass or less, more preferably 35% by mass or less, still more preferably 30% by mass or less, even still more preferably 25% by mass or less, even still more preferably 20% by mass or less, and even still more preferably 15% by mass or less.

### (Other Components)

As necessary, various additives such as a tackifier, a heat stabilizer, a weathering stabilizer, an antioxidant, an ultraviolet absorber, a lubricant, a slip agent, a nucleating agent, an anti-blocking agent, an antistatic agent, an antifogging agent, a pigment, a dye, and an inorganic or organic filler may be added to the ethylene-based polymer composition constituting the biaxially stretched film layer 101 within a range not impairing the object of the third embodiment.

### (Method for Preparing Ethylene-Based Polymer Composition)

The ethylene-based polymer composition can be prepared, for example, by mixing or melt-kneading each component by dry blending, a tumbler mixer, a banbury mixer, a single-screw extruder, a twin-screw extruder, a high-speed twin-screw extruder, a heat roll, or the like.

The biaxially stretched film layer 101 may be a single layer or may have a configuration in which a plurality of layers formed of an ethylene-based polymer composition are laminated, but it is necessary that the biaxially stretched film layer 101 is formed by biaxial stretching.

From the viewpoint of further improving the performance balance of the biaxially stretched polyethylene film 100 in terms of thermal dimensional stability, film formability, water vapor barrier properties, cost, mechanical properties, transparency, bag-making properties, handleability, appearance, lightweight properties, and the like, the thickness of the biaxially stretched film layer 101 is preferably equal to or more than 5 µm, more preferably equal to or more than 10 µm, still more preferably equal to or more than 12 µm, and even still more preferably equal to or more than 15 µm, and is preferably equal to or less than 100 µm, more preferably equal to or less than 50 µm, still more preferably equal to or less than 40 µm, even still more preferably equal to or less than 30 µm, and even still more preferably equal to or less than 25 µm.

In the biaxially stretched polyethylene film 100, the proportion of the thickness of the biaxially stretched film layer 101 to the total thickness of the biaxially stretched polyethylene film 100 is preferably equal to or more than 50%, more preferably equal to or more than 60%, still more preferably equal to or more than 70%, and even still more preferably equal to or more than 75%, and is preferably equal to or less than 100%, more preferably equal to or less than 99%, still more preferably equal to or less than 95%, and even still more preferably equal to or less than 90%.

### [Surface Resin Layer]

From the viewpoint of imparting functions such as heat fusion resistance, heat sealability, antistatic properties, blocking resistance, printing suitability, and slip properties to the film surface, the biaxially stretched polyethylene film 100 preferably further includes a surface resin layer 103 on at least one surface of the biaxially stretched film layer 101, depending on the purpose.

The surface resin layer 103 may be provided on both surfaces of the biaxially stretched film layer 101. By providing the surface resin layer 103 on both surfaces of the biaxially stretched film layer 101, different functions can be imparted to each surface of the film.

In a case where the surface resin layer 103 is provided on both surfaces of the biaxially stretched film layer 101, it is preferable that the surface resin layer 103 on one surface has heat sealability. By folding the biaxially stretched polyethylene film 100 with this surface facing inward and heat-sealing the end part, a bag shape can be obtained. In addition, it is preferable that the surface resin layer 103 on the other surface has blocking resistance, antistatic properties, printability, and the like.

In addition, depending on the purpose, from the viewpoint of further improving the functions of the biaxially stretched polyethylene film 100 such as heat fusion resistance, heat sealability, antistatic properties, blocking resistance, printability, and slip properties, it is preferable that the surface resin layer 103 is provided on the outermost layer of the biaxially stretched polyethylene film 100.

It is preferable that the surface resin layer 103 is provided to be in direct contact with the surface of the biaxially stretched film layer 101. As a result, the manufacturing process of the biaxially stretched polyethylene film 100 can be simplified.

In the biaxially stretched polyethylene film 100, from the viewpoint of further improving the performance balance of the film formability, thermal dimensional stability, water vapor barrier properties, mechanical properties, bag-making properties, handleability, and packaging suitability of the biaxially stretched polyethylene film 100, the thickness of the surface resin layer 103 is preferably 0.1 µm or more, more preferably 0.2 µm or more, still more preferably 0.5 µm or more, even more preferably 1.0 µm or more, and even still more preferably 1.5 µm or more, and from the viewpoint of further improving the performance balance of the film formability, thermal dimensional stability, water vapor barrier properties, mechanical properties, bag-making properties, handleability, packaging suitability, cost, environmental compatibility, lightweight properties, and the like of the biaxially stretched polyethylene film 100, the thickness of the surface resin layer 103 is preferably 10 µm or less, more preferably 8 µm or less, still more preferably 6 µm or less, even more preferably 5 µm or less, and even still more preferably 3 µm or less.

Here, the thickness of the surface resin layer 103 refers to the thickness of the surface resin layer 103 provided on one surface of the biaxially stretched film layer 101. That is, in the present embodiment, in a case where the surface resin layer 103 is provided on both surfaces of the biaxially stretched film layer 101, the above-described thickness of the surface resin layer 103 indicates the thickness of the surface resin layer 103 provided on one surface of the biaxially stretched film layer 101.

In the biaxially stretched polyethylene film 100, it is preferable that the surface resin layer 103 is a single layer. As a result, the manufacturing process of the biaxially stretched polyethylene film 100 can be further simplified.

The surface resin layer 103 is preferably formed by being biaxially stretched at the same time as the film in a state before the biaxial stretching of the biaxially stretched film layer 101. As a result, since the biaxially stretched polyethylene film 100 can be produced using a molding method such as a co-extrusion molding method, that is, a laminated film produced by one-time molding, the manufacturing process of the biaxially stretched polyethylene film 100 can be further simplified. Therefore, the surface resin layer 103 is preferably biaxially stretched.

In addition, the surface resin layer 103 may be subjected to a surface treatment from the viewpoint of further improving the performance balance of the printing suitability and the blocking resistance of the biaxially stretched polyethylene film 100. Specifically, a surface activation treatment such as a corona treatment, a flame treatment, a plasma treatment, a primer coating treatment, or an ozone treatment may be performed.

The surface resin layer 103 is composed of, for example, a polyolefin-based resin composition (A) containing a polyolefin. The polyolefin constituting the surface resin layer 103 includes, for example, one or more selected from the group consisting of a homopolymer or copolymer of α-olefins such as ethylene, propylene, 1-butene, hexene-1, 4-methyl-pentene-1, and 1-octene; low-density polyethylene by a high pressure method; linear low-density polyethylene (LLDPE); high-density polyethylene; homopolypropylene; a random copolymer of propylene and an α-olefin having 2 to 10 carbon atoms; an ethylene-vinyl acetate copolymer (EVA); and an ionomer resin.

Among these, as the polyolefin constituting the surface resin layer 103, from the viewpoint of further improving the performance balance of the film formability, thermal dimensional stability, heat fusion resistance, heat resistance, water vapor barrier properties, transparency, mechanical properties, rigidity, bag-making properties, fluidity, and the like of the biaxially stretched polyethylene film 100, an ethylene-based polymer is preferable. Here, the preferred aspect of the ethylene-based polymer constituting the surface resin layer 103 is the same as that of the ethylene-based polymer described above. That is, the ethylene-based polymer constituting the surface resin layer 103 preferably includes the ethylene-based polymer (A) described above.

In addition, in a case where the surface resin layer 103 is provided on both surfaces of the biaxially stretched film, the polyolefin-based resin compositions constituting the respective surface resin layers 103 may be the same or different from each other.

From the viewpoint of further improving the performance balance of the film formability, thermal dimensional stability, heat fusion resistance, heat resistance, water vapor barrier properties, transparency, mechanical properties, rigidity, bag-making properties, fluidity, and the like of the biaxially stretched polyethylene film 100, in a case where the entire polyolefin-based resin composition (A), that is, the entire surface resin layer 103 is set to 100% by mass, the content of the polyolefin in the polyolefin-based resin composition (A), that is, in the surface resin layer 103 is preferably equal to or more than 75% by mass, more preferably equal to or more than 80% by mass, still more preferably equal to or more than 90% by mass, even still more preferably equal to or more than 95% by mass, even still more preferably equal to or more than 98% by mass, and even still more preferably equal to or more than 99% by mass, and is preferably equal to or less than 100% by mass.

From the viewpoint of further improving the performance balance of the film formability, thermal dimensional stability, heat fusion resistance, heat resistance, water vapor barrier properties, transparency, mechanical properties, rigidity, bag-making properties, fluidity, and the like of the biaxially stretched polyethylene film 100, the content of the ethylene-based polymer in the polyolefin-based resin composition, that is, in the surface resin layer 103 is preferably 75% by mass or more, more preferably 80% by mass or more, still more preferably 90% by mass or more, even more preferably 95% by mass or more, even still more preferably 98% by mass or more, and even still more preferably 99% by mass or more, and is preferably 100% by mass or less, in a case where the total of the polyolefin-based resin composition, that is, the total of the surface resin layer 103 is set to 100% by mass.

### (Other Components)

Various additives such as a tackifier, a heat-resistant stabilizer, a weather-resistant stabilizer, an antioxidant, an ultraviolet absorber, a lubricant, a slip agent, a nucleating agent, an antiblocking agent, an antistatic agent, an antifogging agent, a pigment, a dye, and an inorganic or organic filler may be added as necessary to the polyolefin-based resin composition constituting the surface resin layer 103 within a range not impairing the object of the third embodiment.

### (Method for Preparing Polyolefin-Based Resin Composition)

The polyolefin-based resin composition can be prepared by mixing or melt-kneading, for example, the respective components by dry blending, a tumbler mixer, a Banbury mixer, a single-screw extruder, a twin-screw extruder, a high-speed twin-screw extruder, a heat roll, or the like.

### <Method for Producing Biaxially Stretched Polyethylene Film>

The biaxially stretched polyethylene film 100 can be obtained, for example, by biaxially stretching a film obtained by co-extrusion-molding an ethylene-based polymer composition for forming the biaxially stretched film layer 101 in a film shape using a biaxially stretched film production method such as a known simultaneous biaxial stretching method, a sequential biaxial stretching method, or an inflation biaxial stretching method.

The molding device and the molding conditions are not particularly limited, and a molding device and molding conditions known in the related art can be adopted. As the molding device, a T-die extruder, a multilayer T-die extruder, an inflation molding machine, a multilayer inflation molding machine, or the like can be used. The biaxial stretching conditions can be, for example, known polyethylene film production conditions. For example, in the sequential biaxial stretching method, the stretching temperature in the MD direction may be set to preferably in a range of 100°C to 145°C, more preferably in a range of 110°C to 140°C, and still more preferably in a range of 120°C to 135°C, and the stretching temperature in the TD direction may be set to preferably in a range of 110°C to 190°C and more preferably in a range of 120°C to 170°C. In addition, the stretching ratio in the MD direction may be set to preferably in a range of 4.5 to 7 times, and the stretching ratio in the TD direction may be set to preferably in a range of 9 to 11 times.

Here, specifically, it is necessary to set the stretching temperature to three stages of a preheating temperature (temperature for heating the film raw material before stretching)/a stretching temperature (temperature during stretching)/a heat setting temperature (temperature during heat setting (annealing) after stretching), and the temperature can be set to the above-described range from preheating to heat setting. That is, the temperature can be set to the same level as the stretching and the heat setting from the preheating stage. Since the biaxially stretched polyethylene film 100 of the third embodiment contains the ethylene-based polymer (A), it can be processed at a higher temperature, the heat resistance of the obtained biaxially stretched polyethylene film 100 can be further improved, and the thermal dimensional stability can be further improved.

In addition, the biaxially stretched polyethylene film 100 can also be obtained by separately molding the biaxially stretched film layer 101 and the surface resin layer 103 as necessary and laminating and heat-molding the biaxially stretched film layer 101 and the surface resin layer 103.

### <Use of biaxially stretched polyethylene film/packaging material/packaged article>

Specifically, the biaxially stretched polyethylene film 100 of the third embodiment can be suitably used as a packaging film.

In addition, the biaxially stretched polyethylene film 100 of the third embodiment can be suitably used as a packaging material.

When used as a packaging material, the packaging material may be formed using only the stretched polyethylene film 100 of the third embodiment, or other layers may be laminated to form a packaging material. The other layers preferably further include one or two or more selected from the group consisting of an inorganic layer, a base layer, a coating layer, an adhesive layer, and a heat seal layer, and more preferably further include one or two or more selected from the group consisting of an inorganic layer and a coating layer. From the viewpoint of ease of recycling, in a case where these layers are laminated, it is preferable that the layers are formed of a polyethylene-based resin.

In addition, the packaging material of the third embodiment can be suitably used for a packaged article. The packaged article is used for the purpose of packaging an article, and specifically includes the packaging material of the third embodiment and an article in the packaging material. Among these, the packaged article of the third embodiment can be suitably used as a food packaged article, and is used for the purpose of packaging food, and specifically includes the packaging material of the third embodiment and food in the packaging material.

The food packaged in the food packaging body is not limited, and examples thereof include baked confectionery, rice crackers, snack foods, furikake (seasoned powder for sprinkling over rice), and grain powder.

In the packaged article, depending on the use, only a part of the packaged article may be formed of the packaging material of the third embodiment, or substantially the entire packaged article may be formed of the packaging material of the third embodiment.

A method for manufacturing a packaged article from the biaxially stretched polyethylene film 100 or the packaging material is not particularly limited. A method known in the field of packaging material and the packaged body, such as heat sealing or fusing, can be appropriately used.

The biaxially stretched polyethylene film 100 according to the third embodiment is preferably used for a packaged article that requires good film formability and thermal dimensional stability. The form of the packaged article can be, for example, a gusseted bag or a standing pouch (pouch packaging).

In addition, in a case where the packaged article (such as a food packaging bag) is formed of the biaxially stretched polyethylene film 100 or the packaging material of the third embodiment, it is preferable that the corona-treated surface is on the inner surface side and the corona-untreated surface is on the outer surface side.

In addition, in a case where another layer is further laminated on the biaxially stretched polyethylene film 100 as described above, it is preferable to laminate the layer on the corona-treated surface side. That is, in a case where the laminate using the biaxially stretched polyethylene film 100 of the third embodiment is used for a packaged article (such as a food packaging bag), it is preferable that the biaxially stretched polyethylene film 100 of the third embodiment is the outermost layer of the packaged article.

Although the third embodiment of the present invention has been described above, these are examples of the third embodiment of the present invention, and various configurations other than the above can also be adopted. In addition, the present invention is not limited to the embodiments described above and modifications, improvements, and the like are included in the present invention in a range in which it is possible to achieve the object of the present invention.

### <<Fourth embodiment>>

Hereinafter, the biaxially stretched polyethylene film, the packaging material, and the packaged article of the fourth embodiment of the present invention will be described.

### <Biaxially Stretched Polyethylene Film>

The biaxially stretched polyethylene film 100 of the fourth embodiment comprises a biaxially stretched film layer 101 containing an ethylene-based polymer (A), in which a z-average molecular weight (Mz) of the ethylene-based polymer (A) in terms of polystyrene, which is measured by gel permeation chromatography (GPC), is 800,000 or more and 4,000,000 or less.

The present inventors have found that, by setting the z-average molecular weight (Mz) of the ethylene-based polymer (A) in the biaxially stretched film layer 101 of the biaxially stretched polyethylene film 100 in terms of polystyrene, which is measured by gel permeation chromatography (GPC), to be in a predetermined range, the performance balance between the film formability and the thermal dimensional stability of the biaxially stretched polyethylene film 100 can be improved.

A density of the biaxially stretched polyethylene film 100, which is measured in accordance with JIS K 7112:1999, is preferably 0.937 g/cm³ or more, more preferably 0.940 g/cm³ or more, still more preferably 0.943 g/cm³ or more, even more preferably 0.945 g/cm³ or more, even still more preferably 0.948 g/cm³ or more, and even further more preferably 0.950 g/cm³ or more, from the viewpoint of further improving the balance of various performances such as thermal dimensional stability, film formability, heat resistance, mechanical properties, rigidity, and the like, and is preferably 0.970 g/cm³ or less, more preferably 0.965 g/cm³ or less, still more preferably 0.963 g/cm³ or less, and even more preferably 0.960 g/cm³ or less, from the viewpoint of further improving the film formability.

From the viewpoint of further improving the balance of performances of fluidity, film formability, and thermal dimensional stability, the melt mass flow rate (MFR) of the biaxially stretched polyethylene film 100, which is measured in accordance with JIS K 7210:1999 under the conditions of 190°C and a load of 2,160 g, is preferably 0.1 g/10 min or more, more preferably 0.2 g/10 min or more, still more preferably 0.3 g/10 min or more, even still more preferably 0.5 g/10 min or more, and even still more preferably 0.8 g/10 min or more, and from the viewpoint of further improving the balance of performances of film formability and thermal dimensional stability and further improving the rigidity of the biaxially stretched polyethylene film 100, the melt mass flow rate is preferably 5.0 g/10 min or less, more preferably 4.5 g/10 min or less, still more preferably 4.0 g/10 min or less, even still more preferably 3.5 g/10 min or less, even still more preferably 3.0 g/10 min or less, even still more preferably 2.5 g/10 min or less, and even still more preferably 2.0 g/10 min or less.

From the viewpoint of further improving the balance of performances such as film formability, thermal dimensional stability, heat resistance, water vapor barrier properties, mechanical properties, rigidity, bag-making properties, and fluidity, the melting point of the biaxially stretched polyethylene film 100, which is measured by a differential scanning calorimeter (DSC), is preferably 70°C or higher, more preferably 75°C or higher, still more preferably 90°C or higher, even more preferably 95°C or higher, even still more preferably 100°C or higher, even further still more preferably 110°C or higher, even still more preferably 120°C or higher, and even still more preferably 125°C or higher, and is preferably 150°C or lower, more preferably 140°C or lower, still more preferably 135°C or lower, and even still more preferably 134°C or lower.

From the viewpoint of further improving the performance balance of thermal dimensional stability, film formability, water vapor barrier properties, cost, mechanical properties, transparency, bag-making properties, handleability, appearance, lightweight properties, and the like, the thickness of the biaxially stretched polyethylene film 100 is preferably equal to or more than 5 µm, more preferably equal to or more than 10 µm, still more preferably equal to or more than 12 µm, and even still more preferably equal to or more than 15 µm, and is preferably equal to or less than 100 µm, more preferably equal to or less than 50 µm, still more preferably equal to or less than 40 µm, even still more preferably equal to or less than 30 µm, and even still more preferably equal to or less than 25 µm.

Hereinafter, the physical properties of the biaxially stretched polyethylene film 100 will be described.

The total value (T₁ + T₂) of the tensile modulus T₁ in the MD direction and the tensile modulus T₂ in the TD direction of the biaxially stretched polyethylene film 100, which is measured using a tensile tester under conditions of a measurement temperature of 23 ± 2°C, a relative humidity of 50 ± 5% RH, and a tensile speed of 5 mm/min in accordance with JIS K7127:1999, is preferably 2500 MPa or more, more preferably 3000 MPa or more, still more preferably 3500 MPa or more, even still more preferably 4000 MPa or more, even further still more preferably 4500 MPa or more, and is preferably 9000 MPa or less, more preferably 8000 MPa or less, still more preferably 7000 MPa or less, even still more preferably 6500 MPa or less, and even further still more preferably 6000 MPa or less.

In a case where the total value (T₁ + T₂) of the tensile modulus T₁ in the MD direction and the tensile modulus T₂ of the biaxially stretched polyethylene film in the TD direction 100 is equal to or more than the above-described lower limit value, it is possible to further improve the balance of performances such as thermal dimensional stability, film formability, water vapor barrier properties, mechanical properties, transparency, bag-making properties, and handleability of the biaxially stretched polyethylene film 100, and it is possible to further improve the rigidity of the biaxially stretched polyethylene film 100.

In addition, in a case where the total value (T₁ + T₂) of the tensile modulus T₁ of the biaxially stretched polyethylene film 100 in the MD direction and the tensile modulus T₂ in the TD direction is equal to or less than the above-described upper limit value, troubles such as cutting are less likely to occur during the forming of the biaxially stretched polyethylene film 100, continuous stretching and forming of the film is facilitated, and industrial continuous productivity can be further improved.

Such a tensile modulus is a substitute value for quantitatively measuring the rigidity of the film, and can be adjusted, for example, by adjusting the kind and the content ratio of the ethylene-based polymer contained in the biaxially stretched film layer 101, the thickness and the stretching ratio of the biaxially stretched film layer 101, the constituent material and the thickness of the surface resin layer 103, and the like.

In addition, from the viewpoint of further improving the performance balance of the biaxially stretched polyethylene film 100 in terms of thermal dimensional stability, film formability, water vapor barrier properties, mechanical properties, transparency, bag-making properties, handleability, and packaging suitability, the tensile modulus T₁ of the biaxially stretched polyethylene film 100 in the MD direction is preferably 800 MPa or more, more preferably 1000 MPa or more, still more preferably 1100 MPa or more, even still more preferably 1300 MPa or more, even further still more preferably 1500 MPa or more, even further still more preferably 1800 MPa or more, even further still more preferably 2000 MPa or more, and from the viewpoint of further improving the performance balance of the biaxially stretched polyethylene film 100 in terms of thermal dimensional stability, antistatic properties, bag-making properties, and packaging suitability, the tensile modulus T₁ is preferably 4000 MPa or less, more preferably 3500 MPa or less, still more preferably 3000 MPa or less, even still more preferably 2500 MPa or less, and even further still more preferably 2300 MPa or less.

In addition, from the viewpoint of further improving the performance balance of the biaxially stretched polyethylene film 100 in terms of thermal dimensional stability, film formability, water vapor barrier properties, mechanical properties, transparency, bag-making properties, handleability, and packaging suitability, the tensile modulus T₂ of the biaxially stretched polyethylene film 100 in the TD direction is preferably 1000 MPa or more, more preferably 1300 MPa or more, still more preferably 1500 MPa or more, even still more preferably 1800 MPa or more, even further still more preferably 2000 MPa or more, even further still more preferably 2500 MPa or more, and even further still more preferably 2800 MPa or more, and from the viewpoint of further improving the performance balance of the biaxially stretched polyethylene film 100 in terms of thermal dimensional stability, antistatic properties, bag-making properties, and packaging suitability, the tensile modulus T₂ is preferably 5000 MPa or less, more preferably 4500 MPa or less, still more preferably 4000 MPa or less, and even still more preferably 3500 MPa or less.

From the viewpoint of further improving the balance of performances of thermal dimensional stability and bag-making properties, the thermal shrinkage rate X_{MD100} of the biaxially stretched polyethylene film 100 in the MD direction in a case of being subjected to a heat treatment at 100°C for 15 minutes, which is measured in accordance with JIS C 2151: 2019, is preferably 4.0% or less, more preferably 3.8% or less, still more preferably 3.5% or less, even still more preferably 3.0% or less, even still more preferably 2.8% or less, even still more preferably 2.5% or less, and even still more preferably 2.0% or less, and may be 0.1% or more, 0.5% or more, or 1.0% or more.

Here, in general, the roll of the biaxially stretched polyethylene film 100 is fed out in the MD direction, and bag-making processing, coating, vapor deposition, and the like are performed while applying tension. That is, since tension is applied in the MD direction, in a case where the heat resistance of the film is low during heating, the film is likely to be thermal-elongated in the MD direction. On the other hand, in a case where the thermal shrinkage rate in the MD direction in a case of being subjected to a heat treatment at 100°C for 15 minutes is within the above-described range, it is possible to further suppress the thermal expansion in the MD direction in a case where the biaxially stretched polyethylene film is heated.

From the viewpoint of further improving the balance of performances of thermal dimensional stability and bag-making properties, the thermal shrinkage rate X_{TD100} of the biaxially stretched polyethylene film 100 in the TD direction in a case of being subjected to a heat treatment at 100°C for 15 minutes, which is measured in accordance with JIS C 2151: 2019, is preferably 7.0% or less, more preferably 6.0% or less, still more preferably 5.0% or less, even still more preferably 4.5% or less, even still more preferably 4.0% or less, even still more preferably 3.8% or less, even still more preferably 3.5% or less, even still more preferably 3.0% or less, even still more preferably 2.8% or less, even still more preferably 2.5% or less, even still more preferably 2.0% or less, and even still more preferably 1.5% or less, and may be 0.01% or more, 0.02% or more, 0.05% or more, or 0.1% or more.

In addition, the thermal shrinkage rates X_{MD100} [%] and X_{TD100} [%] of the biaxially stretched polyethylene film 100 in a case of being subjected to a heat treatment at 100°C for 15 minutes are calculated by the following method.

First, a test piece having a size of 10 cm × 10 cm is cut out from the biaxially stretched polyethylene film 100, and this test piece is subjected to a heat treatment at 100°C for 15 minutes. Next, in a case where the length of the test piece in the MD direction after the heat treatment is denoted by MD₁₀₀ [cm] and the length of the test piece in the TD direction after the heat treatment is denoted by TD₁₀₀ [cm], X_{MD100} [%] is calculated by 100 × (10 - MD₁₀₀)/10, and X_{TD100} [%] is calculated by 100 × (10 - TD₁₀₀)/10.

From the viewpoint of further improving thermal dimensional stability and bag-making properties, the thermal shrinkage rate X_{MD120} of the biaxially stretched polyethylene film 100 in the MD direction in a case of being subjected to a heat treatment at 120°C for 15 minutes, which is measured in accordance with JIS C 2151: 2019, is preferably 9.0% or less, more preferably 8.5% or less, still more preferably 8.0% or less, even still more preferably 7.5% or less, and even still more preferably 7.0% or less, and may be 0.1% or more, 0.5% or more, 1.0% or more, or 3.0% or more.

From the viewpoint of further improving thermal dimensional stability and bag-making properties, the thermal shrinkage rate X_{TD120} of the biaxially stretched polyethylene film 100 in the TD direction in a case of being subjected to a heat treatment at 120°C for 15 minutes, which is measured in accordance with JIS C 2151: 2019, is preferably 30.0% or less, more preferably 25.0% or less, still more preferably 20.0% or less, even still more preferably 15.0% or less, even still more preferably 13.0% or less, even still more preferably 10.0% or less, even still more preferably 8.0% or less, and even still more preferably 5.0% or less, and may be 0.1% or more, 0.5% or more, or 1.0% or more.

In addition, the thermal shrinkage rates X_{MD120} [%] and X_{TD120} [%] of the biaxially stretched polyethylene film 100 in a case of being subjected to a heat treatment at 120°C for 15 minutes can be measured in the same manner as in the measurement of the thermal shrinkage rates X_{MD100} [%] and X_{TD100} [%] of the biaxially stretched polyethylene film 100 in a case of being subjected to a heat treatment at 100°C for 15 minutes, except that the heating temperature is set to 120°C. Specifically, the description is provided in the section of Examples.

From the viewpoint of further improving water vapor barrier properties, the moisture permeability of the biaxially stretched polyethylene film 100, which is measured in accordance with JIS Z 0208: 1976, is preferably 12.0 g/(m²·day) or less, more preferably 11.5 g/(m²·day) or less, still more preferably 11.0 g/(m²·day) or less, even still more preferably 10.5 g/(m²·day) or less, even still more preferably 10.0 g/(m²·day) or less, even still more preferably 9.0 g/(m²·day) or less, even still more preferably 7.5 g/(m²·day) or less, even still more preferably 7.0 g/(m²·day) or less, even still more preferably 6.5 g/(m²·day) or less, and even still more preferably 6.0 g/(m²·day) or less, and may be 0.01 g/(m²·day) or more, 0.1 g/(m²·day) or more, 0.5 g/(m²·day) or more, 1.0 g/(m²·day) or more, or 3.0 g/(m²·day) or more.

From the viewpoint of further improving mechanical strength such as toughness, the total of the breaking stress in the TD direction and the breaking stress in the MD direction of the biaxially stretched polyethylene film 100, which are measured in accordance with JIS K 7127:1999, is preferably 210 MPa or more, more preferably 220 MPa or more, still more preferably 230 MPa or more, even still more preferably 250 MPa or more, even still more preferably 280 MPa or more, and even still more preferably 300 MPa or more, and may be 600 MPa or less, 500 MPa or less, or 450 MPa or less.

From the viewpoint of further improving mechanical strength such as toughness, the breaking stress in the MD direction of the biaxially stretched polyethylene film 100, which is measured in accordance with JIS K 7127:1999, is preferably 50 MPa or more, more preferably 60 MPa or more, still more preferably 70 MPa or more, even still more preferably 80 MPa or more, and even still more preferably 90 MPa or more, and may be 300 MPa or less, 200 MPa or less, or 150 MPa or less.

From the viewpoint of further improving mechanical strength such as toughness, the breaking stress of the biaxially stretched polyethylene film in the TD direction 100, which is measured in accordance with JIS K 7127:1999, is preferably 70 MPa or more, more preferably 90 MPa or more, still more preferably 100 MPa or more, even still more preferably 120 MPa or more, even still more preferably 150 MPa or more, and even still more preferably 180 MPa or more, and may be 500 MPa or less, 400 MPa or less, 350 MPa or less, or 330 MPa or less.

From the viewpoint of further improving the performance balance of the mechanical strength and the heat resistance, a total of an elongation at break in the TD direction and an elongation at break in the MD direction of the biaxially stretched polyethylene film 100, which are measured in accordance with JIS K 7127:1999, is preferably 200% or less, more preferably 190% or less, still more preferably 180% or less, even more preferably 170% or less, even still more preferably 160% or less, and even further more preferably 155% or less, and from the viewpoint of further improving the flexibility, the total is preferably 50% or more, more preferably 80% or more, and still more preferably 100% or more.

From the viewpoint of further improving the performance balance of the mechanical strength and the heat resistance, an elongation at break in the MD direction of the biaxially stretched polyethylene film 100, which is measured in accordance with JIS K 7127:1999, is preferably 180% or less, more preferably 170% or less, still more preferably 160% or less, and even more preferably 155% or less, and from the viewpoint of further improving the flexibility, the elongation at break is preferably 50% or more, more preferably 70% or more, still more preferably 80% or more, and even more preferably 100% or more.

From the viewpoint of further improving the performance balance of the mechanical strength and the heat resistance, an elongation at break of the biaxially stretched polyethylene film in the TD direction 100, which is measured in accordance with JIS K 7127:1999, is preferably 60% or less, more preferably 50% or less, still more preferably 45% or less, and even more preferably 40% or less, and from the viewpoint of further improving the flexibility, the elongation at break is preferably 10% or more, more preferably 15% or more, and still more preferably 20% or more.

Hereinafter, each layer constituting the biaxially stretched polyethylene film 100 will be described.

### [Biaxially stretched film layer]

The biaxially stretched film layer 101 contains an ethylene-based polymer.

The biaxially stretched film layer 101 is formed by biaxially stretching a film formed of an ethylene-based polymer composition containing an ethylene-based polymer (A).

### (Ethylene-Based Polymer (A))

From the viewpoint of improving the performance balance of the film formability and the thermal dimensional stability, a z-average molecular weight (Mz) in terms of polystyrene, which is measured by gel permeation chromatography (GPC), in the ethylene-based polymer (A) of the fourth embodiment is 800,000 or more, preferably 850,000 or more, more preferably 900,000 or more, still more preferably 950,000 or more, even more preferably 1,000,000 or more, and even still more preferably 1,050,000 or more, and the z-average molecular weight is 4,000,000 or less, preferably 3,500,000 or less, more preferably 3,000,000 or less, still more preferably 2,500,000 or less, even more preferably 2,000,000 or less, even still more preferably 1,500,000 or less, and even further more preferably 1,300,000 or less.

From the viewpoint of further improving the performance balance of the film formability and the thermal dimensional stability, a weight-average molecular weight (Mw) in terms of polystyrene, which is measured by gel permeation chromatography (GPC), in the ethylene-based polymer (A) is preferably 130,000 or more, more preferably 135,000 or more, still more preferably 140,000 or more, even more preferably 145,000 or more, even still more preferably 150,000 or more, and even further more preferably 155,000 or more, and the weight-average molecular weight is preferably 1,000,000 or less, more preferably 800,000 or less, still more preferably 600,000 or less, even more preferably 500,000 or less, even still more preferably 400,000 or less, even further more preferably 300,000 or less, and even further still more preferably 200,000 or less.

From the viewpoint of further improving the performance balance of film formability and thermal dimensional stability and from the viewpoint of setting a degree of polymerization of the ethylene-based polymer (A) in a more appropriate range, a number-average molecular weight (Mn) in terms of polystyrene, which is measured by gel permeation chromatography (GPC), of the ethylene-based polymer is preferably 5,000 or more, more preferably 6,000 or more, still more preferably 8,000 or more, even more preferably 10,000 or more, even still more preferably 13,000 or more, even further more preferably 15,000 or more, even further still more preferably 18,000 or more, and even further even still more preferably 20,000 or more, and is preferably 200,000 or less, more preferably 150,000 or less, still more preferably 100,000 or less, even more preferably 80,000 or less, even still more preferably 60,000 or less, even further more preferably 50,000 or less, even further still more preferably 40,000 or less, and even further even still more preferably 30,000 or less, and even further even still more preferably 28,000 or less.

From the viewpoint of further improving the thermal dimensional stability, a ratio (Mw/Mn) of the weight-average molecular weight (Mw) to the number-average molecular weight (Mn) in terms of polystyrene, which is measured by gel permeation chromatography (GPC), of the ethylene-based polymer (A) is preferably 30.0 or less, more preferably 28.0 or less, still more preferably 25.0 or less, even more preferably 20.0 or less, even still more preferably 15.0 or less, even further more preferably 13.0 or less, even further still more preferably 10.0 or less, and even further even still more preferably 8.0 or less, and is preferably 2.0 or more, more preferably 3.0 or more, still more preferably 4.0 or more, even more preferably 5.0 or more, even still more preferably 6.0 or more, even further more preferably 6.5 or more, and even further still more preferably 7.0 or more.

From the viewpoint of further improving the film formability, a z+1 average molecular weight (Mz+1) in terms of polystyrene, which is measured by gel permeation chromatography (GPC), of the ethylene-based polymer (A) is preferably 10,000,000 or less, more preferably 8,000,000 or less, still more preferably 5,000,000 or less, even more preferably 4,000,000 or less, and even still more preferably 3,500,000 or less, and from the viewpoint of further improving the thermal dimensional stability, is preferably 1,000,000 or more, more preferably 1,500,000 or more, still more preferably 1,800,000 or more, even more preferably 2,000,000 or more, even still more preferably 2,200,000 or more, even further more preferably 2,300,000 or more, and even further still more preferably 2,500,000 or more.

In a case where two or more kinds of polymers are used as the ethylene-based polymer (A), the z-average molecular weight (Mz), the weight-average molecular weight (Mw), the number-average molecular weight (Mn), and the z+1 average molecular weight (Mz+1) of the ethylene-based polymer (A) can be adopted as the z-average molecular weight (Mz), the weight-average molecular weight (Mw), the number-average molecular weight (Mn), and the z+1 average molecular weight (Mz+1) of a mixture obtained by melt-blending two or more kinds of polymers by a known method. The z-average molecular weight (Mz), the weight-average molecular weight (Mw), the number-average molecular weight (Mn), and the z+1 average molecular weight (Mz+1) of the ethylene-based polymer (A) can be measured by the method described in Examples.

From the viewpoint of further improving the balance of various performances such as thermal dimensional stability, film formability, heat resistance, mechanical properties, rigidity, and transparency, when the total of the ethylene-based polymer composition, that is, the total of the biaxially stretched film layer 101 is set to 100% by mass, the content of the ethylene-based polymer (A) in the ethylene-based polymer composition, that is, in the biaxially stretched film layer 101 is preferably 80% by mass or more, more preferably 85% by mass or more, still more preferably 90% by mass or more, even more preferably 95% by mass or more, even still more preferably 97% by mass or more, and even still more preferably 99% by mass or more, and from the viewpoint of further improving the performance balance of processability and continuous productivity, is preferably 100% by mass or less.

The ethylene-based polymer (A) of the fourth embodiment preferably includes one or two or more kinds selected from the group consisting of low-density polyethylene (LDPE), linear low-density polyethylene (LLDPE), medium-density polyethylene (MDPE), and high-density polyethylene (HDPE), more preferably includes one or two or more kinds selected from the group consisting of low-density polyethylene (LDPE), linear low-density polyethylene (LLDPE), and high-density polyethylene (HDPE), and still more preferably includes high-density polyethylene (HDPE), from the viewpoint of further improving the balance of various performances such as thermal dimensional stability, film formability, heat resistance, water vapor barrier properties, mechanical properties, and rigidity.

Here, the low-density polyethylene (LDPE) represents polyethylene having a density of 0.910 g/cm³ or more and less than 0.930 g/cm³, the medium-density polyethylene (MDPE) represents polyethylene having a density of 0.930 g/cm³ or more and less than 0.942 g/cm³, and the high-density polyethylene (HDPE) represents polyethylene having a density of 0.942 g/cm³ or more. In addition, low-density polyethylene having few branched structures is represented as linear low-density polyethylene (LLDPE).

From the viewpoint of further improving the balance of various performances such as thermal dimensional stability, film formability, heat resistance, mechanical properties, and rigidity, when the total of the ethylene-based polymer composition, that is, the total of the biaxially stretched film layer 101 is set to 100% by mass, the content of the high-density polyethylene in the ethylene-based polymer composition, that is, in the biaxially stretched film layer 101 is preferably 60% by mass or more, more preferably 65% by mass or more, still more preferably 70% by mass or more, even more preferably 75% by mass or more, even still more preferably 80% by mass or more, and even still more preferably 85% by mass or more, and from the viewpoint of further improving the performance balance of processability and continuous productivity, is preferably 100% by mass or less, and more preferably 95% by mass or less.

The high-density polyethylene has a problem in that the moldability is low and it is difficult to biaxially stretch the high-density polyethylene to form a film. The present inventors have found that the thermal dimensional stability can be improved while improving the film formability by setting the z-average molecular weight of the ethylene-based polymer (A) containing the high-density polyethylene within a predetermined range.

From the viewpoint of further improving the balance of various performances such as thermal dimensional stability, film formability, heat resistance, mechanical properties, and rigidity, the density of the ethylene-based polymer (A), which is measured in accordance with JIS K 7112:1999, is preferably 0.937 g/cm³ or more, more preferably 0.940 g/cm³ or more, still more preferably 0.943 g/cm³ or more, even still more preferably 0.945 g/cm³ or more, even still more preferably 0.948 g/cm³ or more, and even still more preferably 0.950 g/cm³ or more, and from the viewpoint of further improving the film formability, the density is preferably 0.970 g/cm³ or less, more preferably 0.965 g/cm³ or less, still more preferably 0.963 g/cm³ or less, and even still more preferably 0.960 g/cm³ or less.

In a case where two or more kinds of polymers are used as the ethylene-based polymer, the density of a mixture obtained by melt-blending two or more kinds of ethylene-based polymers by a known method can be adopted.

From the viewpoint of further improving the performance balance of fluidity, film formability, and thermal dimensional stability, the melt mass flow rate (MFR) of the ethylene-based polymer (A) measured under the conditions of 190°C and a load of 2160 g in accordance with JIS K 7210: 1999 is preferably 0.1 g/10 min or more, more preferably 0.2 g/10 min or more, still more preferably 0.3 g/10 min or more, even more preferably 0.5 g/10 min or more, and even still more preferably 0.8 g/10 min or more, and from the viewpoint of further improving the performance balance of film formability and thermal dimensional stability and further improving the rigidity of the biaxially stretched polyethylene film 100, is preferably 5.0 g/10 min or less, more preferably 4.5 g/10 min or less, still more preferably 4.0 g/10 min or less, even more preferably 3.5 g/10 min or less, even still more preferably 3.0 g/10 min or less, even further more preferably 2.5 g/10 min or less, and even further still more preferably 2.0 g/10 min or less.

In a case where two or more kinds of polymers are used as the ethylene-based polymer (A), the MFR of a mixture obtained by melt-blending two or more kinds of polymers by a known method can be adopted.

From the viewpoint of further improving the performance balance of film formability, thermal dimensional stability, heat resistance, water vapor barrier properties, mechanical properties, rigidity, bag-making properties, fluidity, and the like, the melting point of the ethylene-based polymer (A) measured by a differential scanning calorimeter (DSC) is preferably 70°C or higher, more preferably 75°C or higher, still more preferably 90°C or higher, even more preferably 95°C or higher, even still more preferably 100°C or higher, even further more preferably 110°C or higher, even further still more preferably 120°C or higher, and even further even still more preferably 125°C or higher, and is preferably 150°C or lower, more preferably 140°C or lower, still more preferably 135°C or lower, and even still more preferably 134°C or lower.

In a case where two or more kinds of polymers are used as the ethylene-based polymer, the melting point of the ethylene-based polymer (A) is the peak temperature of the maximum endothermic peak.

In addition, the ethylene-based polymer (A) of the fourth embodiment may further include one or two or more kinds selected from the group consisting of an α-olefin copolymer (provided that an ethylene-α-olefin copolymer is excluded) and an ethylene-α-olefin copolymer, in addition to the above-described polyethylene, and it is more preferable to include the ethylene-α-olefin copolymer. From the viewpoint of further improving the performance balance of thermal dimensional stability, film formability, and flexibility, the ethylene-α-olefin copolymer preferably includes one or two or more selected from the group consisting of an ethylene/1-butene random copolymer and an ethylene/propylene random copolymer, and more preferably includes an ethylene/1-butene random copolymer. The α-olefin copolymer includes one or two or more selected from the group consisting of a propylene/ethylene random copolymer and a 1-butene/propylene random copolymer.

From the viewpoint of further improving the performance balance of thermal dimensional stability, film formability, and flexibility, the density of the ethylene-α-olefin copolymer measured in accordance with JIS K 7112:1999 is preferably 0.860 g/cm³ or more, more preferably 0.870 g/cm³ or more, still more preferably 0.880 g/cm³ or more, and even more preferably 0.890 g/cm³ or more, and is preferably 0.920 g/cm³ or less, more preferably 0.910 g/cm³ or less, and still more preferably 0.900 g/cm³ or less.

From the viewpoint of further improving the performance balance of fluidity, film formability, and thermal dimensional stability, the melt mass flow rate (MFR) of the ethylene-α-olefin copolymer measured under the conditions of 190°C and a load of 2160 g in accordance with JIS K 7210:1999 is preferably 0.1 g/10 min or more, more preferably 0.2 g/10 min or more, still more preferably 0.3 g/10 min or more, even more preferably 0.5 g/10 min or more, and even still more preferably 1.0 g/10 min or more, and from the viewpoint of further improving the performance balance of film formability and thermal dimensional stability and further improving the rigidity of the biaxially stretched polyethylene film 100, is preferably 5.0 g/10 min or less, more preferably 4.5 g/10 min or less, and still more preferably 4.0 g/10 min or less.

From the viewpoint of further improving the performance balance of film formability, thermal dimensional stability, heat resistance, water vapor barrier properties, mechanical properties, rigidity, bag-making properties, fluidity, and the like, the melting point of the ethylene-α-olefin copolymer measured by a differential scanning calorimeter (DSC) is preferably 40°C or higher, more preferably 50°C or higher, still more preferably 60°C or higher, and even more preferably 70°C or higher, and is preferably 120°C or lower, more preferably 110°C or lower, still more preferably 100°C or lower, even more preferably 90°C or lower, and even still more preferably 80°C or lower.

When the total of the biaxially stretched film layer is set to 100% by mass, the content of the ethylene-α-olefin copolymer in the biaxially stretched film layer 101 is preferably 5% by mass or more, more preferably 8% by mass or more, and is preferably 40% by mass or less, more preferably 35% by mass or less, still more preferably 30% by mass or less, even more preferably 25% by mass or less, even still more preferably 20% by mass or less, and even still more preferably 15% by mass or less.

### (Other Components)

Various additives such as a tackifier, a heat stabilizer, a weathering stabilizer, an antioxidant, an ultraviolet absorber, a lubricant, a slip agent, a nucleating agent, an anti-blocking agent, an antistatic agent, an antifogging agent, a pigment, a dye, and an inorganic or organic filler may be added to the ethylene-based polymer composition constituting the biaxially stretched film layer 101 as necessary within a range not impairing the object of the fourth embodiment.

### (Method for Preparing Ethylene-Based Polymer Composition)

The ethylene-based polymer composition can be prepared, for example, by mixing or melt-kneading each component by dry blending, a tumbler mixer, a banbury mixer, a single-screw extruder, a twin-screw extruder, a high-speed twin-screw extruder, a heat roll, or the like.

The biaxially stretched film layer 101 may be a single layer or may have a configuration in which a plurality of layers formed of an ethylene-based polymer composition are laminated, but it is necessary that the biaxially stretched film layer 101 is formed by biaxial stretching.

From the viewpoint of further improving the performance balance of thermal dimensional stability, film formability, water vapor barrier properties, cost, mechanical properties, transparency, bag-making properties, handleability, appearance, lightweight properties, and the like, the thickness of the biaxially stretched film layer 101 is preferably 5 µm or more, more preferably 10 µm or more, still more preferably 12 µm or more, and even more preferably 15 µm or more, and is preferably 100 µm or less, more preferably 50 µm or less, still more preferably 40 µm or less, even more preferably 30 µm or less, and even still more preferably 25 µm or less.

In the biaxially stretched polyethylene film 100, the proportion of the thickness of the biaxially stretched film layer 101 to the total thickness of the biaxially stretched polyethylene film 100 is preferably 50% or more, more preferably 60% or more, still more preferably 70% or more, and even more preferably 75% or more, and is preferably 100% or less, more preferably 99% or less, still more preferably 95% or less, and even more preferably 90% or less.

### [Surface Resin Layer]

From the viewpoint of imparting functions such as heat fusion resistance, heat sealability, antistatic properties, blocking resistance, printing suitability, and slip properties to the film surface, the biaxially stretched polyethylene film 100 preferably further includes a surface resin layer 103 on at least one surface of the biaxially stretched film layer 101, depending on the purpose.

The surface resin layer 103 may be provided on both surfaces of the biaxially stretched film layer 101. By providing the surface resin layer 103 on both surfaces of the biaxially stretched film layer 101, different functions can be imparted to each surface of the film.

In a case where the surface resin layer 103 is provided on both surfaces of the biaxially stretched film layer 101, it is preferable that the surface resin layer 103 on one surface has heat sealability. By folding the biaxially stretched polyethylene film 100 with this surface facing inward and heat-sealing the end part, a bag shape can be obtained. In addition, it is preferable that the surface resin layer 103 on the other surface has blocking resistance, antistatic properties, printability, and the like.

In addition, depending on the purpose, from the viewpoint of further improving the functions of the biaxially stretched polyethylene film 100 such as heat fusion resistance, heat sealability, antistatic properties, blocking resistance, printability, and slip properties, it is preferable that the surface resin layer 103 is provided on the outermost layer of the biaxially stretched polyethylene film 100.

It is preferable that the surface resin layer 103 is provided to be in direct contact with the surface of the biaxially stretched film layer 101. As a result, the manufacturing process of the biaxially stretched polyethylene film 100 can be simplified.

In the biaxially stretched polyethylene film 100, from the viewpoint of further improving the performance balance of film formability, thermal dimensional stability, water vapor barrier properties, mechanical properties, bag-making properties, handleability, and packaging suitability of the biaxially stretched polyethylene film 100, the thickness of the surface resin layer 103 is preferably 0.1 µm or more, more preferably 0.2 µm or more, still more preferably 0.5 µm or more, even more preferably 1.0 µm or more, and even still more preferably 1.5 µm or more, and from the viewpoint of further improving the performance balance of film formability, thermal dimensional stability, water vapor barrier properties, mechanical properties, bag-making properties, handleability, packaging suitability, cost, environmental compatibility, lightweight properties, and the like of the biaxially stretched polyethylene film 100, is preferably 10 µm or less, more preferably 8 µm or less, still more preferably 6 µm or less, even more preferably 5 µm or less, and even still more preferably 3 µm or less.

Here, the thickness of the surface resin layer 103 refers to the thickness of the surface resin layer 103 provided on one surface of the biaxially stretched film layer 101. That is, in the fourth embodiment, in a case where the surface resin layer 103 is provided on both surfaces of the biaxially stretched film layer 101, the above-described thickness of the surface resin layer 103 indicates the thickness of the surface resin layer 103 provided on one surface of the biaxially stretched film layer 101.

In the biaxially stretched polyethylene film 100, it is preferable that the surface resin layer 103 is a single layer. As a result, the manufacturing process of the biaxially stretched polyethylene film 100 can be further simplified.

The surface resin layer 103 is preferably formed by being biaxially stretched at the same time as the film in a state before the biaxial stretching of the biaxially stretched film layer 101. As a result, since the biaxially stretched polyethylene film 100 can be produced using a molding method such as a co-extrusion molding method, that is, a laminated film produced by one-time molding, the manufacturing process of the biaxially stretched polyethylene film 100 can be further simplified. Therefore, the surface resin layer 103 is preferably biaxially stretched.

In addition, the surface resin layer 103 may be subjected to a surface treatment from the viewpoint of further improving the performance balance of the printing suitability and the blocking resistance of the biaxially stretched polyethylene film 100. Specifically, a surface activation treatment such as a corona treatment, a flame treatment, a plasma treatment, a primer coating treatment, or an ozone treatment may be performed.

The surface resin layer 103 is composed of, for example, a polyolefin-based resin composition containing a polyolefin. The polyolefin constituting the surface resin layer 103 includes, for example, one or more selected from the group consisting of a homopolymer or copolymer of α-olefins such as ethylene, propylene, 1-butene, hexene-1, 4-methyl-pentene-1, and 1-octene; low-density polyethylene by a high pressure method; linear low-density polyethylene (LLDPE); high-density polyethylene; homopolypropylene; a random copolymer of propylene and an α-olefin having 2 to 10 carbon atoms; an ethylene-vinyl acetate copolymer (EVA); and an ionomer resin.

Among these, as the polyolefin constituting the surface resin layer 103, from the viewpoint of further improving the performance balance of the film formability, thermal dimensional stability, heat fusion resistance, heat resistance, water vapor barrier properties, transparency, mechanical properties, rigidity, bag-making properties, fluidity, and the like of the biaxially stretched polyethylene film 100, an ethylene-based polymer is preferable. Here, the preferred aspect of the ethylene-based polymer constituting the surface resin layer 103 is the same as that of the ethylene-based polymer described above. That is, the ethylene-based polymer constituting the surface resin layer 103 preferably includes the ethylene-based polymer (A) described above.

In addition, in a case where the surface resin layer 103 is provided on both surfaces of the biaxially stretched film, the polyolefin-based resin compositions constituting the respective surface resin layers 103 may be the same or different from each other.

From the viewpoint of further improving the performance balance of the film formability, thermal dimensional stability, heat fusion resistance, heat resistance, water vapor barrier properties, transparency, mechanical properties, rigidity, bag-making properties, fluidity, and the like of the biaxially stretched polyethylene film 100, in a case where the entire polyolefin-based resin composition (A), that is, the entire surface resin layer 103 is set to 100% by mass, the content of the polyolefin in the polyolefin-based resin composition (A), that is, in the surface resin layer 103 is preferably equal to or more than 75% by mass, more preferably equal to or more than 80% by mass, still more preferably equal to or more than 90% by mass, even still more preferably equal to or more than 95% by mass, even still more preferably equal to or more than 98% by mass, and even still more preferably equal to or more than 99% by mass, and is preferably equal to or less than 100% by mass.

From the viewpoint of further improving the performance balance of the film formability, thermal dimensional stability, heat fusion resistance, heat resistance, water vapor barrier properties, transparency, mechanical properties, rigidity, bag-making properties, fluidity, and the like of the biaxially stretched polyethylene film 100, the content of the ethylene-based polymer in the polyolefin-based resin composition, that is, in the surface resin layer 103 is preferably 75% by mass or more, more preferably 80% by mass or more, still more preferably 90% by mass or more, even more preferably 95% by mass or more, even still more preferably 98% by mass or more, and even still more preferably 99% by mass or more, and is preferably 100% by mass or less, in a case where the total of the polyolefin-based resin composition, that is, the total of the surface resin layer 103 is set to 100% by mass.

### (Other Components)

Various additives such as a tackifier, a heat-resistant stabilizer, a weather-resistant stabilizer, an antioxidant, an ultraviolet absorber, a lubricant, a slip agent, a nucleating agent, an antiblocking agent, an antistatic agent, an antifogging agent, a pigment, a dye, and an inorganic or organic filler may be added as necessary to the polyolefin-based resin composition constituting the surface resin layer 103 as long as the object of the fourth embodiment is not impaired.

### (Method for Preparing Polyolefin-Based Resin Composition)

The polyolefin-based resin composition can be prepared by mixing or melt-kneading, for example, the respective components by dry blending, a tumbler mixer, a Banbury mixer, a single-screw extruder, a twin-screw extruder, a high-speed twin-screw extruder, a heat roll, or the like.

### <Method for Producing Biaxially Stretched Polyethylene Film>

The biaxially stretched polyethylene film 100 can be obtained, for example, by biaxially stretching a film obtained by co-extrusion-molding an ethylene-based polymer composition for forming the biaxially stretched film layer 101 in a film shape using a biaxially stretched film production method such as a known simultaneous biaxial stretching method, a sequential biaxial stretching method, or an inflation biaxial stretching method.

The molding device and the molding conditions are not particularly limited, and a molding device and molding conditions known in the related art can be adopted. As the molding device, a T-die extruder, a multilayer T-die extruder, an inflation molding machine, a multilayer inflation molding machine, or the like can be used. The biaxial stretching conditions can be, for example, known polyethylene film production conditions. For example, in the sequential biaxial stretching method, the stretching temperature in the MD direction may be set to be preferably in a range of 100°C to 145°C, more preferably in a range of 110°C to 140°C, and still more preferably in a range of 120°C to 135°C, and the stretching temperature in the TD direction may be set to be preferably in a range of 110°C to 190°C and more preferably in a range of 120°C to 170°C. In addition, the stretching ratio in the MD direction may be set to preferably in a range of 4.5 to 7 times, and the stretching ratio in the TD direction may be set to preferably in a range of 9 to 11 times.

Here, specifically, it is necessary to set the stretching temperature to three stages of a preheating temperature (temperature for heating the film raw material before stretching)/a stretching temperature (temperature during stretching)/a heat setting temperature (temperature during heat setting (annealing) after stretching), and the temperature can be set to the above-described range from preheating to heat setting. That is, the temperature can be set to approximately the same level from the preheating stage through stretching and heat setting. Since the biaxially stretched polyethylene film 100 of the fourth embodiment contains the ethylene-based polymer (A), it can be processed at a higher temperature, the heat resistance of the obtained biaxially stretched polyethylene film 100 can be further improved, and the thermal dimensional stability can be further improved.

In addition, the biaxially stretched polyethylene film 100 can also be obtained by separately molding the biaxially stretched film layer 101 and the surface resin layer 103 as necessary and laminating and heat-molding the biaxially stretched film layer 101 and the surface resin layer 103.

### <Use of Biaxially Stretched Polyethylene Film/Packaging Material/Packaged Article>

Specifically, the biaxially stretched polyethylene film 100 of the fourth embodiment can be suitably used as a packaging film.

In addition, the biaxially stretched polyethylene film 100 of the fourth embodiment can be suitably used as a packaging material.

In a case of being used as a packaging material, the packaging material may be formed of only the stretched polyethylene film 100 of the fourth embodiment, or other layers may be laminated to form a packaging material. The other layers preferably further include one or two or more selected from the group consisting of an inorganic layer, a base layer, a coating layer, an adhesive layer, and a heat seal layer, and more preferably further include one or two or more selected from the group consisting of an inorganic layer and a coating layer. From the viewpoint of ease of recycling, in a case where these layers are laminated, it is preferable that the layers are formed of a polyethylene-based resin.

In addition, the packaging material of the fourth embodiment can be suitably used for a packaged article. The packaged article is used for the purpose of packaging an article, and specifically, includes the packaging material of the fourth embodiment and an article in the packaging material. Among these, the packaged article of the fourth embodiment can be suitably used as a food packaged article, and is used for the purpose of packaging food, and specifically includes the packaging material of the fourth embodiment and food in the packaging material.

The food packaged in the food packaging body is not limited, and examples thereof include baked confectionery, rice crackers, snack foods, furikake (seasoned powder for sprinkling over rice), and grain powder.

In the packaged article, depending on the application, only a part of the packaged article may be formed of the packaging material of the fourth embodiment, or substantially the entire packaged article may be formed of the packaging material of the fourth embodiment.

A method for manufacturing a packaged article from the biaxially stretched polyethylene film 100 or the packaging material is not particularly limited. A method known in the field of packaging material and the packaged body, such as heat sealing or fusing, can be appropriately used.

The biaxially stretched polyethylene film 100 according to the fourth embodiment is preferably used for a packaged article that requires good film formability and thermal dimensional stability. The form of the packaged article can be, for example, a gusseted bag or a standing pouch (pouch packaging).

In addition, in a case where a packaged article (food packaging bag or the like) is formed of the biaxially stretched polyethylene film 100 or the packaging material of the fourth embodiment, it is preferable that the corona-treated surface is on the inner surface side and the corona-untreated surface is on the outer surface side.

In addition, in a case where another layer is further laminated on the biaxially stretched polyethylene film 100 as described above, it is preferable to laminate the layer on the corona-treated surface side. That is, in a case where a laminate using the biaxially stretched polyethylene film 100 of the fourth embodiment is used for a packaged article (food packaging bag or the like), it is preferable that the biaxially stretched polyethylene film 100 of the fourth embodiment is the outermost layer of the packaged article.

Although the fourth embodiment of the present invention has been described above, these are examples of the fourth embodiment of the present invention, and various configurations other than the above can be adopted. In addition, the present invention is not limited to the fourth embodiment described above, and modifications, improvements, and the like within a range in which the object of the present invention can be achieved are included in the present invention.

Although each embodiment of the present invention has been described above, these are merely examples of the present invention, and various configurations other than the above can also be adopted. In addition, the present invention is not limited to each of the above-described embodiments, and modifications, improvements, and the like within a range in which the object of the present invention can be achieved are included in the present invention.

In addition, a configuration in which the configurations of each of the above-described embodiments are combined is also included in the present invention.

### Examples

Hereinafter, each embodiment of the present invention will be described in detail with reference to Examples and Comparative Examples. It is noted that each embodiment of the present invention is not limited to the description of these Examples.

### <<Examples 1A to 8A and Comparative Examples 1A to 4A>>

Hereinafter, the first embodiment will be described in detail with reference to Examples 1A to 8A and Comparative Examples 1A to 4A. The first embodiment is not at all limited to the descriptions in these examples.

### <Raw Materials>

The raw materials used in Examples 1A to 8A and Comparative Examples 1A to 4A are shown below.

The density was measured in accordance with JIS K 7112:1999.

The MFR was measured under conditions of 190°C and a load of 2160 g in accordance with JIS K 7210:1999.

The melting point was measured using a differential scanning calorimeter (DSC). Specifically, using a differential scanning calorimeter (product name: Q200 DSC, manufactured by TA Instruments), a first differential scanning calorimetry consisting of a process of raising the temperature from -50°C to 230°C at a heating rate of 10°C/min and a process of lowering the temperature from 230°C to -50°C at a cooling rate of 10°C/min under a nitrogen stream, and a second differential scanning calorimetry consisting of a process of raising the temperature from -50°C to 230°C at a heating rate of 10°C/min were continuously performed.

The peak temperature of the maximum endothermic peak in the DSC curve in the second measurement was defined as the melting point (°C).

· Linear low-density polyethylene 1 (LLDPE1), density: 0.928 g/cm³, MFR: 1.9 g/10 min, melting point: 126°C
· Linear low-density polyethylene 2 (LLDPE2), density: 0.937 g/cm³, MFR: 1.8 g/10 min, melting point: 127°C
· Linear low-density polyethylene 3 (LLDPE3), density: 0.903 g/cm³, MFR: 3.8 g/10 min, melting point: 98°C
· High-density polyethylene 1 (HDPE1), density: 0.964 g/cm³, MFR: 5.2 g/10 min, melting point: 135°C
· High-density polyethylene 2 (HDPE2), density: 0.958 g/cm³, MFR: 1.0 g/10 min, melting point: 133°C
· High-density polyethylene 3 (HDPE3), density: 0.955 g/cm³, MFR: 0.36 g/10 min, melting point: 130°C
· Ethylene-1-butene random copolymer 1 (EBR1), density: 0.893 g/cm³, MFR: 3.6 g/10 min, melting point: 77°C

### <Production of Biaxially Stretched Polyethylene Film>

In Examples 1A to 8A and Comparative Examples 1A to 4A, a polyethylene film was extrusion-molded with the composition shown in Table 1, and then biaxially stretched to produce a biaxially stretched polyethylene film, and each evaluation was performed. The extrusion molding conditions and the biaxial stretching treatment conditions are as follows. In addition, a corona treatment was performed on the surface of the surface resin layer 2 side in Table 1.
Extrusion molding machine: 60 mmφ multilayer T-die extrusion molding machine (screw: L/D = 27, manufactured by Screw Engineering Co., Ltd.)
Extrusion setting temperature: 230°C to 250°C, processing speed: 15 m/min (winding speed)
Stretching temperature in MD direction [°C]: shown in Table 1
Stretching ratio in MD direction [times]: shown in Table 1
Stretching temperature in TD direction [°C]: shown in Table 1
Stretching ratio in TD direction [times]: shown in Table 1
Relaxation rate [%]: shown in Table 1

Here, the relaxation rate indicates the maximum stretching width on the device setting ÷ the tenter outlet width.

In addition, the notation "A/B/C" of the stretching temperature in Table 1 means "preheating temperature (temperature at which the film original material before stretching is heated)/stretching temperature (temperature during stretching)/heat setting temperature (temperature during heat setting (annealing) after stretching)". In addition, the notation of "A/B/C/D" of the stretching temperature in Table 1 means "preheating temperature (temperature for heating the film raw material before stretching)/stretching temperature 1 (temperature 1 during stretching)/stretching temperature 2 (temperature 2 during stretching)/heat setting temperature (temperature during heat setting (annealing) after stretching)".

The MFR of the entire biaxially stretched polyethylene film of each of the obtained examples was measured. In addition, in each of the examples, the density of the resin before being made into a film was measured. In addition, the following evaluations were performed. Each of the obtained results is shown in Table 1.

In Comparative Example 4A, since the film was cut during stretching, a biaxially stretched polyethylene film could not be obtained.

### <Dynamic viscoelasticity measurement (DMA)>

The biaxially stretched polyethylene film of each of the examples was subjected to dynamic viscoelasticity measurement (DMA) as follows.

For the biaxially stretched polyethylene film of each of the examples, using a dynamic viscoelasticity measuring device, a storage modulus E'_{MD} and a loss elastic modulus E"_{MD} in the MD direction at 100°C were measured according to the following measurement conditions, and a loss tangent (tanδ_{MD}) was calculated from the ratio of E'_{MD} to E"_{MD}.

### [Measurement conditions]

Device: dynamic viscoelasticity measuring device RSA-G2, manufactured by TA Instruments
Measurement temperature range: 30°C to 130°C
Heating rate: 5°C/min
Strain: 0.1%
Measurement mode: tension
Frequency: 1 Hz
Sample width: 5 mm
Distance between chucks: 20 mm
Measurement direction: MD direction; and a storage modulus E'_{TD} and a loss elastic modulus E"_{TD} in the TD direction at 100°C were measured in the same manner as the above conditions, except that the measurement direction was changed to the TD direction, and a loss tangent (tanδ_{TD}) was calculated from the ratio of E'_{TD} to E"_{TD}.

### <Tensile Modulus>

A test piece of 15 mm × 15 cm was cut out from the biaxially stretched polyethylene film of each example. Next, using a tensile tester manufactured by Orientec Co., Ltd., the tensile modulus T₁ in the MD direction and the tensile modulus T₂ in the TD direction of the test piece were measured under the conditions of a measurement temperature of 23 ± 2°C, a relative humidity of 50 ± 5% RH, and a tensile speed of 5 mm/min, in accordance with JIS K7127:1999. From the obtained values, the total value of T₁ and T₂ was calculated.

### <Moisture Permeability>

A moisture permeability (g/(m²·day)) of the biaxially stretched polyethylene film of each example was measured in accordance with JIS Z 0208: 1976.

### <Breaking Stress>

For the biaxially stretched polyethylene film of each example, a breaking stress (MPa) in each of the MD direction and the TD direction was measured using a tensile tester in accordance with JIS K7127:1999. The biaxially stretched polyethylene film of each example was cut out into a dumbbell shape in accordance with the above JIS standard to obtain a test piece, and the test piece was pulled in each of the MD direction and the TD direction under the conditions of a distance between chucks: 50 mm, a tensile speed: 300 mm/min, 23°C, and a relative humidity of 50% RH, thereby measuring a breaking stress (MPa) in each of the MD direction and the TD direction. The breaking stress is a value obtained by dividing a tensile force of a breaking point at the time of breaking in the tensile test by an initial cross-sectional area of the test piece. A total of the breaking stresses in the MD direction and the TD direction was calculated from the obtained values.

### <Thermal Shrinkage Rate Of Biaxially Stretched Polyethylene Film at 100°C>

A thermal shrinkage rate of the biaxially stretched polyethylene film in the MD direction and the TD direction at 100°C was measured in accordance with JIS C2151: 2019.

A test piece of 10 cm × 10 cm was cut out from the biaxially stretched polyethylene film of each example. Next, the test piece was subjected to a heat treatment at 100°C for 15 minutes. In this case, the test piece was suspended and heated in a hot air circulation type constant-temperature tank (product name: DRM620DE, manufactured by ADVANTEC) in a state where no force was applied. Next, the test piece was cooled to room temperature, and then the length of the test piece was measured. The length of the test piece after the heat treatment in the MD direction was defined as MD₁₀₀ [cm], and the thermal shrinkage rate X_{MD100} [%] in the MD direction was calculated by 100 × (10 - MD₁₀₀)/10. The length of the test piece after the heat treatment in the TD direction was defined as TD₁₀₀ [cm], and the thermal shrinkage rate X_{TD100} [%] in the TD direction was calculated by 100 × (10 - TD₁₀₀)/10. The above-described measurement was performed three times, and an average value of the obtained measured values was adopted as the thermal shrinkage rate of the biaxially stretched polyethylene film at 100°C.

### <Thermal Shrinkage Rate Of Biaxially Stretched Polyethylene Film at 120°C>

A thermal shrinkage rate of the biaxially stretched polyethylene film in the MD direction and the TD direction at 120°C was measured in accordance with JIS C2151: 2019.

A test piece of 10 cm × 10 cm was cut out from the biaxially stretched polyethylene film of each example. Next, the test piece was subjected to a heat treatment at 120°C for 15 minutes. In this case, the test piece was suspended and heated in a hot air circulation type constant-temperature tank (product name: DRM620DE, manufactured by ADVANTEC) in a state where no force was applied. Next, the test piece was cooled to room temperature, and then the length of the test piece was measured. The length of the test piece after the heat treatment in the MD direction was defined as MD₁₂₀ [cm], and the thermal shrinkage rate X_{MD120} [%] in the MD direction was calculated by 100 × (10 - MD₁₂₀)/10. The length of the test piece after the heat treatment in the TD direction was defined as TD₁₂₀ [cm], and the thermal shrinkage rate X_{TD120} [%] in the TD direction was calculated by 100 × (10 - TD₁₂₀)/10. The above-described measurement was performed three times, and an average value of the obtained measured values was adopted as the thermal shrinkage rate of the biaxially stretched polyethylene film at 120°C.

### [Table 1]

**Table 1**

| | | | Comparative Example 1A | Comparative Example 2A | Comparative Example 3A | Comparative Example 4A | Example 1A | Example 2A | Example 3A | Example 4A | Example 5A | Example 6A | Example 7A | Example 8A |
|---|---|---|---|---|---|---|---|---|---|---|---|---|---|---|
| Surface resin layer 1 (corona-untreated surface) | | Type | LLDPE 1 = 100 (% by mass) | HDPE 2/EBR 1 = 50/50 (% by mass) | HDPE 2/LLDPE 3 = 50/50 (% by mass) | HDPE 1 = 100 (% by mass) | HDPE 2 = 100 (% by mass) | HDPE 3 = 100 (% by mass) | HDPE 2/EBR 1 = 90/10 (% by mass) | HDPE 2/EBR 1 = 70/30 (% by mass) | HDPE 2/LLDPE 3 = 90/10 (% by mass) | HDPE 2/LLDPE 3 = 70/30 (% by mass) | HDPE 2/LLDPE 2 = 90/10 (% by mass) | HDPE 2/LLDPE 2 = 70/30 (% by mass) |
| | | Thickness [µm] | 2.0 | 2.0 | 2.0 | - | 2.0 | 2.0 | 2.0 | 2.0 | 2.0 | 2.0 | 2.0 | 2.0 |
| Biaxially stretched film layer | | Type | LLDPE 1 = 100 (% by mass) | HDPE 2/EBR 1 = 50/50 (% by mass) | HDPE 2/LLDPE 3 = 50/50 (% by mass) | HDPE 1 = 100 (% by mass) | HDPE 2 = 100 (% by mass) | HDPE 3 = 100 (% by mass) | HDPE 2/EBR 1 = 90/10 (% by mass) | HDPE 2/EBR 1 = 70/30 (% by mass) | HDPE 2/LLDPE 3 = 90/10 (% by mass) | HDPE 2/LLDPE 3 = 70/30 (% by mass) | HDPE 2/LLDPE 2 = 90/10 (% by mass) | HDPE 2/LLDPE 2 = 70/30 (% by mass) |
| | | Thickness [µm] | 22 | 22 | 22 | - | 20 | 25 | 17 | 18 | 21 | 22 | 23 | 22 |
| Surface resin layer 2 (corona-treated surface) | | Type | LLDPE 1 = 100 (% by mass) | HDPE 2/EBR 1 = 50/50 (% by mass) | HDPE 2/LLDPE 3 = 50/50 (% by mass) | HDPE 1 = 100 (% by mass) | HDPE 2 = 100 (% by mass) | HDPE 3 = 100 (% by mass) | HDPE 2/EBR 1 = 90/10 (% by mass) | HDPE 2/EBR 1 = 70/30 (% by mass) | HDPE 2/LLDPE 3 = 90/10 (% by mass) | HDPE 2/LLDPE 3 = 70/30 (% by mass) | HDPE 2/LLDPE 2 = 90/10 (% by mass) | HDPE 2/LLDPE 2 = 70/30 (% by mass) |
| | | Thickness [µm] | 2.0 | 2.0 | 2.0 | - | 2.0 | 2.0 | 2.0 | 2.0 | 2.0 | 2.0 | 2.0 | 2.0 |
| HDPE content of biaxially stretched film layer [% by mass] | | | 0 | 50 | 50 | 100 | 100 | 100 | 90 | 70 | 90 | 70 | 90 | 70 |
| Total thickness of biaxially stretched polyethylene film [µm] | | | 26 | 26 | 26 | - | 24 | 29 | 21 | 22 | 25 | 26 | 27 | 26 |
| MFR of biaxially stretched polyethylene film [g/min] | | | 1.9 | 1.9 | 1.9 | 5.2 | 1.0 | 0.4 | 1.1 | 1.3 | 1.1 | 1.5 | 1.0 | 1.2 |
| Density of ethylene-based polymer (A) [g/cm³] | | | 0.928 | 0.926 | 0.931 | 0.964 | 0.958 | 0.955 | 0.952 | 0.945 | 0.953 | 0.942 | 0.956 | 0.952 |
| Stretching temperature in MD direction [°C] | | | 105/98/100 | 115/113/110 | 115/115/110 | 127/125/125 | 127/125/125 | 128/125/130 | 127/127/125 | 127/127/125 | 127/127/125 | 127/127/125 | 127/127/125 | 127/127/125 |
| Stretching ratio in MD direction [times] | | | 5.0 | 5.0 | 5.0 | 5.0 | 5.0 | 6.0 | 5.0 | 5.0 | 5.0 | 5.0 | 5.0 | 5.0 |
| Stretching temperature in TD direction [°C] | | | 128/114/120/1 25 | 135/118/120/1 25 | 135/128/120/1 25 | 151/123/128 | 151/123/128 | 136/132/128 | 145/123/125 | 145/120/125 | 146/123/128 | 143/121/128 | 151/123/128 | 148/123/128 |
| Stretching ratio in TD direction [times] | | | 9.6 | 9.6 | 9.6 | 9.6 | 9.6 | 7.5 | 9.6 | 9.6 | 9.6 | 9.6 | 9.6 | 9.6 |
| Relaxation ratio [%] | | | 6.8 | 6.8 | 6.8 | 6.8 | 6.8 | 6.8 | 6.8 | 6.8 | 6.8 | 6.8 | 6.8 | 6.8 |
| DMA measured value of biaxially stretched polyethylene film | MD | E'_{MD} [MPa] | 12.5 | 19.0 | 29.7 | - | 404.9 | 195.0 | 270.5 | 144.9 | 229.2 | 76.2 | 271.9 | 168.6 |
| | | E"_{MD} [MPa] | 1.5 | 6.5 | 7.6 | - | 100.1 | 51.2 | 61.4 | 41.6 | 55.9 | 22.8 | 71.7 | 46.5 |
| | | tanδ_{MD} | 0.12 | 0.34 | 0.26 | - | 0.25 | 0.26 | 0.23 | 0.29 | 0.24 | 0.30 | 0.26 | 0.28 |
| | TD | E'_{TD} [MPa] | 20.4 | 54.7 | 52.2 | - | 567.6 | 230.5 | 487.3 | 320.6 | 357.0 | 128.3 | 387.7 | 231.6 |
| | | E"_{TD} [MPa] | 2.9 | 29.0 | 20.6 | - | 194.2 | 73.6 | 184.1 | 145.6 | 128.4 | 59.0 | 131.0 | 80.1 |
| | | tanδ_{TD} | 0.14 | 0.53 | 0.39 | - | 0.34 | 0.32 | 0.38 | 0.45 | 0.36 | 0.46 | 0.34 | 0.35 |
| Tensile modulus | [MPa] | | 433 | 482 | 664 | - | 2147 | 1853 | 1941 | 1378 | 1884 | 1143 | 2059 | 1640 |
| | | | 558 | 1099 | 1311 | - | 3491 | 2240 | 4410 | 1495 | 3350 | 1985 | 2864 | 2042 |
| | | T₁ + T₂ | 991 | 1581 | 1975 | - | 5638 | 4093 | 6351 | 2874 | 5234 | 3129 | 4923 | 3682 |
| Breaking stress | [MPa] | MD | 75 | 60 | 66 | - | 121 | 121 | 102 | 91 | 102 | 80 | 110 | 100 |
| | | TD | 120 | 121 | 133 | - | 201 | 163 | 300 | 244 | 241 | 154 | 154 | 128 |
| | | MD + TD | 195 | 181 | 199 | - | 322 | 284 | 402 | 335 | 343 | 235 | 264 | 229 |
| Moisture permeability | [g/(m²·day)] | | 17.3 | 17.8 | 13.8 | - | 4.4 | 5.3 | 5.4 | 7.0 | 4.8 | 10.0 | 5.1 | |
| Thermal shrinkage rate | 100°C-15 min [%] | X_{MD100} | 6.2 | 4.4 | 5.6 | - | 1.3 | 2.5 | 2.9 | 3.4 | 2.7 | 3.7 | 1.9 | 6.9 1.9 |
| | | X_{TD100} | 5.7 | 7.8 | 7.7 | - | 0.2 | 1.0 | 0.1 | 1.6 | 0.1 | 2.4 | 0.1 | 0.6 |
| | 120°C-15 min [%] | X_{MD120} | 28.9 | 9.9 | 11.8 | - | 4.1 | 6.6 | 6.5 | 6.9 | 6.4 | 7.4 | 5.4 | 5.6 |
| | | X_{TD120} | 52.5 | 32.8 | 36.1 | - | 1.8 | 8.4 | 4.4 | 10.3 | 3.9 | 14.4 | 1.9 | 3.9 |

### <<Examples 1B to 8B and Comparative Examples 1B to 4B>>

Hereinafter, a second embodiment will be described in detail with reference to Examples 1B to 8B and Comparative Examples 1B to 4B. The second embodiment is not at all limited to the descriptions in these examples.

### <Raw Materials>

Raw materials used in Examples 1B to 8B and Comparative Examples 1B to 4B are shown below.

The density was measured in accordance with JIS K 7112:1999.

The MFR was measured under conditions of 190°C and a load of 2160 g in accordance with JIS K 7210:1999.

The melting point was measured using a differential scanning calorimeter (DSC). Specifically, using a differential scanning calorimeter (product name: Q200 DSC, manufactured by TA Instruments), a first differential scanning calorimetry consisting of a process of raising the temperature from -50°C to 230°C at a heating rate of 10°C/min and a process of lowering the temperature from 230°C to -50°C at a cooling rate of 10°C/min under a nitrogen stream, and a second differential scanning calorimetry consisting of a process of raising the temperature from -50°C to 230°C at a heating rate of 10°C/min were continuously performed.

The peak temperature of the maximum endothermic peak in the DSC curve in the second measurement was defined as the melting point (°C).

· Linear low-density polyethylene 1 (LLDPE1), density: 0.928 g/cm³, MFR: 1.9 g/10 min, melting point: 126°C
· Linear low-density polyethylene 2 (LLDPE2), density: 0.937 g/cm³, MFR: 1.8 g/10 min, melting point: 127°C
· Linear low-density polyethylene 3 (LLDPE3), density: 0.903 g/cm³, MFR: 3.8 g/10 min, melting point: 98°C
· High-density polyethylene 1 (HDPE1), density: 0.964 g/cm³, MFR: 5.2 g/10 min, melting point: 135°C
· High-density polyethylene 2 (HDPE2), density: 0.958 g/cm³, MFR: 1.0 g/10 min, melting point: 133°C
· High-density polyethylene 3 (HDPE3), density: 0.955 g/cm³, MFR: 0.36 g/10 min, melting point: 130°C
· Ethylene-1-butene random copolymer 1 (EBR1), density: 0.893 g/cm³, MFR: 3.6 g/10 min, melting point: 77°C

### <Production of Biaxially Stretched Polyethylene Film>

In Examples 1B to 8B and Comparative Examples 1B to 4B, a polyethylene film was extrusion-molded with the composition shown in Table 2, and then biaxially stretched to produce a biaxially stretched polyethylene film, and each evaluation was performed. The extrusion molding conditions and the biaxial stretching treatment conditions are as follows. In addition, a corona treatment was performed on the surface of the surface resin layer 2 side in Table 2. The corona treatment was set such that the discharge amount was 20 w·min/m² by adjusting the discharge power.
Extrusion molding machine: 60 mmφ multilayer T-die extrusion molding machine (screw: L/D = 27, manufactured by Screw Engineering Co., Ltd.)
Extrusion setting temperature: 230°C to 250°C, processing speed: 15 m/min (winding speed)
Stretching temperature in MD direction [°C]: shown in Table 2
Stretching ratio in MD direction [times]: shown in Table 2
Stretching temperature in TD direction [°C]: shown in Table 2
Stretching ratio in TD direction [times]: shown in Table 2
Relaxation rate [%]: shown in Table 2

Here, the relaxation rate indicates the maximum stretching width on the device setting ÷ the tenter outlet width.

In addition, the notation "A/B/C" of the stretching temperature in Table 2 means "preheating temperature (temperature at which the film original material before stretching is heated)/stretching temperature (temperature during stretching)/thermal fixation temperature (temperature during thermal fixation (annealing) after stretching)". In addition, the notation of "A/B/C/D" of the stretching temperature in Table 2 means "preheating temperature (temperature for heating the film raw material before stretching)/stretching temperature 1 (temperature 1 during stretching)/stretching temperature 2 (temperature 2 during stretching)/heat setting temperature (temperature during heat setting (annealing) after stretching)".

The MFR of the entire biaxially stretched polyethylene film of each of the obtained examples was measured. In addition, in each of the examples, the density of the resin before being made into a film was measured. In addition, the following evaluations were performed. The obtained result is shown in Table 2.

In Comparative Example 4B, since the film was cut during stretching, a biaxially stretched polyethylene film was not obtained.

### <Thermomechanical Analysis (TMA)>

For the biaxially stretched polyethylene film of each example, the average linear expansion coefficient (α) at 100°C in the MD direction and the elongation rate (%) at 100°C in the MD direction were measured as follows with reference to JIS K 7197: 2012.

### [Measurement Conditions]

Measuring device: TMA Q400 (manufactured by TA Instruments)
Measurement mode: tensile mode
Test piece width: 4 mm
Initial distance between chucks: 8 mm
Measurement direction: MD direction
Load: 10 g/4 mm
Heating rate: 10 °C/min,
measurement temperature range: 20°C to 100°C

The average linear expansion coefficient (α) is calculated by Expression (1). 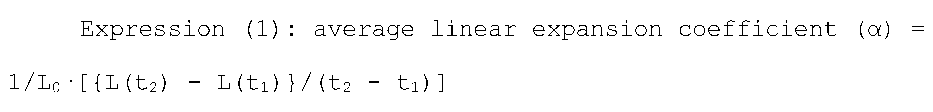 average linear expansion coefficient (α) = 1/L0·[{L(t2) - L(t1)}/(t2 - t1)]

In Expression (1), L₀, t₁, t₂, L(t₁), and L(t₂) are represented as follows.
L₀: initial distance between chucks of 8 mm
t₁: 20°C
t₂: 100°C
L(t₁): distance between chucks (mm) at a temperature t1
L(t₂): distance between chucks (mm) at a temperature t2

The elongation rate in the MD direction at 100°C was calculated by Expression (2). 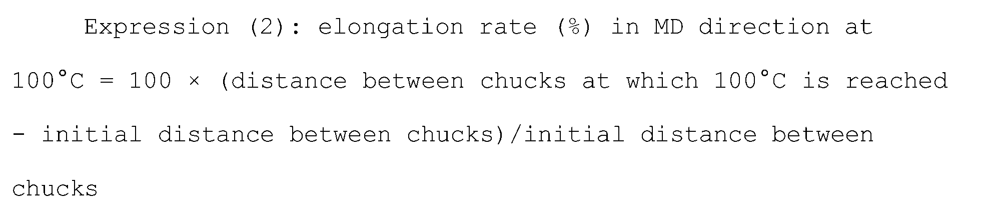 elongation rate (%) in MD direction at 100°C = 100 × (distance between chucks at which 100°C is reached - initial distance between chucks)/initial distance between chucks

### <Tensile Modulus>

A test piece of 15 mm × 15 cm was cut out from the biaxially stretched polyethylene film of each example. Next, using a tensile tester manufactured by Orientec Co., Ltd., the tensile modulus T₁ in the MD direction and the tensile modulus T₂ in the TD direction of the test piece were measured under the conditions of a measurement temperature of 23 ± 2°C, a relative humidity of 50 ± 5% RH, and a tensile speed of 5 mm/min, in accordance with JIS K7127:1999. From the obtained values, the total value of T₁ and T₂ was calculated.

### <Moisture Permeability>

A moisture permeability (g/(m²·day)) of the biaxially stretched polyethylene film of each example was measured in accordance with JIS Z 0208: 1976.

### <Breaking stress>

For the biaxially stretched polyethylene film of each example, a breaking stress (MPa) in each of the MD direction and the TD direction was measured using a tensile tester in accordance with JIS K7127:1999. The biaxially stretched polyethylene film of each example was cut out into a dumbbell shape in accordance with the above JIS standard to obtain a test piece, and the test piece was pulled in each of the MD direction and the TD direction under the conditions of a distance between chucks: 50 mm, a tensile speed: 300 mm/min, 23°C, and a relative humidity of 50% RH, thereby measuring a breaking stress (MPa) in each of the MD direction and the TD direction. The breaking stress is a value obtained by dividing a tensile force of a breaking point at the time of breaking in the tensile test by an initial cross-sectional area of the test piece. A total of the breaking stresses in the MD direction and the TD direction was calculated from the obtained values.

### <Thermal Shrinkage Rate Of Biaxially Stretched Polyethylene Film at 100°C>

A thermal shrinkage rate of the biaxially stretched polyethylene film in the MD direction and the TD direction at 100°C was measured in accordance with JIS C2151: 2019.

A test piece of 10 cm × 10 cm was cut out from the biaxially stretched polyethylene film of each example. Next, the test piece was subjected to a heat treatment at 100°C for 15 minutes. In this case, the test piece was suspended and heated in a hot air circulation type constant-temperature tank (product name: DRM620DE, manufactured by ADVANTEC) in a state where no force was applied. Next, the test piece was cooled to room temperature, and then the length of the test piece was measured. The length of the test piece after the heat treatment in the MD direction was defined as MD₁₀₀ [cm], and the thermal shrinkage rate X_{MD100} [%] in the MD direction was calculated by 100 × (10 - MD₁₀₀)/10. The length of the test piece after the heat treatment in the TD direction was defined as TD₁₀₀ [cm], and the thermal shrinkage rate X_{TD100} [%] in the TD direction was calculated by 100 × (10 - TD₁₀₀)/10. The above-described measurement was performed three times, and an average value of the obtained measured values was adopted as the thermal shrinkage rate of the biaxially stretched polyethylene film at 100°C.

### <Thermal Shrinkage Rate Of Biaxially Stretched Polyethylene Film at 120°C>

A thermal shrinkage rate of the biaxially stretched polyethylene film in the MD direction and the TD direction at 120°C was measured in accordance with JIS C2151: 2019.

A test piece of 10 cm × 10 cm was cut out from the biaxially stretched polyethylene film of each example. Next, the test piece was subjected to a heat treatment at 120°C for 15 minutes. In this case, the test piece was suspended and heated in a hot air circulation type constant-temperature tank (product name: DRM620DE, manufactured by ADVANTEC) in a state where no force was applied. Next, the test piece was cooled to room temperature, and then the length of the test piece was measured. The length of the test piece after the heat treatment in the MD direction was defined as MD₁₂₀ [cm], and the thermal shrinkage rate X_{MD120} [%] in the MD direction was calculated by 100 × (10 - MD₁₂₀)/10. The length of the test piece after the heat treatment in the TD direction was defined as TD₁₂₀ [cm], and the thermal shrinkage rate X_{TD120} [%] in the TD direction was calculated by 100 × (10 - TD₁₂₀)/10. The above-described measurement was performed three times, and an average value of the obtained measured values was adopted as the thermal shrinkage rate of the biaxially stretched polyethylene film at 120°C.

### <Heat Fusion Strength>

Two biaxially stretched polyethylene films of each example cut into a width of 15 mm were bonded to each other such that the surface resin layer 1 side and the surface resin layer 1 side overlapped each other, and were sandwiched between biaxially stretched polyethylene terephthalate films having a thickness of 12 µm. By heat-sealing under the conditions of a pressure of 2.0 kgf/cm² and a seal time of 1.0 second at each of temperatures of 110°C, 120°C, 125°C, 130°C, 135°C, 140°C, and 150°C using a heat seal tester (manufactured by Tester Sangyo Co., Ltd., TP-701-B), a laminated film was obtained. Next, the two biaxially stretched polyethylene films were peeled off under the conditions of 90° peeling, a peeling speed of 300 mm/min, and tension in the MD direction, and the peeling strength at this time was defined as the heat fusion strength (N/15 mm).

### [Table 2]

**Table 2**

| | | | Comparative Example 1B | Comparative Example 2B | Comparative Example 3B | Comparative Example 4B | Example 1B | Example 2B | Example 3B | Example 4B | Example 5B | Example 6B | Example 7B | Example 8B |
|---|---|---|---|---|---|---|---|---|---|---|---|---|---|---|
| Surface resin layer 1 (corona-untreated surface) | | Type | LLDPE 1 = 100 (% by mass) | HDPE 2/EBR 1 = 50/50 (% by mass) | HDPE 2/LLDPE 3 = 50/50 (% by mass) | HDPE 1 = 100 (% by mass) | HDPE 2 = 100 (% by mass) | HDPE 3 = 100 (% by mass) | HDPE 2/EBR 1 = 90/10 (% by mass) | HDPE 2/EBR 1 = 70/30 (% by mass) | HDPE 2/LLDPE 3 = 90/10 (% by mass) | HDPE 2/LLDPE 3 = 70/30 (% by mass) | HDPE 2/LLDPE 2 = 90/10 (% by mass) | HDPE 2/LLDPE 2 = 70/30 (% by mass) |
| | | Thickness [µm] | 2.0 | 2.0 | 2.0 | | 2.0 | 2.0 | 2.0 | 2.0 | 2.0 | 2.0 | 2.0 | 2.0 |
| Biaxially stretched film layer | | Type | LLDPE 1 = 100 (% by mass) | HDPE 2/EBR 1 = 50/50 (% by mass) | HDPE 2/LLDPE 3 = 50/50 (% by mass) | HDPE 1 = 100 (% by mass) | HDPE 2 = 100 (% by mass) | HDPE 3 = 100 (% by mass) | HDPE 2/EBR 1 = 90/10 (% by mass) | HDPE 2/EBR 1 = 70/30 (% by mass) | HDPE 2/LLDPE 3 = 90/10 (% by mass) | HDPE 2/LLDPE 3 = 70/30 (% by mass) | HDPE 2/LLDPE 2 = 90/10 (% by mass) | HDPE 2/LLDPE 2 = 70/30 (% by mass) |
| | | Thickness [µm] | 22 | 22 | 22 | | 20 | 25 | 17 | 18 | 21 | 22 | 23 | 22 |
| Surface resin layer 2 (corona-treated surface) | | Type | LLDPE 1 = 100 (% by mass) | HDPE 2/EBR 1 = 50/50 (% by mass) | HDPE 2/LLDPE 3 = 50/50 (% by mass) | HDPE 1 = 100 (% by mass) | HDPE 2 = 100 (% by mass) | HDPE 3 = 100 (% by mass) | HDPE 2/EBR 1 = 90/10 (% by mass) | HDPE 2/EBR 1 = 70/30 (% by mass) | HDPE 2/LLDPE 3 = 90/10 (% by mass) | HDPE 2/LLDPE 3 = 70/30 (% by mass) | HDPE 2/LLDPE 2 = 90/10 (% by mass) | HDPE 2/LLDPE 2 = 70/30 (% by mass) |
| | | Thickness [µm] | 2.0 | 2.0 | 2.0 | - | 2.0 | 2.0 | 2.0 | 2.0 | 2.0 | 2.0 | 2.0 | 2.0 |
| HDPE content of biaxially stretched film layer [% by mass] | | | 0 | 50 | 50 | 100 | 100 | 100 | 90 | 70 | 90 | 70 | 90 | 70 |
| Total thickness of biaxially stretched polyethylene film [um] | | | 26 | 26 | 26 | - | 24 | 29 | 21 | 22 | 25 | 26 | 27 | 26 |
| MFR of biaxially stretched polyethylene film [q/min] | | | 1.9 | 1.9 | 1.9 | 5.2 | 1.0 | 0.4 | 1.1 | 1.3 | 1.1 | 1.5 | 1.0 | 1.2 |
| Density of ethylene-based polymer (A) [g/cm³] | | | 0.928 | 0.926 | 0.931 | 0.964 | 0.958 | 0.955 | 0.952 | 0.945 | 0.953 | 0.942 | 0.956 | 0.952 |
| Stretching temperature in MD direction [°C] | | | 105/98/100 | 115/113/110 | 115/115/110 | 127/125/125 | 127/125/125 | 128/125/130 | 127/127/125 | 127/127/125 | 127/127/125 | 127/127/125 | 127/127/125 | 127/127/125 |
| Stretching ratio in MD direction [times] | | | 5.0 | 5.0 | 5.0 | 5.0 | 5.0 | 6.0 | 5.0 | 5.0 | 5.0 | 5.0 | 5.0 | 5.0 |
| Stretching temperature in TD direction [°C] | | | 128/114/120 /125 | 135/118/120/1 25 | 135/128/120/125 | 151/123/128 | 151/123/128 | 136/132/128 | 145/123/125 | 145/120/125 | 146/123/128 | 143/121/128 | 151/123/128 | 148/123/128 |
| Stretching ratio in TD direction [times] | | | 9.6 | 9.6 | 9.6 | 9.6 | 9.6 | 7.5 | 9.6 | 9.6 | 9.6 | 9.6 | 9.6 | 9.6 |
| Relaxation ratio [%] | | | 6.8 | 6.8 | 6.8 | 6.8 | 6.8 | 6.8 | 6.8 | 6.8 | 6.8 | 6.8 | 6.8 | 6.8 |
| DMA measured value of biaxially stretched polyethylene film | | [%] | 5.5% | 6.5% | 3.8% | - | 1.0% | 1.0% | 1.5% | 2.1% | 1.3% | 2.3% | 1.4% | 2.3% |
| | | CTE [1/°C] | 6.82E-04 | 8.14E-04 | 4.81E-04 | - | 1.31E-04 | 1.26E-04 | 1.92E-04 | 2.61E-04 | 1.59E-04 | 2.83E-04 | 1.73E-04 | 2.83E-04 |
| Tensile modulus | [MPa] | | 433 | 482 | 664 | - | 2147 | 1853 | 1941 | 1378 | 1884 | 1143 | 2059 | 1640 |
| | | | 558 | 1099 | 1311 | - | 3491 | 2240 | 4410 | 1495 | 3350 | 1985 | 2864 | 2042 |
| | | T₁ + T₂ | 991 | 1581 | 1975 | - | 5638 | 4093 | 6351 | 2874 | 5234 | 3129 | 4923 | 3682 |
| Breaking stress | [MPa] | MD | 75 | 60 | 66 | - | 121 | 121 | 102 | 91 | 102 | 80 | 110 | 100 |
| | | TD | 120 | 121 | 133 | - | 201 | 163 | 300 | 244 | 241 | 154 | 154 | 128 |
| | | MD + TD | 195 | 181 | 199 | - | 322 | 284 | 402 | 335 | 343 | 235 | 264 | 229 |
| Moisture permeability | [g/(m²·day)] | | 17.3 | 17.8 | 13.8 | - | 4.4 | 5.3 | 5.4 | 7.0 | 4.8 | 10.0 | 5.1 1.9 | 6.9 |
| Thermal shrinkage rate | 100°C-15 min [%] | X_{MD100} | 6.2 | 4.4 | 5.6 | - | 1.3 | 2.5 | 2.9 | 3.4 | 2.7 | 3.7 | | 1.9 |
| | | X_{TD100} | 5.7 | 7.8 | 7.7 | - | 0.2 | 1.0 | 0.1 | 1.6 | 0.1 | 2.4 | 0.1 | 0.6 |
| | 120°C-15 min [%] | X_{MD120} | 28.9 | 9.9 | 11.8 | - | 4.1 | 6.6 | 6.5 | 6.9 | 6.4 | 7.4 | 5.4 | 5.6 |
| | | X_{TD120} | 52.5 | 32.8 | 36.1 | - | 1.8 | 8.4 | 4.4 | 10.3 | 3.9 | 14.4 | 1.9 | 3.9 |
| Heat fusion strength | [N/15 mm] | 110°C | 0.2 | 0.4 | 0.1 | - | 0.0 | 0.0 | 0.0 | - | 0.0 | 0.1 | 0.0 | |
| | | 120°C | 0.4 | 1.3 | 0.4 | - | 0.0 | 0.0 | 0.0 | 0.0 | 0.0 | 0.1 | 0.0 | 0.0 0.0 |
| | | 125°C | 0.6 | 1.5 | 0.6 | - | 0.0 | 0.0 | 0.0 | | 0.0 | 0.1 | 0.0 | |
| | | 130°C | 1.6 | 2.6 | 1.3 | - | 0.0 | 0.3 | 0.0 | 0.1 | 0.0 | 0.2 | 0.0 | 0.1 0.1 |
| | | 135°C | 6.9 | 2.9 | 2.3 | - | 0.0 | 0.8 | 0.1 | - | 0.1 | 0.3 | 0.0 | 0.3 |
| | | 140°C | 8.3 | 5.9 | 8.5 | - | 0.1 | 5.1 | 0.1 | 0.1 | 0.1 | 0.8 | 0.1 | 4.2 |
| | | 150°C | 8.3 | 9.5 | 7.9 | - | 13.4 | 14.3 | 10.1 | 1.8 | 10.4 | 10.0 | 7.3 | 14.4 |

### <<Examples 1C to 8C and Comparative Examples 1C to 3C>>

Hereinafter, a third embodiment will be described in detail with reference to Examples 1C to 8C and Comparative Examples 1C to 3C. The third embodiment is not at all limited to the descriptions in these examples.

### <Raw Materials>

The raw materials used in Examples 1C to 8C and Comparative Examples 1C to 3C are shown below.

The density was measured in accordance with JIS K 7112:1999.

The MFR was measured under conditions of 190°C and a load of 2160 g in accordance with JIS K 7210:1999.

The melting point was measured using a differential scanning calorimeter (DSC). Specifically, using a differential scanning calorimeter (product name: Q200 DSC, manufactured by TA Instruments), a first differential scanning calorimetry consisting of a process of raising the temperature from -50°C to 230°C at a heating rate of 10°C/min and a process of lowering the temperature from 230°C to -50°C at a cooling rate of 10°C/min under a nitrogen stream, and a second differential scanning calorimetry consisting of a process of raising the temperature from -50°C to 230°C at a heating rate of 10°C/min were continuously performed.

The peak temperature of the maximum endothermic peak in the DSC curve in the second measurement was defined as the melting point (°C).

· Linear low-density polyethylene 1 (LLDPE1), density: 0.928 g/cm³, MFR: 1.9 g/10 min, melting point: 126°C
· Linear low-density polyethylene 2 (LLDPE2), density: 0.937 g/cm³, MFR: 1.8 g/10 min, melting point: 127°C
· Linear low-density polyethylene 3 (LLDPE3), density: 0.903 g/cm³, MFR: 3.8 g/10 min, melting point: 98°C
· High-density polyethylene 1 (HDPE1), density: 0.964 g/cm³, MFR: 5.2 g/10 min, melting point: 135°C
· High-density polyethylene 2 (HDPE2), density: 0.958 g/cm³, MFR: 1.0 g/10 min, melting point: 133°C
· High-density polyethylene 3 (HDPE3), density: 0.955 g/cm³, MFR: 0.36 g/10 min, melting point: 130°C
· Ethylene-1-butene random copolymer 1 (EBR1), density: 0.893 g/cm³, MFR: 3.6 g/10 min, melting point: 77°C

### <Production of Biaxially Stretched Polyethylene Film>

In Examples 1C to 8C and Comparative Examples 1C to 3C, a polyethylene film was extrusion-molded with the composition shown in Table 3, and then biaxially stretched to produce a biaxially stretched polyethylene film, and each evaluation was performed. The extrusion molding conditions and the biaxial stretching treatment conditions are as follows. In addition, a corona treatment was performed on the surface of the surface resin layer 2 side in Table 3.
Extrusion molding machine: 60 mmφ multilayer T-die extrusion molding machine (screw: L/D = 27, manufactured by Screw Engineering Co., Ltd.)
Extrusion setting temperature: 230°C to 250°C, processing speed: 15 m/min (winding speed)
Stretching temperature in MD direction [°C]: shown in Table 3
Stretching ratio in MD direction [times]: shown in Table 3
Stretching temperature in TD direction [°C]: shown in Table 3
Stretching ratio in TD direction [times]: shown in Table 3
Relaxation rate [%]: shown in Table 3

Here, the relaxation rate indicates the maximum stretching width on the device setting ÷ the tenter outlet width.

In addition, the notation "A/B/C" of the stretching temperature in Table 3 means "preheating temperature (temperature at which the film original material before stretching is heated)/stretching temperature (temperature during stretching)/thermal fixation temperature (temperature during thermal fixation (annealing) after stretching)". In addition, the notation of "A/B/C/D" of the stretching temperature in Table 3 means "preheating temperature (temperature for heating the film raw material before stretching)/stretching temperature 1 (temperature 1 during stretching)/stretching temperature 2 (temperature 2 during stretching)/heat setting temperature (temperature during heat setting (annealing) after stretching)".

The MFR of the entire biaxially stretched polyethylene film of each of the obtained examples was measured. In addition, in each of the examples, the density of the resin before being made into a film was measured. In addition, the following evaluations were performed. Each of the obtained results is shown in Table 3.

In Comparative Example 3C, since the film was cut during stretching, a biaxially stretched polyethylene film was not obtained.

### <Differential Scanning Calorimetry (DSC)>

The biaxially stretched polyethylene film of each example was subjected to differential scanning calorimetry (DSC) as follows.

For the biaxially stretched polyethylene film of each example, using a differential scanning calorimeter (product name: Q200 DSC, manufactured by TA Instruments), under a nitrogen atmosphere, a first differential scanning calorimetry (1st Run) consisting of a process of raising the temperature from -50°C to 200°C at a heating rate of 10°C/min, an isothermal process of holding the temperature at 200°C for 5 minutes, and a process of lowering the temperature from 200°C to -50°C at a cooling rate of 10°C/min, a process of holding the temperature at -50°C for 5 minutes (Cooling), and a second differential scanning calorimetry (2nd Run) consisting of a process of raising the temperature from -50°C to 200°C at a heating rate of 10°C/min were continuously performed.

The peak temperature of the maximum endothermic peak of the DSC curve 1 in the 1st Run was defined as Tm₁ (°C), and the peak temperature of the maximum endothermic peak of the DSC curve 2 in the 2nd Run was defined as Tm₂ (°C). The maximum exothermic peak observed in the DSC curve 1 in the cooling step of the 1st Run was defined as the crystallization peak, and the temperature of the apex of the crystallization peak was defined as the crystallization temperature Tc (°C). In the DSC curve 2 in the 2nd Run, an endothermic peak A was observed in a range of 20°C or higher and 150°C or lower, and the heat of fusion of the endothermic peak A was defined as ΔH (J/g).

From the obtained Tm₁, Tm₂, and Tc, (Tm₁ - Tm₂) (°C) and (Tm₂ - Tc) (°C) were calculated.

### <Tensile Modulus>

A test piece of 15 mm × 15 cm was cut out from the biaxially stretched polyethylene film of each example. Next, using a tensile tester manufactured by Orientec Co., Ltd., the tensile modulus T₁ in the MD direction and the tensile modulus T₂ in the TD direction of the test piece were measured under the conditions of a measurement temperature of 23 ± 2°C, a relative humidity of 50 ± 5% RH, and a tensile speed of 5 mm/min, in accordance with JIS K7127:1999. From the obtained values, the total value of T₁ and T₂ was calculated.

### <Moisture Permeability>

A moisture permeability (g/(m²·day)) of the biaxially stretched polyethylene film of each example was measured in accordance with JIS Z 0208: 1976.

### <Breaking stress>

For the biaxially stretched polyethylene film of each example, a breaking stress (MPa) in each of the MD direction and the TD direction was measured using a tensile tester in accordance with JIS K7127:1999. The biaxially stretched polyethylene film of each example was cut out into a dumbbell shape in accordance with the above JIS standard to obtain a test piece, and the test piece was pulled in each of the MD direction and the TD direction under the conditions of a distance between chucks: 50 mm, a tensile speed: 300 mm/min, 23°C, and a relative humidity of 50% RH, thereby measuring a breaking stress (MPa) in each of the MD direction and the TD direction. The breaking stress is a value obtained by dividing a tensile force of a breaking point at the time of breaking in the tensile test by an initial cross-sectional area of the test piece. A total of the breaking stresses in the MD direction and the TD direction was calculated from the obtained values.

### <Thermal Shrinkage Rate Of Biaxially Stretched Polyethylene Film at 100°C>

A thermal shrinkage rate of the biaxially stretched polyethylene film in the MD direction and the TD direction at 100°C was measured in accordance with JIS C2151: 2019.

A test piece of 10 cm × 10 cm was cut out from the biaxially stretched polyethylene film of each example. Next, the test piece was subjected to a heat treatment at 100°C for 15 minutes. In this case, the test piece was suspended and heated in a hot air circulation type constant-temperature tank (product name: DRM620DE, manufactured by ADVANTEC) in a state where no force was applied. Next, the test piece was cooled to room temperature, and then the length of the test piece was measured. The length of the test piece after the heat treatment in the MD direction was defined as MD₁₀₀ [cm], and the thermal shrinkage rate X_{MD100} [%] in the MD direction was calculated by 100 × (10 - MD₁₀₀)/10. The length of the test piece after the heat treatment in the TD direction was defined as TD₁₀₀ [cm], and the thermal shrinkage rate X_{TD100} [%] in the TD direction was calculated by 100 × (10 - TD₁₀₀)/10. The above-described measurement was performed three times, and an average value of the obtained measured values was adopted as the thermal shrinkage rate of the biaxially stretched polyethylene film at 100°C.

### <Thermal Shrinkage Rate Of Biaxially Stretched Polyethylene Film at 120°C>

A thermal shrinkage rate of the biaxially stretched polyethylene film in the MD direction and the TD direction at 120°C was measured in accordance with JIS C2151: 2019.

A test piece of 10 cm × 10 cm was cut out from the biaxially stretched polyethylene film of each example. Next, the test piece was subjected to a heat treatment at 120°C for 15 minutes. In this case, the test piece was suspended and heated in a hot air circulation type constant-temperature tank (product name: DRM620DE, manufactured by ADVANTEC) in a state where no force was applied. Next, the test piece was cooled to room temperature, and then the length of the test piece was measured. The length of the test piece after the heat treatment in the MD direction was defined as MD₁₂₀ [cm], and the thermal shrinkage rate X_{MD120} [%] in the MD direction was calculated by 100 × (10 - MD₁₂₀)/10. The length of the test piece after the heat treatment in the TD direction was defined as TD₁₂₀ [cm], and the thermal shrinkage rate X_{TD120} [%] in the TD direction was calculated by 100 × (10 - TD₁₂₀)/10. The above-described measurement was performed three times, and an average value of the obtained measured values was adopted as the thermal shrinkage rate of the biaxially stretched polyethylene film at 120°C.

### [Table 3]

**Table 3**

| | | | Comparative Example 1C | Comparative Example 2C | Comparative Example 3C | Example 1C | Example 2C | Example 3C | Example 4C | Example 5C | Example 6C | Example 7C | Example 8C |
|---|---|---|---|---|---|---|---|---|---|---|---|---|---|
| Surface resin layer 1 (corona-untreated surface) | | Type | LLDPE 1 = 100 (% by mass) | HDPE 2/LLDPE 3 = 50/50 (% by mass) | HDPE 1 = 100 (% by mass) | HDPE 2 = 100 (% by mass) | HDPE 3 = 100 (% by mass) | HDPE 2/EBR 1 = 90/10 (% by mass) | HDPE 2/EBR 1 = 70/30 (% by mass) | HDPE 2/LLDPE 3 = 90/10 (% by mass) | HDPE 2/LLDPE 3 = 70/30 (% by mass) | HDPE 2/LLDPE 2 = 90/10 (% by mass) | HDPE 2/LLDPE 2 = 70/30 (% by mass) |
| | | Thickness [µm] | 2.0 | 2.0 | - | 2.0 | 2.0 | 2.0 | 2.0 | 2.0 | 2.0 | 2.0 | 2.0 |
| Biaxially stretched film layer | | Type | LLDPE 1 = 100 (% by mass) | HDPE 2/LLDPE 3 = 50/50 (% by mass) | HDPE 1 = 100 (% by mass) | HDPE 2 = 100 (% by mass) | HDPE 3 = 100 (% by mass) | HDPE 2/EBR 1 = 90/10 (% by mass) | HDPE 2/EBR 1 = 70/30 (% by mass) | HDPE 2/LLDPE 3 = 90/10 (% by mass) | HDPE 2/LLDPE 3 = 70/30 (% by mass) | HDPE 2/LLDPE 2 = 90/10 (% by mass) | HDPE 2/LLDPE 2 = 70/30 (% by mass) |
| | | Thickness [µm] | 22 | 22 | - | 20 | 25 | 17 | 18 | 21 | 22 | 23 | 22 |
| Surface resin layer 2 (corona-treated surface) | | Type | LLDPE 1 = 100 (% by mass) | HDPE 2/LLDPE 3 = 50/50 (% by mass) | HDPE 1 = 100 (% by mass) | HDPE 2 = 100 (% by mass) | HDPE 3 = 100 (% by mass) | HDPE 2/EBR 1 = 90/10 (% by mass) | HDPE 2/EBR 1 = 70/30 (% by mass) | HDPE 2/LLDPE 3 = 90/10 (% by mass) | HDPE 2/LLDPE 3 = 70/30 (% by mass) | HDPE 2/LLDPE 2 = 90/10 (% by mass) | HDPE 2/LLDPE 2 = 70/30 (% by mass) |
| | | Thickness [µm] | 2.0 | 2.0 | - | 2.0 | 2.0 | 2.0 | 2.0 | 2.0 | 2.0 | 2.0 | 2.0 |
| HDPE content of biaxially stretched film layer [% by mass] | | | 0 | 50 | 100 | 100 | 100 | 90 | 70 | 90 | 70 | 90 | 70 |
| Total thickness of biaxially stretched polyethylene film [um] | | | 26 | 26 | - | 24 | 29 | 21 | 22 | 25 | 26 | 27 | 26 |
| MFR of biaxially stretched polyethylene film [q/min] | | | 1.9 | 1.9 | 5.2 | 1.0 | 0.4 | 1.1 | 1.3 | 1.1 | 1.5 | 1.0 | 1.2 |
| Density of ethylene-based polymer (A) [g/cm³] | | | 0.928 | 0.931 | 0.964 | 0.958 | 0.955 | 0.952 | 0.945 | 0.953 | 0.942 | 0.956 | 0.952 |
| Stretching temperature in MD direction [°C] | | | 105/98/100 | 115/115/110 | 127/125/125 | 127/125/125 | 128/125/130 | 127/127/125 | 127/127/125 | 127/127/125 | 127/127/125 | 127/127/125 | 127/127/125 |
| Stretching ratio in MD direction [times] | | | 5.0 | 5.0 | 5.0 | 5.0 | 6.0 | 5.0 | 5.0 | 5.0 | 5.0 | 5.0 | 5.0 |
| Stretching temperature in TD direction [°C] | | | 128/114/120/125 | 135/128/120/125 | 151/123/128 | 151/123/128 | 136/132/128 | 145/123/125 | 145/120/125 | 146/123/128 | 143/121/128 | 151/123/128 | 148/123/128 |
| Stretching ratio in TD direction [times] | | | 9.6 | 9.6 | 9.6 | 9.6 | 7.5 | 9.6 | 9.6 | 9.6 | 9.6 | 9.6 | 9.6 |
| Relaxation ratio [%] | | | 6.8 | 6.8 | 6.8 | 6.8 | 6.8 | 6.8 | 6.8 | 6.8 | 6.8 | 6.8 | 6.8 |
| DSC measured value of biaxially stretched polyethylene film | 1st Run | Tm₁ [°C] | 126.9 | 129.5 | - | 136.2 | 134.6 | | 135.4 | 135.4 | | 135.9 | 134.2 |
| | | ΔH [J/g] | 154.6 | 167.6 | - | 233.2 | 239.6 | 229.9 | 208.3 | 195.6 | 187.6 | 223.3 | 218.1 |
| | Cooling | Tc [°C] | 117.0 | 117.8 | - | 120.1 | 117.6 | 136.3 119.1 | 118.9 | 119.8 | 133.5 118.5 | 119.6 | 119.2 207.5 |
| | | ΔH [J/g] | 143.4 | 160.9 | - | 219.8 | 231.7 | 202.3 | 194.6 | 205.9 | 182.4 | 217.0 | |
| | 2nd Run | Tm₂ [°C] | 127.3 | 129.8 | - | 133.7 | 132.3 | 133.1 | 132.4 | 132.3 | 131.3 | 133.5 | 132.1 |
| | | ΔH [J/g] | 148.8 | 161.6 | - | 225.2 | 230.2 | 202.6 | 193.5 | 210.6 | 181.8 | 221.1 | 210.6 |
| | Tm₁ - Tm₂ | | -0.4 | -0.3 | - | 2.5 | 2.3 | 3.2 | 3.0 | 3.1 | 2.2 | 2.4 | 2.1 |
| | Tm₂ - Tc | | 10.3 | 12.0 | - | 13.6 | 14.7 | 13.9 | 13.6 | 12.5 | 12.7 | 14.0 | 12.9 |
| Tensile modulus | [MPa] | T₁ (MD direction) | 433 | 664 | - | 2147 | 1853 | 1941 | 1378 | 1884 | 1143 | 2059 | 1640 |
| | | T₂ (TD direction) | 558 | 1311 | - | 3491 | 2240 | 4410 | 1495 | 3350 | 1985 | 2864 | 2042 |
| | | T₁ + T₂ | 991 | 1975 | - | 5638 | 4093 | 6351 | 2874 | 5234 | 3129 | 4923 | 3682 |
| Breaking stress | [MPa] | MD | 75 | 66 | - | 121 | 121 | 102 | 91 | 102 | 80 | 110 | 100 |
| | | TD | 120 | 133 | - | 201 | 163 | 300 | 244 | 241 | 154 | 154 | 128 |
| | | MD + TD | 195 | 199 | - | 322 | 284 | 402 | 335 | 343 | 235 | 264 | 229 |
| Moisture permeability | [g/(m²·day)] | | 17.3 | 13.8 | - | 4.4 | 5.3 | 5.4 | 7.0 | 4.8 | 10.0 | 5.1 | 6.9 |
| Thermal shrinkage rate | 100°C-15 min [%] | X_{MD100} | 6.2 | 5.6 | - | 1.3 | 2.5 | 2.9 | 3.4 | 2.7 | 3.7 | 1.9 | 1.9 |
| | | X_{TD100} | 5.7 | 7.7 | - | 0.2 | 1.0 | 0.1 | 1.6 | 0.1 | 2.4 | 0.1 | 0.6 |
| | 120°C-15 min [%] | X_{MD120} | 28.9 | 11.8 | - | 4.1 | 6.6 | 6.5 | 6.9 | 6.4 | 7.4 | 5.4 | 5.6 |
| | | X_{TD120} | 52.5 | 36.1 | - | 1.8 | 8.4 | 4.4 | 10.3 | 3.9 | 14.4 | 1.9 | 3.9 |

### <<Examples 1D to 8D and Comparative Examples 1D to 4D>>

Hereinafter, a fourth embodiment will be described in detail with reference to Examples 1D to 8D and Comparative Examples 1D to 4D. The fourth embodiment is not at all limited to the descriptions in these examples.

### <Raw Materials>

The raw materials used in Examples 1D to 8D and Comparative Examples 1D to 4D are shown below.

The density was measured in accordance with JIS K 7112:1999.

The MFR was measured under conditions of 190°C and a load of 2160 g in accordance with JIS K 7210:1999.

The melting point was measured using a differential scanning calorimeter (DSC). Specifically, using a differential scanning calorimeter (product name: Q200 DSC, manufactured by TA Instruments), a first differential scanning calorimetry consisting of a process of raising the temperature from -50°C to 230°C at a heating rate of 10°C/min and a process of lowering the temperature from 230°C to -50°C at a cooling rate of 10°C/min under a nitrogen stream, and a second differential scanning calorimetry consisting of a process of raising the temperature from -50°C to 230°C at a heating rate of 10°C/min were continuously performed.

The peak temperature of the maximum endothermic peak in the DSC curve in the second measurement was defined as the melting point (°C).

· Linear low-density polyethylene 1 (LLDPE1), density: 0.928 g/cm³, MFR: 1.9 g/10 min, melting point: 126°C
· Linear low-density polyethylene 2 (LLDPE2), density: 0.937 g/cm³, MFR: 1.8 g/10 min, melting point: 127°C
· Linear low-density polyethylene 3 (LLDPE3), density: 0.903 g/cm³, MFR: 3.8 g/10 min, melting point: 98°C
· High-density polyethylene 1 (HDPE1), density: 0.964 g/cm³, MFR: 5.2 g/10 min, melting point: 135°C
· High-density polyethylene 2 (HDPE2), density: 0.958 g/cm³, MFR: 1.0 g/10 min, melting point: 133°C
· High-density polyethylene 3 (HDPE3), density: 0.955 g/cm³, MFR: 0.36 g/10 min, melting point: 130°C
· Ethylene-1-butene random copolymer 1 (EBR1), density: 0.893 g/cm³, MFR: 3.6 g/10 min, melting point: 77°C

### <Production of Biaxially Stretched Polyethylene Film>

For Examples 1D to 8D and Comparative Examples 1D to 4D, a polyethylene film was extrusion-molded with the composition shown in Table 4, and then biaxially stretched to produce a biaxially stretched polyethylene film, and each evaluation was performed. The extrusion molding conditions and the biaxial stretching treatment conditions are as follows. In addition, a corona treatment was performed on the surface of the surface resin layer 2 side in Table 4.
Extrusion molding machine: 60 mmφ multilayer T-die extrusion molding machine (screw: L/D = 27, manufactured by Screw Engineering Co., Ltd.)
Extrusion setting temperature: 230°C to 250°C, processing speed: 15 m/min (winding speed)
Stretching temperature in MD direction [°C]: shown in Table 4
Stretching ratio in MD direction [times]: shown in Table 4
Stretching temperature in TD direction [°C]: shown in Table 4
Stretching ratio in TD direction [times]: shown in Table 4
Relaxation rate [%]: shown in Table 4

Here, the relaxation rate indicates the maximum stretching width on the device setting ÷ the tenter outlet width.

In addition, the notation "A/B/C" of the stretching temperature in Table 4 means "preheating temperature (temperature at which the film original material before stretching is heated)/stretching temperature (temperature during stretching)/thermal fixation temperature (temperature during thermal fixation (annealing) after stretching)". In addition, the notation of "A/B/C/D" of the stretching temperature in Table 4 means "preheating temperature (temperature for heating the film raw material before stretching)/stretching temperature 1 (temperature 1 during stretching)/stretching temperature 2 (temperature 2 during stretching)/heat setting temperature (temperature during heat setting (annealing) after stretching)".

The MFR of the entire biaxially stretched polyethylene film of each of the obtained examples was measured. In addition, in each of the examples, the density of the resin before being made into a film was measured. In addition, the following evaluations were performed. Each of the obtained results is shown in Table 4.

In Comparative Example 4D, since the film was cut during stretching, a biaxially stretched polyethylene film was not obtained.

### [z-Average Molecular Weight (Mz), Weight-Average Molecular Weight (Mw), Number-Average Molecular Weight (Mn), and z+1 Average Molecular Weight (Mz+1) of Ethylene-Based Polymer Constituting Biaxially Stretched Polyethylene Film]

The z-average molecular weight (Mz), the weight-average molecular weight (Mw), the number-average molecular weight (Mn), and the z+1 average molecular weight (Mz+1) of the ethylene-based polymer constituting the biaxially stretched polyethylene film were measured by a gel permeation chromatography (GPC) method.

The biaxially stretched polyethylene film obtained in each example was cut into a size of about 5.0 mm × 5.0 mm, heated at 145°C, stirred, and dissolved in a mobile phase for GPC measurement, and the volume was adjusted to have the following concentration to obtain a sample.

The GPC method was performed using a gel permeation chromatograph (HLC-8321 GPC/HT type, manufactured by Tosoh Corporation) as follows. The separation column was two TSKgel GNH6-HT columns and two TSKgel GNH6-HTL columns, each having a column size of a diameter of 7.5 mm and a length of 300 mm, a column temperature of 140°C, and using o-dichlorobenzene and 0.025% by mass of BHT as an antioxidant as a mobile phase, moving at 1.0 mL/min, a sample concentration of 0.1% (w/v), a sample injection amount of 400 µL, and a differential refractometer as a detector. The results were obtained as a polyethylene-equivalent molecular weight using a monodisperse polystyrene standard.

Mz, Mw, Mn, Mz+1, and Mw/Mn were calculated from the obtained numerical values.

### <Tensile Modulus>

A test piece of 15 mm × 15 cm was cut out from the biaxially stretched polyethylene film of each example. Next, using a tensile tester manufactured by Orientec Co., Ltd., the tensile modulus T₁ in the MD direction and the tensile modulus T₂ in the TD direction of the test piece were measured under the conditions of a measurement temperature of 23 ± 2°C, a relative humidity of 50 ± 5% RH, and a tensile speed of 5 mm/min, in accordance with JIS K7127:1999. From the obtained values, the total value of T₁ and T₂ was calculated.

### <Moisture Permeability>

A moisture permeability (g/(m²·day)) of the biaxially stretched polyethylene film of each example was measured in accordance with JIS Z 0208: 1976.

### <Breaking Stress and Elongation at Break>

For the biaxially stretched polyethylene film of each example, the breaking stress (MPa) and the elongation at break (%) in each of the MD direction and the TD direction were measured using a tensile tester in accordance with JIS K7127:1999. The biaxially stretched polyethylene film of each example was cut out into a dumbbell shape in accordance with the above-described JIS standard to obtain a test piece, and the test piece was pulled in each of the MD direction and the TD direction under conditions of a distance between chucks of 50 mm, a tensile speed of 300 mm/min, 23°C, and a relative humidity of 50% RH to perform the measurement. The elongation at break represents elongation immediately before breaking between predetermined gauge points of the test piece in the tensile test. In addition, the breaking stress is a value obtained by dividing the tensile force of the breaking point at the time of breaking in the tensile test by the initial cross-sectional area of the test piece. A total of the breaking stresses in the MD direction and the TD direction and a total of the elongations at break in the MD direction and the TD direction were calculated from the obtained values.

### <Thermal Shrinkage Rate Of Biaxially Stretched Polyethylene Film at 100°C>

A thermal shrinkage rate of the biaxially stretched polyethylene film in the MD direction and the TD direction at 100°C was measured in accordance with JIS C2151: 2019.

A test piece of 10 cm × 10 cm was cut out from the biaxially stretched polyethylene film of each example. Next, the test piece was subjected to a heat treatment at 100°C for 15 minutes. In this case, the test piece was suspended and heated in a hot air circulation type constant-temperature tank (product name: DRM620DE, manufactured by ADVANTEC) in a state where no force was applied. Next, the test piece was cooled to room temperature, and then the length of the test piece was measured. The length of the test piece after the heat treatment in the MD direction was defined as MD₁₀₀ [cm], and the thermal shrinkage rate X_{MD100} [%] in the MD direction was calculated by 100 × (10 - MD₁₀₀)/10. The length of the test piece after the heat treatment in the TD direction was defined as TD₁₀₀ [cm], and the thermal shrinkage rate X_{TD100} [%] in the TD direction was calculated by 100 × (10 - TD₁₀₀)/10. The above-described measurement was performed three times, and an average value of the obtained measured values was adopted as the thermal shrinkage rate of the biaxially stretched polyethylene film at 100°C.

### <Thermal Shrinkage Rate Of Biaxially Stretched Polyethylene Film at 120°C>

A thermal shrinkage rate of the biaxially stretched polyethylene film in the MD direction and the TD direction at 120°C was measured in accordance with JIS C2151: 2019.

A test piece of 10 cm × 10 cm was cut out from the biaxially stretched polyethylene film of each example. Next, the test piece was subjected to a heat treatment at 120°C for 15 minutes. In this case, the test piece was suspended and heated in a hot air circulation type constant-temperature tank (product name: DRM620DE, manufactured by ADVANTEC) in a state where no force was applied. Next, the test piece was cooled to room temperature, and then the length of the test piece was measured. The length of the test piece after the heat treatment in the MD direction was defined as MD₁₂₀ [cm], and the thermal shrinkage rate X_{MD120} [%] in the MD direction was calculated by 100 × (10 - MD₁₂₀)/10. The length of the test piece after the heat treatment in the TD direction was defined as TD₁₂₀ [cm], and the thermal shrinkage rate X_{TD120} [%] in the TD direction was calculated by 100 × (10 - TD₁₂₀)/10. The above-described measurement was performed three times, and an average value of the obtained measured values was adopted as the thermal shrinkage rate of the biaxially stretched polyethylene film at 120°C.

### <Evaluation of Processability>

In the biaxially stretched polyethylene film of each example, the presence or absence of cutting of the film in a case of being continuously stretched for 30 minutes in <Production of Biaxially Stretched Polyethylene Film> described above was evaluated according to the following standard.

### (Criteria)

A (best): The film was not cut.
B (good): The film was cut once.
C (poor): The film was cut twice or more.

### [Table 4]

**Table 4**

| | | | Comparative Example 1D | Comparative Example 2D | Comparative Example 3D | Comparative Example 4D | Example 1D | Example 2D | Example 3D | Example 4D | Example 5D | Example 6D | Example 7D | Example 8D |
|---|---|---|---|---|---|---|---|---|---|---|---|---|---|---|
| Surface resin layer 1 (corona-untreated surface) | | Type | LLDPE 1 = 100 (% by mass) | HDPE 2/EBR 1 = 50/50 (% by mass) | HDPE 2/LLDPE 3 = 50/50 (% by mass) | HDPE 1 = 100 (% by mass) | HDPE 2 = 100 (% by mass) | HDPE 3 = 100 (% by mass) | HDPE 2/EBR 1 = 90/10 (% by mass) | HDPE 2/EBR 1 = 70/30 (% by mass) | HDPE 2/LLDPE 3 = 90/10 (% by mass) | HDPE 2/LLDPE 3 = 70/30 (% by mass) | HDPE 2/LLDPE 2 = 90/10 (% by mass) | HDPE 2/LLDPE 2 = 70/30 (% by mass) |
| | | Thickness [pm] | 2.0 | 2.0 | 2.0 | - | 2.0 | 2.0 | 2.0 | 2.0 | 2.0 | 2.0 | 2.0 | 2.0 |
| Biaxially stretched film layer | | Type | LLDPE 1 = 100 (% by mass) | HDPE 2/EBR 1 = 50/50 (% by mass) | HDPE 2/LLDPE 3 = 50/50 (% by mass) | HDPE 1 = 100 (% by mass) | HDPE 2 = 100 (% by mass) | HDPE 3 = 100 (% by mass) | HDPE 2/EBR 1 = 90/10 (% by mass) | HDPE 2/EBR 1 = 70/30 (% by mass) | HDPE 2/LLDPE 3 = 90/10 (% by mass) | HDPE 2/LLDPE 3 = 70/30 (% by mass) | HDPE 2/LLDPE 2 = 90/10 (% by mass) | HDPE 2/LLDPE 2 = 70/30 (% by mass) |
| | | Thickness [µm] | 22 | 22 | 22 | - | 20 | 25 | 17 | 18 | 21 | 22 | 23 | 22 |
| Surface resin layer 2 (corona-treated surface) | | Type | LLDPE 1 = 100 (% by mass) | HDPE 2/EBR 1 = 50/50 (% by mass) | HDPE 2/LLDPE 3 = 50/50 (% by mass) | HDPE 1 = 100 (% by mass) | HDPE 2 = 100 (% by mass) | HDPE 3 = 100 (% by mass) | HDPE 2/EBR 1 = 90/10 (% by mass) | HDPE 2/EBR 1 = 70/30 (% by mass) | HDPE 2/LLDPE 3 = 90/10 (% by mass) | HDPE 2/LLDPE 3 = 70/30 (% by mass) | HDPE 2/LLDPE 2 = 90/10 (% by mass) | HDPE 2/LLDPE 2 = 70/30 (% by mass) |
| | | Thickness [pm] | 2.0 | 2.0 | 2.0 | - | 2.0 | 2.0 | 2.0 | 2.0 | 2.0 | 2.0 | 2.0 | 2.0 |
| HDPE content of biaxially stretched film layer [% by mass] | | | 0 | 50 | 50 | 100 | 100 | 100 | 90 | 70 | 90 | 70 | 90 | 70 |
| Total thickness of biaxially stretched polyethylene film [um] | | | 26 | 26 | 26 | - | 24 | 29 | 21 | 22 | 25 | 26 | 27 | 26 |
| MFR of biaxially stretched polyethylene film [q/min] | | | 1.9 | 1.9 | 1.9 | 5.2 | 1.0 | 0.4 | 1.1 | 1.3 | 1.1 | 1.5 | 1.0 | 1.2 |
| Density of ethylene-based polymer (A) [g/cm³] | | | 0.928 | 0.926 | 0.931 | 0.964 | 0.958 | 0.955 | 0.952 | 0.945 | 0.953 | 0.942 | 0.956 | 0.952 |
| Stretching temperature in MD direction [°C] | | | 105/98/100 | 115/113/110 | 115/115/110 | 127/125/125 | 127/125/125 | 128/125/130 | 127/127/125 | 127/127/125 | 127/127/125 | 127/127/125 | 127/127/125 | 127/127/125 |
| Stretching ratio in MD direction [times] | | | 5.0 | 5.0 | 5.0 | 5.0 | 5.0 | 6.0 | 5.0 | 5.0 | 5.0 | 5.0 | 5.0 | 5.0 |
| Stretching temperature in TD direction [°C] | | | 128/114/120/125 | 135/118/120/125 | 135/128/120/125 | 151/123/128 | 151/123/128 | 136/132/128 | 145/123/125 | 145/120/125 | 146/123/128 | 143/121/128 | 151/123/128 | 148/123/128 |
| Stretching ratio in TD direction [times] | | | 9.6 | 9.6 | 9.6 | 9.6 | 9.6 | 7.5 | 9.6 | 9.6 | 9.6 | 9.6 | 9.6 | 9.6 |
| Relaxation ratio [%] | | | 6.8 | 6.8 | 6.8 | 6.8 | 6.8 | 6.8 | 6.8 | 6.8 | 6.8 | 6.8 | 6.8 | 6.8 |
| Molecular weight of ethylene-based polymer constituting biaxially stretched film layer | [-] | Mw | 125,000 | 115,000 | 115,000 | 99,400 | 164,000 | 228,000 | 147, 000 | 138,000 | 148,000 | 136,000 | 157,000 | 147,000 |
| | | Mn | 11,900 | 26,000 | 25, 100 | 15,600 | 22,300 | 9,840 | 23,000 | 25, 100 | 22,100 | 23,100 | 21, 900 | 23,000 |
| | | Mw/Mn | 10.5 | 4.4 | 4.6 | 6.4 | 7.3 | 23.2 | 6.4 | 5.5 | 6.7 | 5.9 | 7.2 | 6.4 |
| | | Mz | 745,000 | 781,000 | 675,000 | 747,000 | 1,150, 000 | 2,460,000 | 926, 000 | 865,000 | 936,000 | 969,000 | 1,060,000 | 913,000 |
| | | Mz + 1 | 1, 980, 000 | 2,630,000 | 1, 980, 000 | 1, 780, 000 | 3,100,000 | 7,460,000 | 2,280,000 | 2,190, 000 | 2,330,000 | 2,950,000 | 2,810,000 | 2,350,000 |
| Tensile modulus | [MPa] | | 433 | 482 | 664 | - | 2147 | 1853 | 1941 | 1378 | 1884 | 1143 | 2059 | 1640 |
| | | | 558 | 1099 | 1311 | - | 3491 | 2240 | 4410 | 1495 | 3350 | 1985 | 2864 | 2042 |
| | | T₁ + T₂ | 991 | 1581 | 1975 | - | 5638 | 4093 | 6351 | 2874 | 5234 | 3129 | 4923 | 3682 |
| Breaking stress | [MPa] | MD | 75 | 60 | 66 | - | 121 | 121 | 102 | 91 | 102 | 80 | 110 | 100 |
| | | TD | 120 | 121 | 133 | - | 201 | 163 | 300 | 244 | 241 | 154 | 154 | 128 |
| | | MD + TD | 195 | 181 | 199 | - | 322 | 284 | 402 | 335 | 343 | 235 | 264 | 229 |
| Elongation at break | [%] | MD | 249 | 194 | 253 | - | 133 | 77 | 149 | 105 | 134 | 140 | 135 | 152 |
| | | TD | 75 | 42 | 38 | - | 21 | 35 | 24 | 23 | 28 | 39 | 31 | 35 |
| | | MD + TD | 324 | 237 | 290 | - | 154 | 112 | 173 | 128 | 162 | 179 | 166 | 187 |
| Moisture permeability | [g/(m²·day)] | | 17.3 | 17.8 | 13.8 | - | 4.4 | 5.3 | 5.4 | 7.0 | 4.8 | 10.0 | 5.1 | 6.9 |
| Thermal shrinkage rate | 100°C-15 min [%] | X_{MD100} | 6.2 | 4.4 | 5.6 | - | 1.3 | 2.5 | 2.9 | 3.4 | 2.7 | 3.7 | 1.9 | 1.9 |
| | | X_{TD100} | 5.7 | 7.8 | 7.7 | - | 0.2 | 1.0 | 0.1 | 1.6 | 0.1 | 2.4 | 0.1 | 0.6 |
| | 120°C-15 min [%] | X_{MD120} | 28.9 | 9.9 | 11.8 | - | 4.1 | 6.6 | 6.5 | 6.9 | 6.4 | 7.4 | 5.4 | 5.6 |
| | | X_{TD120} | 52.5 | 32.8 | 36.1 | - | 1.8 | B.4 | 4.4 | 10.3 | 3.9 | 14.4 | 1.9 | 3.9 |
| Evaluation of processability | | | A | B | B | C | A | A | A | A | A | A | A | A |

This application claims priority based on Japanese Patent Application No. 2023-198983, Japanese Patent Application No. 2023-199019, Japanese Patent Application No. 2023-198975, and Japanese Patent Application No. 2023-198966, filed on November 24, 2023, the entire disclosures of which are incorporated herein by reference.

### REFERENCE SIGNS LIST

- 100: biaxially stretched polyethylene film
- 101: biaxially stretched film layer
- 103: surface resin layer

## Claims

1. A biaxially stretched polyethylene film comprising a biaxially stretched film layer containing an ethylene-based polymer (A),
wherein a storage modulus E'_{MD} at 100°C in an MD direction, which is measured under conditions of a frequency of 1 Hz, a heating rate of 5°C/min, a strain of 0.1%, a tensile mode, a distance between chucks of 20 mm, and a sample width of 5 mm by dynamic viscoelasticity measurement (DMA), is 50 MPa or more, and a storage modulus E'_{TD} at 100°C in a TD direction is 100 MPa or more.

2. The biaxially stretched polyethylene film according to Claim 1,
wherein a value of a loss tangent (tan δ) at 100°C in the TD direction, which is measured under conditions of a frequency of 1 Hz, a heating rate of 5°C/min, a strain of 0.1%, a tensile mode, a distance between chucks of 20 mm, and a sample width of 5 mm, using dynamic viscoelasticity measurement (DMA), is 0.25 or more.

3. A biaxially stretched polyethylene film comprising a biaxially stretched film layer containing an ethylene-based polymer (A),
wherein, when measured using thermomechanical analysis (TMA) with reference to JIS K 7197:2012 under conditions of a heating rate of 10°C/min, a tensile mode, a load of 10 g/4 mm, an initial distance between chucks of 8 mm, and a test piece width of 4 mm, an average linear expansion coefficient (α) in an MD direction, which is calculated by Expression (1) in a measurement temperature range of 20°C to 100°C, is 4.5 × 10⁻⁴ (1/°C) or less, 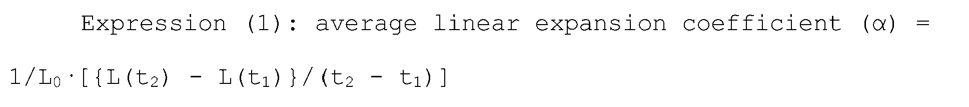 average linear expansion coefficient (α) = 1/L0·[{L(t2) - L(t1)}/(t2 - t1)]
in Expression (1), L₀, t₁, t₂, L(t₁), and L(t₂) are represented as follows,
L₀: initial distance between chucks of 8 mm,
t₁: 20°C,
t₂: 100°C,
L(t₁): distance between chucks (mm) at a temperature t1, and
L(t₂): distance between chucks (mm) at a temperature t2.

4. The biaxially stretched polyethylene film according to Claim 3,
wherein an elongation rate in the MD direction at 100°C, which is measured under conditions of a temperature range of 20°C or higher and 100°C or lower, a heating rate of 10°C/min, a tensile mode, a load of 10 g/4 mm, an initial distance between chucks of 8 mm, and a test piece width of 4 mm, using thermomechanical analysis (TMA) with reference to JIS K 7197:2012, is 3.5% or less.

5. The biaxially stretched polyethylene film according to Claim 3 or 4,
wherein a heat fusion strength at 130°C, which is measured according to <Heat Fusion Strength> below, is 1.0 N/15 mm or less,
<Heat Fusion Strength>
two sheets of the biaxially stretched polyethylene films cut into a width of 15 mm are bonded to each other, sandwiched between biaxially stretched polyethylene terephthalate films having a thickness of 12 µm, and heat-fused under conditions of a temperature of 130°C, a pressure of 2.0 kgf/cm², and a sealing time of 1.0 second using a heat seal tester to obtain a laminated film, and then the two sheets of the biaxially stretched polyethylene films are peeled off under conditions of 90° peeling, a peeling speed of 300 mm/min, and tension in the MD direction, and a peeling strength at this time is defined as a heat fusion strength (N/15 mm).

6. A biaxially stretched polyethylene film comprising a biaxially stretched film layer containing an ethylene-based polymer (A),
wherein, when a first differential scanning calorimetry (1st Run) consisting of a process of raising the temperature from -50°C to 200°C at a heating rate of 10°C/min, an isothermal process of holding the temperature at 200°C for 5 minutes, and a process of lowering the temperature from 200°C to -50°C at a cooling rate of 10°C/min,
a process of holding the temperature at -50°C for 5 minutes, and
a second differential scanning calorimetry (2nd Run) consisting of a process of raising the temperature from -50°C to 200°C at a heating rate of 10°C/min, are continuously performed using a differential scanning calorimeter (DSC),
in a DSC curve 2 obtained by the second differential scanning calorimetry, an endothermic peak A is observed in a range of 20°C or higher and 150°C or lower, and a heat of fusion (ΔH) of the endothermic peak A is 175 J/g or more and 250 J/g or less.

7. The biaxially stretched polyethylene film according to Claim 6,
wherein (Tm₁ - Tm₂), which is obtained by subtracting a melting point (Tm₂) obtained by the second differential scanning calorimetry from a melting point (Tm₁) obtained by the first differential scanning calorimetry, is 0.0°C or higher.

8. The biaxially stretched polyethylene film according to Claim 6 or 7,
wherein, in a case where an exothermic peak observed in a DSC curve 1 obtained in the first cooling step is defined as a crystallization peak and a temperature of a vertex of the crystallization peak is defined as a crystallization temperature (Tc), (Tm₂ - Tc) is 12.1°C or higher.

9. The biaxially stretched polyethylene film according to any one of Claims 6 to 8,
wherein a melting point (Tm₂) obtained by the second differential scanning calorimetry is 130°C or higher.

10. A biaxially stretched polyethylene film comprising a biaxially stretched film layer containing an ethylene-based polymer (A),
wherein a z-average molecular weight (Mz) of the ethylene-based polymer (A) in terms of polystyrene, which is measured by gel permeation chromatography (GPC), is 800,000 or more and 4,000,000 or less.

11. The biaxially stretched polyethylene film according to Claim 10,
wherein a weight-average molecular weight (Mw) of the ethylene-based polymer (A) in terms of polystyrene, which is measured by gel permeation chromatography (GPC), is 130,000 or more and 1,000,000 or less.

12. The biaxially stretched polyethylene film according to Claim 10 or 11,
wherein a number-average molecular weight (Mn) of the ethylene-based polymer (A) in terms of polystyrene, which is measured by gel permeation chromatography (GPC), is 5,000 or more and 200,000 or less.

13. The biaxially stretched polyethylene film according to any one of Claims 10 to 12,
wherein a ratio (Mw/Mn) of a weight-average molecular weight (Mw) to a number-average molecular weight (Mn) of the ethylene-based polymer (A) in terms of polystyrene, which is measured by gel permeation chromatography (GPC), is 30.0 or less.

14. The biaxially stretched polyethylene film according to any one of Claims 10 to 13,
wherein a density of the ethylene-based polymer (A), which is measured in accordance with JIS K 7112:1999, is 0.937 g/cm³ or more and 0.970 g/cm³ or less.

15. The biaxially stretched polyethylene film according to any one of Claims 10 to 14,
wherein a melt mass flow rate (MFR) of the ethylene-based polymer (A), which is measured in accordance with JIS K 7210:1999 under conditions of 190°C and a load of 2160 g, is 0.1 g/10 min or more and 5.0 g/10 min or less.

16. The biaxially stretched polyethylene film according to any one of Claims 10 to 15,
wherein a total of an elongation at break in the TD direction and an elongation at break in the MD direction, which are measured in accordance with JIS K 7127:1999, is 200% or less.

17. The biaxially stretched polyethylene film according to any one of Claims 1 to 16,
wherein the ethylene-based polymer (A) includes high-density polyethylene, and a content of the high-density polyethylene in the biaxially stretched film layer is 60% by mass or more when a total of the biaxially stretched film layer is 100% by mass.

18. The biaxially stretched polyethylene film according to any one of Claims 1 to 17,
wherein a total value of a tensile modulus T₁ in the MD direction and a tensile modulus T₂ of the biaxially stretched polyethylene film in the TD direction, which is measured using a tensile tester under conditions of a measurement temperature of 23 ± 2°C, a relative humidity of 50 ± 5% RH, and a tensile speed of 5 mm/min in accordance with JIS K7127:1999, is 2500 MPa or more and 9000 MPa or less.

19. The biaxially stretched polyethylene film according to any one of Claims 1 to 18,
wherein a thermal shrinkage rate in the MD direction when subjected to a heat treatment at 100°C for 15 minutes, which is measured in accordance with JIS C2151:2019, is 4.0% or less.

20. The biaxially stretched polyethylene film according to any one of Claims 1 to 19,
wherein a thermal shrinkage rate in the TD direction when subjected to a heat treatment at 100°C for 15 minutes, which is measured in accordance with JIS C2151:2019, is 7.0% or less.

21. The biaxially stretched polyethylene film according to any one of Claims 1 to 20,
wherein a thermal shrinkage rate in the MD direction when subjected to a heat treatment at 120°C for 15 minutes, which is measured in accordance with JIS C2151:2019, is 9.0% or less.

22. The biaxially stretched polyethylene film according to any one of Claims 1 to 21,
wherein a thermal shrinkage rate in the TD direction when subjected to a heat treatment at 120°C for 15 minutes, which is measured in accordance with JIS C2151:2019, is 30.0% or less.

23. The biaxially stretched polyethylene film according to any one of Claims 1 to 22,
wherein a moisture permeability, which is measured in accordance with JIS Z 0208:1976, is 12.0 g/(m²·day) or less.

24. The biaxially stretched polyethylene film according to any one of Claims 1 to 23,
wherein a total of a breaking stress in the TD direction and a breaking stress in the MD direction, which are measured in accordance with JIS K7127:1999, is 210 MPa or more.

25. The biaxially stretched polyethylene film according to any one of Claims 1 to 24, further comprising a surface resin layer on at least one surface of the biaxially stretched film layer.

26. The biaxially stretched polyethylene film according to Claim 25,
wherein the surface resin layer contains an ethylene-based polymer.

27. The biaxially stretched polyethylene film according to Claim 26,
wherein a content of the ethylene-based polymer in the surface resin layer is 75% by mass or more and 100% by mass or less when a total of the surface resin layer is 100% by mass.

28. The biaxially stretched polyethylene film according to any one of Claims 25 to 27,
wherein a thickness of the surface resin layer is 0.1 µm or more and 10 µm or less.

29. The biaxially stretched polyethylene film according to any one of Claims 1 to 28,
wherein a thickness of the biaxially stretched film layer is 5 µm or more and 100 µm or less.

30. The biaxially stretched polyethylene film according to any one of Claims 1 to 29,
wherein a ratio of a thickness of the biaxially stretched film layer to a total thickness of the biaxially stretched polyethylene film is 50% or more and 100% or less.

31. The biaxially stretched polyethylene film according to any one of Claims 1 to 30,
wherein the biaxially stretched polyethylene film is a packaging film.

32. A packaging material comprising the biaxially stretched polyethylene film according to any one of Claims 1 to 31.

33. The packaging material according to Claim 32, further comprising one or two or more selected from the group consisting of an inorganic layer and a coating layer on at least one surface of the biaxially stretched polyethylene film.

34. A packaged article comprising:
the packaging material according to Claim 32 or 33; and
an article inside the packaging material.
